Europäisches Patentamt

**European Patent Office**

Office européen des brevets

(19)

(11) Numéro de publication: **0 188 139**
**B1**

(12)

# FASCICULE DE BREVET EUROPEEN

(45) Date de publication du fascicule du brevet:
**18.10.89**

(51) Int. Cl.⁴: **H 04 M 17/02**

(21) Numéro de dépôt: **85402279.5**

(22) Date de dépôt: **22.11.85**

(54) Système de commande et de surveillance d'un appareil téléphonique public à prépaiement.

(30) Priorité: **22.11.84 FR 8417807**

(43) Date de publication de la demande:
**23.07.86 Bulletin 86/30**

(45) Mention de la délivrance du brevet:
**18.10.89 Bulletin 89/42**

(84) Etats contractants désignés:
**BE CH DE GB IT LI NL SE**

(56) Documents cités:
**EP-A- 0 058 600**
**US-A- 4 208 549**

**PROCEEDINGS OF THE NATIONAL ELECTRONICS
CONFERENCE, vol. 20, 19-21 octobre 1964, pages
385-388, Chicago, US; J.G. COUTTS et al.: "Subscriber
carrier pay phone control"**

(73) Titulaire: **Kalfon, René, 816, rue de la Haie, F-76230 Bois
Guillaume (FR)**

(72) Inventeur: **Kalfon, René, 816, rue de la Haie,
F-76230 Bois Guillaume (FR)**

(74) Mandataire: **Martinet & Lapoux, 62, rue des Mathurins,
F-75008 Paris (FR)**

## Description

La présente invention concerne un système de commande et de surveillance d'un appareil téléphonique public à prépaiement raccordé à un central téléphonique à travers une ligne téléphonique. Une communication peut être prépayée au moyen de pièces de monnaie et/ou de carte contenant un avoir.

Les problèmes posés par la gestion des appareils téléphoniques publics face aux actes de vandalisme et de fraude conduisent à une série d'observation mettant en cause la stratégie actuelle et les faiblesses des systèmes connus. Le système selon l'invention est conçus en tenant compte des observations suivantes.

Pour lutter contre la fraude ont été développés des appareils téléphoniques publics de plus en plus complexes devenant ainsi de plus en plus chers et faisant l'objet d'une maintenance de plus en plus coûteuse et délicate. A chaque type de fraude correspond une parade qui, d'une part augmente la complexité et le coût de l'appareil, et d'autre part, conduit les fraudeurs à user de moyens plus puissants et plus dommageables. Actuellement, les pertes dues au vandalisme et à la fraude sont considérables. A titre indicatif, on peut retenir qu'en moyenne au moins 20% du trafic téléphonique écoulé par les appareils téléphoniques publics est un trafic frauduleux. Les répartitions des appareils dues au vandalisme et les pertes de recettes dues aux fraudes atteignent des sommes de plusieurs centaines millions de francs pour un parc de plus de cent mille appareils.

Une télésurveillance des appareils peut être fondée sur une analyse du nombre de taxes de base écoulées pendant une période prédéterminée pour chaque appareil téléphonique public, telle que décrite dans le brevet européen EP-B-0 004 497. Dans ce cas, la télésurveillance rend compte d'anomalies a posteriori et ne permet pas une action immédiate. Dans d'autres cas, tels l'usage de contacts de signalisations, la télésurveillance est limitée car elle est confondue avec les interventions normales des agents; elle n'est alors utilisable qu'en dehors des heures de service ce qui réduit son efficacité.

Sur le plan de la gestion et de l'exploitation courante, les systèmes actuellement en service présentent les inconvénients suivants:

– Des anomalies de fonctionnement, des dérangements et des manœuvres insolites ou frauduleuses d'un usager ne sont ni détectées, ni identifiées, ni encore même signalées.

– La collecte des recettes par des préposés releveurs de caissette de monnaie pose un important problème de contrôle, mal résolu par la procédure actuelle, peu efficace et contraignante en raison des caissettes plombées. Des caissettes à mémoire, telles que décrites dans la demande de brevet européen EP-A-0 041 457, apportent une solution à ce problème mais au prix d'un mode opératoire complexe, rigide et coûteux.

– L'analyse des données comptables et techniques de l'exploitation des appareils est faite actuellement à l'aide de moyens très dispersés qui rendent difficiles et laborieuses la collecte et l'exploitation de ces données. La confrontation et l'analyse de différents indicateurs d'exploitation sont d'une complexité telle que pratiquement les services gestionnaires n'utilisent que très peu cette ressource.

Les problèmes de gestion des appareils téléphoniques publics évoqués ci-dessus pourraient être résolus à l'aide d'un système de contrôle tel que décrit dans l'article de J.G. COUTTS et al. intitulé «Subscriber Carrier Pay Phone Control», Proceedings of the National Electronics Conference, vol. 20, October 19/21, 1964, p. 385–388, Chicago, USA, et auquel seraient associés des moyens de surveillance. En effet, ce système prévoit des premier et second équipements disposés en interface entre l'appareil téléphonique et un central téléphonique de gestion et reliés respectivement à des première et seconde extrémités d'un support de transmission ayant une bande passante étendue supérieure pà la bande de base téléphonique classique de 300 à 3400 Hz. Ces premier et second équipements communiquent par des signaux de signalisation codés en fréquences relatifs au contrôle de l'appareil téléphonique et situés dans une bande de signalisation en-dehors de la bande de base. Une telle bande de signalisation pourrait avantageusement être utilisée pour transmettre également des signaux relatifs à la surveillance de l'appareil téléphonique.

La présente invention a pour but de fournir un système de commande et de surveillance d'au moins un appareil téléphonique public à prépaiement remédiant aux inconvénients évoqués ci-dessus concernant notamment la fraude et le vandalisme. En particulier, l'invention vise à reporter le plus possible hors d'atteinte du public des moyens qui interviennent dans l'établissement, le maintien et la gestion des communications téléphoniques prises par l'appareil téléphonique public et à contrôler en permanence en un lieu non accessible au public la conformité de différentes phases d'une communication téléphonique public et subordonner le maintien de la communication à des informations transmises par l'appareil téléphonique public.

A cette fin, un système de commande et de surveillance d'un appareil téléphonique public à prépaiement selon l'invention est tel que défini par la revendication 1.

Le second équipement actif est installé de préférence à proximité du central téléphonique, et analyse et gère les communications téléphoniques, aussi bien de départ que d'arrivée. Une telle disposition améliore la sécurité, la fiabilité et la gestion de l'appareil téléphonique public.

Selon l'invention, les premier et second équipements présentent une inter-activité au moyen de signaux échangés uniquement entre les équipements, ce qui confère un contrôle permanent et détaillé de chaque phase d'une communication Une auto-surveillance ainsi exercée par une signalisation bouclée et inter-active rend le système plus résistant aux fraudes, et techniquement le fonctionnement du système est plus sûr face aux incidents de tous genres. Par ailleurs, tout incident est signalé et identifié sans délai. Cette procédure permet de supprimer toute maintenance préventive.

En outre, des moyens pour établir, maintenir, rompre ou interrompre une communication inclus dans le second équipement sont ainsi hors d'atteinte de manipulations du public, ce qui assure dans une large mesure un bon fonctionnement du système. En effet, le second équipement échappe au vandalisme et le premier équipement implanté dans la voie publique est réduit au minimum.

Selon des caractéristiques de l'invention, le système permet un prépaiement mixte: pièces de monnaie et carte prépayée. La gestion d'une communication dans le second équipement est totalement indépendante de mécanismes d'encaissement à pièces de monnaie et à carte inclus dans l'appareil. L'adaptation aux mécanismes se fait au niveau d'une interface de commutation dans le premier équipement. Durant une même communication, le mode de paiement, carte ou monnaie, peut être à tout moment modifié par l'usager. Ainsi, une communication peut se poursuivre avec des pièces alors que le crédit de la carte a été épuisé. En outre, un prépaiement mixte réduit la charge d'une collecte des recettes de pièces. Pour l'usager, une carte prépayée est d'un emploi plus facile que la monnaie, cette dernière constituant de plus une limitation de la consommation téléphonique puisque l'usager téléphone en fonction des pièces de monnaie qu'il possède.

Un contrôle de l'encaissement réel des pièces est réalisé dans le premier équipement par détection des pièces en au moins trois points le long de la chute des pièces dans une caissette. Un circuit logique dans le premier équipement détecte toute anomalie dans le sens de circulation de pièces due à une fraude à la ficelle ou un accès frauduleux à une trémie d'encaissement sus-jacente à la caissette par exemple. Dans ce cas, une anomalie est enregistrée en moins d'une seconde dans le second équipement, tout comme pour une effraction de caissette, avec une mise hors service commandée à distance.

Selon d'autres caractéristiques, le secnd équipement surveille l'ouverture d'un compartiment contenant la caissette et/ou le rètrait de la caissette. Chaque ouverture du compartiment de caissette s'accompagne automatiquement de l'inscription d'un montant de pièces contenu dans la caissette et d'un nombre de taxes de base oblitérées sur des cartes prépayées cumulées au fur et à mesure des communications. Ces informations sont transmises sans délai par le second équipement à des moyens de gestion éloignés, tels qu'un ordinateur de gestion, tout comme d'autres signalisations d'anomalie de fonctionnement.

Le second équipement ramène l'appareil à l'état d'attente d'une communication ou à un mode hors service, selon le cas suite à une manœuvre non conforme de l'usager, ou à un défaut fonctionnement du premier équipement tel qu'une absence de transmission de certains signaux ou à une absence de signaux transmis par le central.

Selon une autre caractéristique, l'appareil peut être appelé par tout autre appareil téléphonique public ou privé. Dans ce cas, une tonalité particulière d'appel est transmise par le second équipement vers le demandeur pour lui signaler qu'il appelle un poste public.

D'une manière générale, le système selon l'invention se distingue en outre par la possibilité d'une gestion informatique intégrée. Cette gestion couvre à la fois des aspects techniques tels que signalisation, localisation de dérangements, maintenance préventive et auto-contrôle de toutes les phases d'une communication, mise en mode hors service automatique de l'appareil et remise en service automatique ou manuelle de l'appareil selon le choix du gestionnaire, et des aspects financiers tels qu'encaissement des pièces, montants relevés, absence de trafic, rendement moyen des recettes, etc . . .

D'autres caractéristiques et avantages de l'invention apparaîtront plus clairement à la lecture de la description suivante de plusieurs réalisations préférées de l'invention en référence aux dessins annexés correspondants dans lesquels:

– les Figs. 1A et 1B sont un bloc-diagramme schématique d'un premier équipement inclus dans un appareil téléphonique public, un circuit audio de l'appareil étant détaillé dans la Fig. 1A;

– les Figs. 2A, 2B et 2C montrent en détail un circuit de contrôle de pièces associé à un mécanisme d'encaissement à pièces ainsi qu'un circuit de commutation coopérant avec le mécanisme d'encaissement à pièces et un mécanisme d'encaissement à carte prépayée dans l'appareil téléphonique;

– la Fig. 3 montre en détail un circuit de codage et transmission de signalisation et un circuit de réception et décodage d'ordre d'encaissement formant une interface du premier équipement relativement à une ligne téléphonique desservant l'appareil;

– la Fig. 4 est un bloc-diagramme d'un second équipement disposé à proximité d'un central téléphonique de rattachement pour contrôler et surveiller le premier équipement, des moyens d'interconnexion de différents circuits dans le second équipement à la ligne téléphonique étant montrés en détail, et des moyens de gestion de plusieurs seconds équipements étant montrés schématiquement;

– la Fig. 5 montre en détail un circuit de réception et décodage de signalisation et un circuit de codage et tansmission d'ordre d'encaissement inclus dans le second équipement du côté du premier équipement;

– les Figs. 6A et 6B montrent en détail un moniteur de communication téléphonique inclus dans le second équipement;

– la Fig. 7 montre en détail un circuit de détection d'impulsion de taxe et un circuit de détection d'inversion et de coupure de tension inclus dans le second équipement du côté du central;

– la Fig. 8 montre en détail un circuit de contrôle de taxation inclus dans le second équipement; et

– les Figs. 9A et 9B montrent un circuit de mémorisation d'anomalies et de montants totalisateurs de monnaie et de taxes de base oblitérées, inclus dans le second équipement.

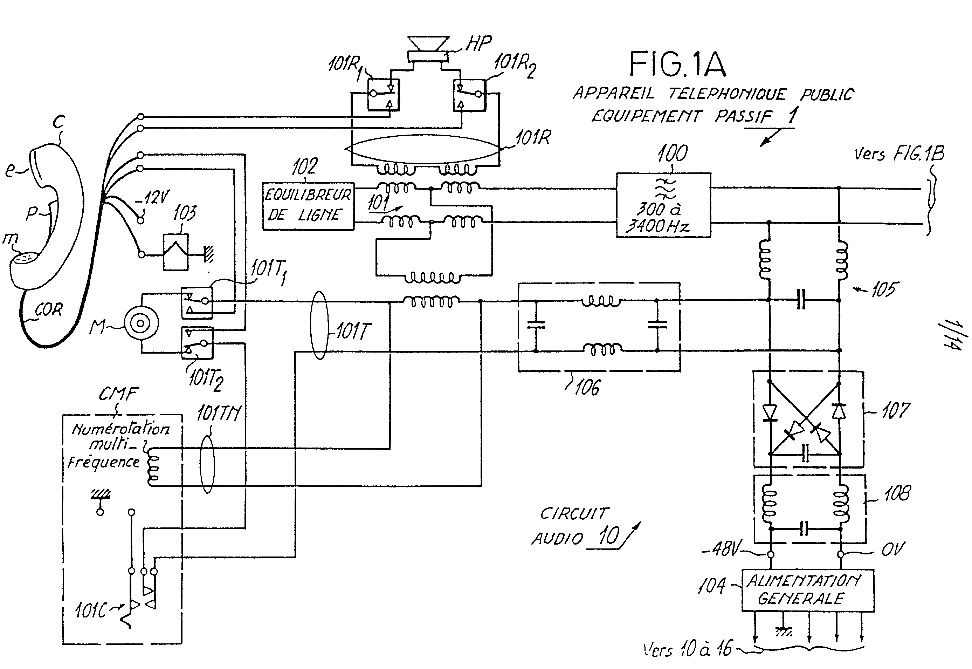

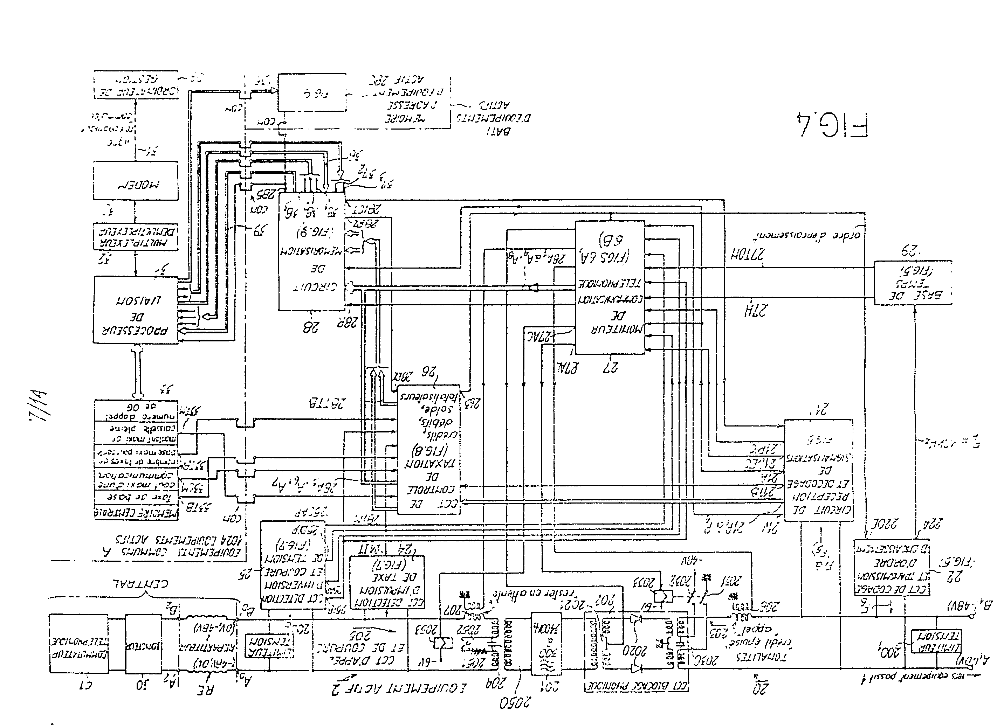

Comme montré aux Figs. 1A, 1B et 4, un système de commande et de surveillance comprend essentiellement un premier équipement 1 inclus dans un appareil téléphonique public à prépaiement et un second équipement 2 localisé à proximité d'un central téléphonique de rattachement et interconnecté dans une ligne téléphonique AB–$A_2B_2$ à deux fils reliant l'appareil au central, En fait, comme on le verra dans la suite, la ligne téléphonique est une véritable ligne téléphonique $A_0B_0$–$A_2B_2$ entre le second équipement et le central, convoyant classiquement des signaux de parole et autres signaux connus échangés normalement entre un appareil téléphonique et un central. de rattachement. Par contre, la ligne téléphonique entre l'appareil téléphonique et le second équipement est une ligne à deux fils AB–$A_1B_1$ mise sous tension continue par le second équipement, téléalimentant le premier équipement, et ne convoyant que les signaux de parole et des signaux échangés entre les deux équipements. En particulier, la ligne entre l'appareil et le second équipement ne transmet pas des impulsions de taxe délivrées par le central et n'est pas soumise à une réponse et à un raccrochage d'un abonné demandé, tels que des première et seconde inversions de tension de batterie du central. Le second équipement ne permet que la transmission bidirectionnelle de signaux dans une bande de fréquence téléphoniques entre le premier équipement et le central.

Le premier équipement 1 est désigné dans la suite par «équipement passif» en raison du fait que ces différentes fonctions sont principalement subordonnées à un contrôle effectué dans le second équipement. Corollairement, le second équipement 2 est désigné dans la suite par «équipement actif», car il établit, surveille, contrôle et gère les différentes phases d'une communication téléphonique à la requête du premier équipement.

L'équipement passif 1 est d'abord décrit en référence aux Figs. 1 à 3, en anticipant sur la description de certaines fonctions de l'équipement actif 2 pour plus de clarté. L'équipement actif 2 est ensuite décrit en référence aux Figs. 4 à 9.

Equipement passif

En référence aux Figs. 1A et 1B l'équipement passif 1 comprend un circuit audio 10 pour transmettre et recevoir des signaux téléphoniques et alimenter les autres circuits de l'équipement passif, un clavier de numérotation soit tel qu'un clavier CD couplé à un dispositif de signalisation en code décimal soit tel qu'un clavier CMF couplé à un dispositif de signalisation en code multifréquence, selon les possibilités du central de rattachement, un mécanisme d'encaissement à pièces 11 associé à un compartiment fermant de caissette de monnaie 110, un circuit de contrôle de pièces 12 pour détecter et valider des pièces à encaisser, un mécanisme d'encaissement à carte prépayée 13, un circuit de commutation 14 pour sélectionner le mode de paiement, par pièce ou par carte, choisi par l'usager, un circuit de codage et transmission de signalisations 15, et un circuit de réception et décodage d'ordre d'encaissement 16.

L'équipement passif 1 est raccordé à des bornes A et B de la ligne téléphonique à deux fils à travers un circuit de protection PRO. Le circuit PRO protège des circuits logiques inclus dans l'équipement 1 contre toute surtension survenant dans la ligne.

Le circuit audio 10 montré à la Fig. 1A comprend un combiné téléphonique C doté d'un pédale P et un bloc audio pour utilisation en «mains libres» comportant un microphone M et un haut-parleur HP. Le combiné C est relié à une borne téléphonique contenant le reste de l'équipement passif 1 au moyen d'un cordon de conducteurs COR, tandis que le microphone M et le haut-parleur HP affleurent une paroi de la borne.

Des signaux de parole sont tansmis par un microphone m du combiné C ou le microphone M et des signaux de parole sont reçus par un écouteur e du combiné ou le haut-parleur HP à travers un transformateur différentiel 101. Le transformateur différentiel 101 est interconnecté à la ligne téléphonique à travers un filtre passe-bande 100 ayant une bande passante pour fréquences téléphoniques de 300 à 3400 Hz et à travers le dispositif de protection PRO, et à un équilibreur de ligne 102 terminant la ligne. Le transformateur différentiel 101 assure une protection contre l'effet de bouclage acoustique dit effet Larsen en partageant la ligne téléphonique bidirectionnelle en une voie de réception 101R et une voie de transmission 101T. La voie de réception 101R est reliée au haut-parleur HP et à l'écouteur e à travers des contacts mobiles de deux commutateurs $101R_1$ et $101R_2$. La voie de transmission 101T est reliée aux microphones M et m à travers des contacts mobiles de deux autres commutateurs $101T_1$ et $101T_2$. Outre quatre fils conducteurs reliant respectivement l'écouteur e et le microphone à des contacts fixes des deux paires de commutateurs $101R_1$, $101R_2$ et $101T_1$, $101T_2$, le cordon COR contient deux fils conducteurs pour alimenter un relais 103 lorsque la pédale P est pressée. L'activation du relais 103 modifie l'état des commutateurs $101R_1$, $101R_2$, $101T_1$ et $101T_2$ qui déconnectent le haut-parleur HP et le microphone M du transformateur 101 afin de relier l'écouteur e et le microphone m du combiné C à la ligne téléphonique. Lorsque la pédale P est relâchée, le haut-parleur HP et le microphone M sont reliés à la ligne téléphonique. Ainsi, le haut-parleur HP peut recevoir une tonalité d'appel lorsque l'appareil téléphonique est appelé par un abonné éloigné.

L'équipement passif 1 comprend également un clavier de numérotation ayant des touches accessibles sur une paroi ajourée de la borne téléphonique. Les touches résistent à tout arrachement et enfoncement indésirables. Lorsque le central téléphonique de rattachement est adapté à recevoir des signaux de numérotation à multifréquence CMF transmettant une combinaison de deux fréquences vocales parmi sept pour chauqe chiffre, à travers une seconde voie de transmission 101TN du transformateur différentiel 101. Le clavier CMF comprend en outre des contacts 101C interconnectés dans la première voie de transmission 101T pour déconnecter les microphones M et m de la ligne téléphonique et alimenter un générateur à multifréquence dans le clavier CMF après introduction d'une pièce dans le mécanisme 11 ou d'une carte à avoir non nul dans I mécanisme 13, en vue de la transmission de signaux de numérotation à multifréquence sans perturbation de signaux microphoniques lors de l'enfoncement de touches du clavier CMF. Lorsque le central de rattachement est propre à recevoir des signaux de numéroation à impulsions, le clavier est un clavier CD couplé au dispositif de signalisation décimale transmettant des trains d'impulsions en nombre égal aux chiffres numérotés. Comme on le verra dans la suite, les impulsions modulent un ensemble de fréquences de signalisation.

Comme montré à la Fig. 1A, le circuit audio 10 comprend, en outre, des moyens pour prélever l'énergie électrique nécessaire aux circuits contenus dans l'équipement passif 1, à partir de la tension continue de 48 volts dans la ligne téléphonique AB. Comme on le verra dans la suite, la tension d'alimentation de l'équipement passif n'est pas sujette à des inversions de la tension de batterie du central. Les bornes A et B sont respectivement à 0 volt et −48 volts, correspondant à la tension de batterie du central. Cependant, selon d'autres variantes, l'équipement passif peut être téléalimenté par l'equipement actif sous une tension de 96 volts ou autre tension convenable. Les moyens pour prélever comprennent essentiellement une alimentation générale 104 convenablement régulée et protégée pour fournir des tensions continues de 0V, ±6V, −12V et −24V notamment. L'alimentation 104 est reliée à la ligne téléphonique, entre le filtre 100 et le circuit de protection PRO, à travers un pont d'alimentation 105 protégé par un ensemble 106 de selfs de blocage et de condensateurs, un redresseur à double alternance 107 et un filtre 108. Ces derniers circuits protègent l'alimentation 104 contre une permutation accidentelle des fils A et B de la ligne et donc contre une inversion de polarités de ces fils.

Le mécanisme d'encaissement à pièces 11 et le mécanisme d'encaissement à carte prépayée 13 n'appartiennent pas au cadre de l'invention et ne seront pas décrits en détail.

Le mécanisme d'encaissement à pièces 11 est capable d'accepter différents types de pièces. On supposera dans la suite que $N = 4$ pièces de monnaie différentes $P_1$ à $P_4$ sont susceptibles d'être encaissés; par exemple, les valeurs des pièces sont $P_1=1FF$, $P_2=2FF$, $P_3=5FF$ et $P_4=10FF$. Le mécanisme 11 comprend notamment quatre glissières dans lesquelles descendent respectivement les pièces $P_1$ à $P_4$ entre des fentes d'introduction de pièce et des zones de stockage, et un dispositif d'aiguillage sous les zones de stockage afin d'aiguiller chaque pièce vers la caissette incluse dans le compartiment 110 à travers une trémie d'encaissement ou vers une sébile de remboursement à travers une trémie de remboursement.

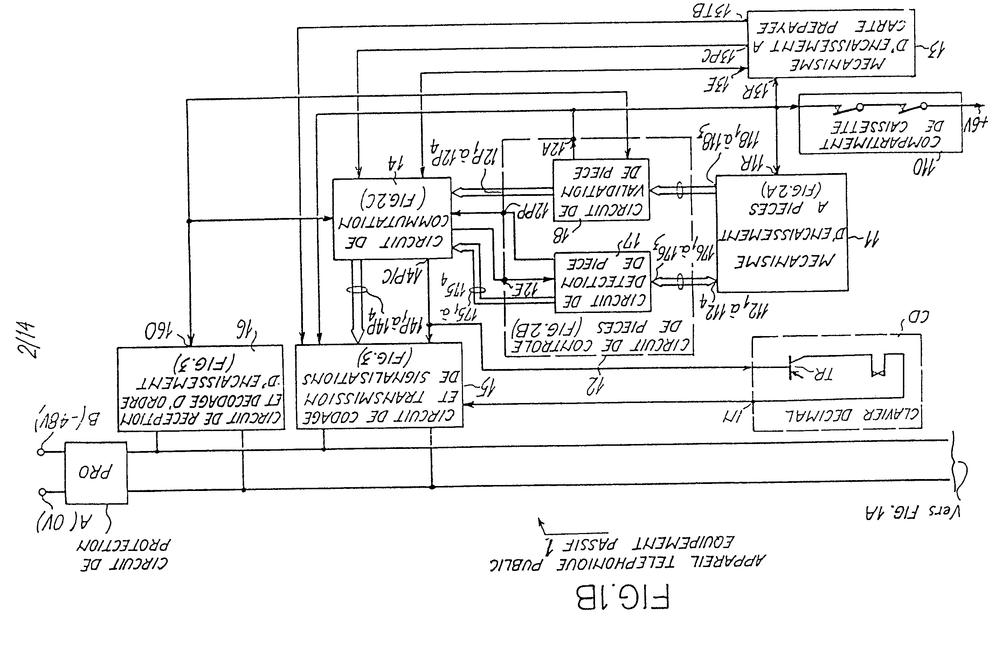

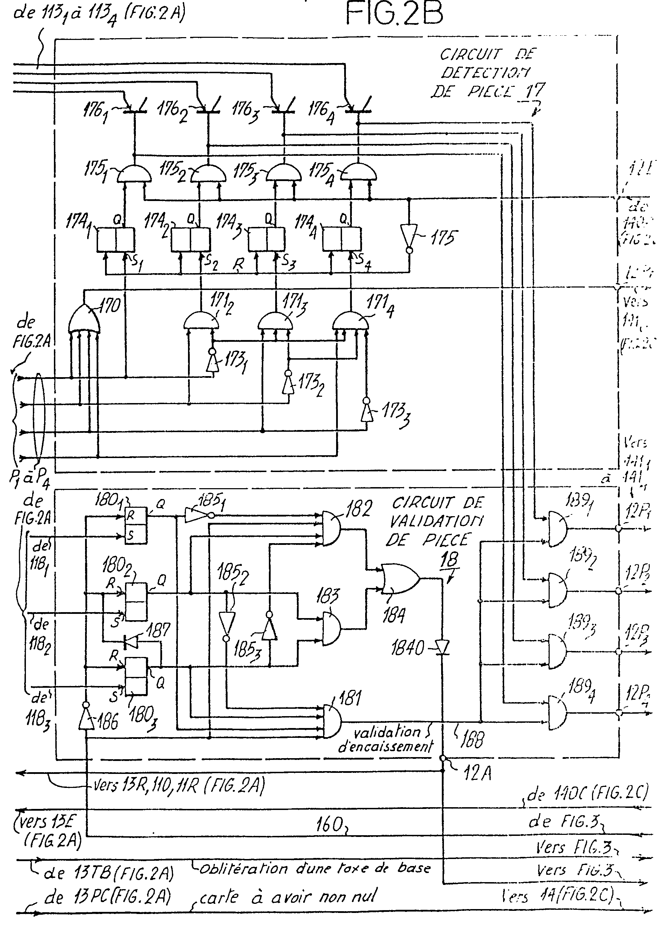

Comme montré à la Fig. 2A, des contacts $112_1$ à $112_4$ sont respectivement commandés par des détecteurs inclus dans les zones de stockage. Chaque contact $112_1$ à $112_4$ est fermé tant qu'au moins une pièce est présente dans la glissière corresponante. Lorsqu'un ordre d'encaissement transmis par l'équipement actif 2 est reçu par l'équipement passif 1 et indique que le solde d'une communication est négatif, comme on le verra dans la suite, l'un de quatre relais temporisés $113_1$ à $113_4$ ouvre un contact d'encaissement respectif parmi quatre $114_1$ à $114_4$ pour entraîner la pièce détectée correspondante dans la trémie d'encaissement à travers le dispositif d'aiguillage. Par contre, le dispositif d'aiguillage vide le contenu de toutes les glissières de stockage dans la trémie de remboursement lorsqu'un bouton poussoir 115 est enfoncé, et coupe l'alimentation de l'équipement passif via un relais 116 afin de simuler un raccrochage de l'usager demandeur; l'usager récupère alors les pièces stockées en attente d'encaissement. La retombée du relais 116 est produite égalemement par une coupure brève de l'alimentation 104 pendant $t_3 = 6s$, notamment en fin de communication sous la commande de l'équipement actif lorsque l'abonné demandé a raccroché ou lorsqu'un solde de la communication en cours est négatif pendant une durée prédéterminée $t_{22} = 13s$, comme on le verra dans la suite.

Lorsqu'une pièce est encaissée, celle-ci traverse successivement trois détecteurs de descente de pièce $117_1$ à $117_3$ situés à trois niveaux différents et délivrant chacun une impulsion à une sortie respective $118_1$ à $118_3$ du mécanisme 11 après le passage de la pièce. Ces détecteurs contribuent à valider l'encaissement de chaque pièce devant être encaissée en vue d'indiquer l'encaissement de ladite pièce à l'équipement actif. Par contre, comme on le verra dans la suite, le passage d'une pièce à encaisser selon un cheminement différent de la descente normale entre le dispositif d'aiguillage et la caissette est signalée par un signal d'anomalie à l'équipement actif.

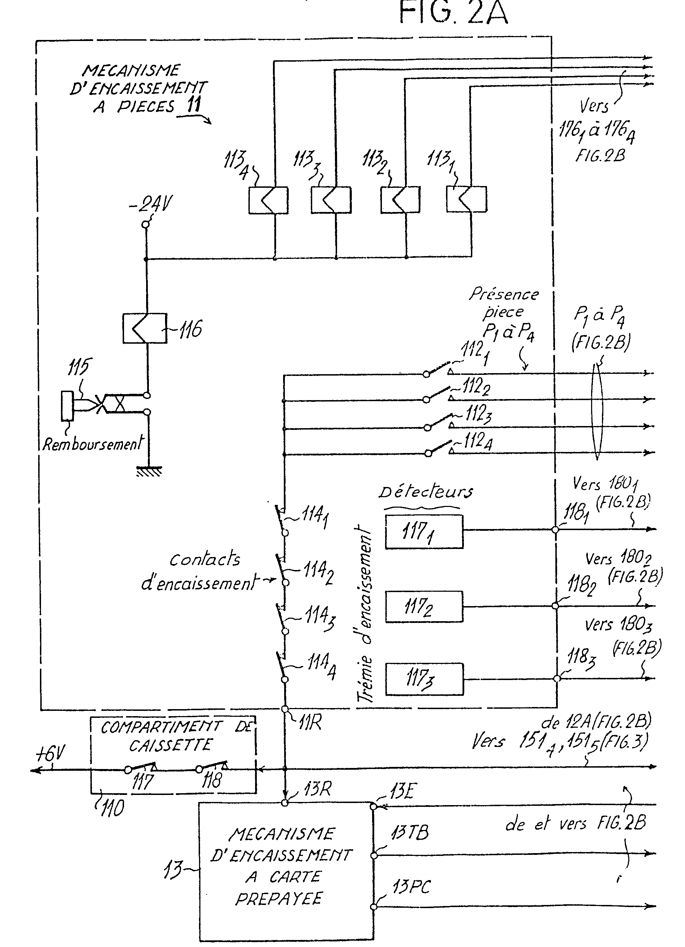

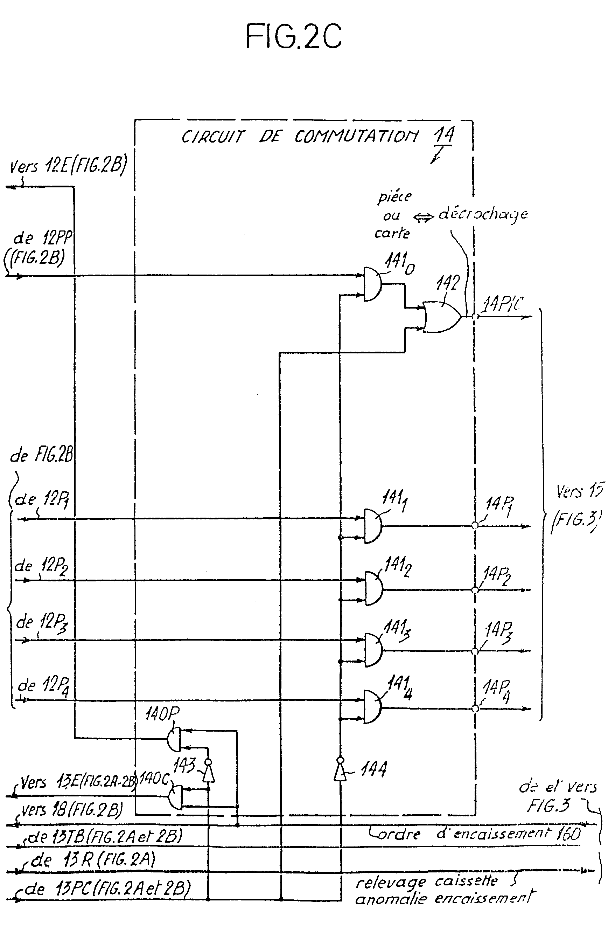

Les détection et validation des pièces à encaisser sont décrites maintenant en détail en référence au fonctionnement du circuit de contrôle de pièce 12. Le circuit 12 comprend un circuit de détection de pièce 17 et un circuit de validation de pièce 18 montrés à la Fig. 2B.

Le circuit de détection de pièce 17 comprend une porte OU 170 ayant quatre entrées reliées respectivement aux contacts de présence de pièce $112_1$ à $112_4$. Une sortie 12PP de la porte OU est à l'état logique «1» dès qu'une pièce $P_1$ à $P_4$ est présente dans l'une des glissières de stockage, ce qui est indiqué par au moins l'état fermé de l'un des contacts $112_1$ à $112_4$. L'état «1» à la borne 12PP signale un décrochage de l'usager demandeur.

Trois portes ET $171_2$, $171_3$ et $171_4$ permettent d'encaisser les pièces suivant un ordre de priorité en commençant par les pièces de la plus petite valeur $P_1$. Ceci réduit la perte subie par l'usager en cas d'erreur de numérotation ou de communication de courte durée. Les portes $171_2$, $171_3$ et $171_4$ ont respectivement deux, trois et quatre entrées. Le contact $112_1$ est relié à des premières entrées de trois portes $171_2$ à $171_4$ à travers un inverseur $173_1$. Le contact $112_2$ est relié directement à une seconde entrée de la porte $171_2$, et à travers un inverseur $173_2$ à des secondes entrées des portes $171_3$ et $171_4$. Le contact $112_3$ est relié directement et à travers un inverseur $173_3$ à des troisièmes entrées des portes $171_3$ et $171_4$, respectivement. Le contact $112_4$ est relié directement à une quatrième entrée de la porte $171_4$. Des bascules bistables $174_1$ à $174_4$ ont des entrées $S_1$ à $S_4$ reliées au contact $112_1$ et à des sorties des portes ET $171_2$ à $171_4$ respectivement. Ainsi, une entrée $S_n$, n variant de 1 à N = 4, est à l'état «1» et les autres entrées $S_1$ à $S_{n-1}$ et $S_{n+1}$ à $S_N$ sont à «0» tant qu'une pièce $P_n$ est présente dans la glissière corresponante et qu'aucune pièce de valeur inférieure $P_1$ à $P_{n-1}$ n'est présente dans les glissières correspondantes. Dès qu'un ordre d'encaissement d'une pièce est détecté par le circuit de réception 16 et tant qu'une carte n'est pas introduite dans le mécanisme 13, une sortie 160 du circuit 16 passe à l'état «1» et applique un «0» à des entrées R des bascules $174_1$ à $174_4$ à travers une porte ET 140P dans le circuit de commutation 14 (Fig. 2C) et un inverseur 175. Seule la bascule $174_n$ correspondant à une pièce ayant la plus petite valeur parmi les pièces présentes a une sortie Q à l'état «1».

Les sorties Q des bascules $174_1$ à $174_4$ sont reliées respectivement à des premières entrées de portes ET $175_1$ à $175_4$ ayant des secondes entrées reliées à la sortie 12E de la porte 140P. Les relais $113_1$ à $113_4$ sont reliés respectivement à des sorties des portes $175_1$ à $175_4$ à travers des transistors $176_1$ à $176_4$. Lorsque la bascule $174_n$ a son entrée $S_n$ à «1», la porte $175_n$ est ouverte par le signal d'ordre d'encaissement et le transistor $176_n$ est passant pour activer le relais $113_n$ (Fig 2A). Le relais activé $113_n$ ouvre le contact correspondant $114_n$ afin de neutraliser la détection des pièces pendant la validation de l'encaissement de la pièce $P_n$, et de signaler la présence de la pièce $P_n$ par une impulsion de «présence de pièce». Comme montré à la Fig. 2C, cette impulsion est délivrée par la sortie 12PP vers une sortie 14P/C du circuit de commutation 14 à travers une porte ET $141_0$ et une porte OU 142 dans le circuit de commutation 14. Le relais activé $113_n$ commande également le dispotif d'aiguillage afin que la pièce $P_n$ tombe dans la trémie d'encaissement.

La chute normale de la pièce $P_n$ de haut en bas successivement à travers les trois détecteurs superposés $117_1$, $117_2$ et $117_3$ dans la trémie d'encaissement est signalée par le circuit de validation de pièce 18. Le circuit 18 montré à la Fig. 2B comprend trois bascules bistables du type RS $180_1$ à $180_3$, deux portes ET à quatre entrées 181 et 182, une porte ET à deux entrées 183, une porte OU à deux entrées 184 et des inverseurs $185_1$ à $185_3$, 186 et 187. Des entrées R des bascules $180_1$ à $180_3$ sont reliées à la sortie 160 du circuit de réception 16 à travers l'inverseur 186. Un ordre d'encaissement remet à «0» des sorteis Q des bascules $180_1$ à $180_3$ avant l'encaissement proprement dit de la pièce à encaisser $P_n$. Des entrées S des bascules $180_1$ à $180_3$ sont respectivement reliées aux sorteis $118_1$ à $118_3$ du mécaisme 11 et sont à l'état «1» en réponse à la traversée de la pièce à encaisser $P_n$ à travers les détecteurs $117_1$ à $117_3$. Sachant que la sortie Q de la bascule $180_3$ est reliée à l'entrée S de la bascule $180_2$ à travers l'inverseur 187, les sorties Q des bascules $180_1$ à $180_3$ sont respectivement à «1», «0» et «1» lors du passage de la pièce $P_n$ à travers les détecteurs $117_1$ à $117_3$. Les entrées de la porte de validation 181 sont reliées directement à la borne d'ordre d'encaissement 160 et aux sorties Q des bascules $180_1$ et $180_3$, et à travers l'inverseur $185_2$, à la sortie Q de la bascule $180_2$; une sortie 188 de la porte 181 passe donc à l'état «1». Cet état valide l'encaissement de la pièce en ouvrant des portes ET $189_1$ à $189_4$ ayant d'autres entrées respectivement reliées aux sorties des portes $175_1$ à $175_4$. Dans le circuit de commutation 14 montré à la Fig. 2C, des portes ET $141_1$ à $141_4$ ont des premières entrées reliées respectivement à des sorties $12P_1$ à $12P_4$ des portes $189_1$ à $189_4$. Des secondes entrées de commande des portes $141_0$ à $141_4$ sont à l'état «1» et ouvrent ces portes tant qu'aucune carte n'est présente dans le mécanisme 13. Par suite, parmi les sorties 14P/C et $14P_1$ à $14P_4$ des portes 142 et $141_1$ à $141_4$, seule la sortie $14P_n$ est à l'état «1» pour indiquer l'encaissement effectif de la pièce $P_n$. La sortie 14P/C est à l'état «0» si la pièce qui vient d'être encaissée était la dernière dans les zones de stockage, ou à l'état «1» si une ou plusieurs autres pièces sont en attente dans les zones de stockage.

Par contre, toute combinaison anormale des états des sorties Q des bascules $180_1$ à $180_3$ différente de «1», «0» et «1» maintient fermées les portes 181 et $189_1$ à $189_4$, et cette combinaison anormale est signalée au moyen des portes 182, 183 et 184, par un état «1» d'une sortie 12A du circuit 12 reliée à la sortie de la porte OU 184 à travers une diode 1840. En effet, les entrées de la porte ET 182 sont respectivement reliées directement à la sortie Q de la bascule $180_2$ et à la borne 160 et, à travers les inverseurs $185_1$ et $185_3$, aux sorties Q des bascules $180_1$ et $180_3$, les entrées de la porte ET 183 sont respectivement reliées aux sorties Q des bascules $180_1$ et $180_3$, et les sorties des portes 182 et 183 sont respectivement reliées aux entrées de la porte OU 184. Un état «1» à la sortie 12A signale une anomalie par exemple résultant d'une extraction d'une pièce de la cassette de bas en haut à travers les détecteurs, $117_3$, $117_2$ et $117_1$, ou d'un arrêt de la pièce à encaisseur $P_n$ avant le détecteur $117_3$ ou au niveau du déctecteur $117_3$, précédant une interruption du signal d'ordre d'encaissement, ou succédant à celle-ci, c'est-à-dire quel que soit l'état de la borne 160.

Le mécanisme d'encaissement à carte prépayée 13 montré à la Fig. 2A offre également deux sorties 13PC et 13TB et une entrée 13E jouant des rôles similaires à la sortie 12PP, aux sorties $12P_1$ à $12P_4$ et à l'entrée 12E du circuit de contrôle d'encaissement de pièces 12, respectivement. La sortie 13PC est à l'état «1» lorsqu'une carte est présente dans le mécanisme 13 et possède un avoir de taxes de base non nul. Dans tous les autres cas, tels qu'absence de carte, carte non conforme, avoir épuisé de la carte, ou fermeture d'une fente d'introduction de carte dans le mécanisme 13, la sortie 13PC est à l'état «0». Dans le circuit de commutation 14 montré à la Fig. 2C, la sortie 13PC est reliée à des entrées de commande de portes 140C et 140P directement et à travers un inverseur 143, à une seconde entrée, de la porte OU 142 et, à travers un inverseur 144, aux entrées de commande des portes ET $141_0$ à $141_4$. Les portes ET 140P et 140C ont des secondes entrées reliées à la borne 160 et des sorties reliées respectivement aux bornes 12E et 13E. Ainsi, en l'absence de carte, les portes 140P et $141_0$ à $141_4$ sont ouvertes et le mécanisme 11 est utilisable pour encaisser des pièces et donc payer une communication téléphonique avec des pièces de monnaie. Par contre, en présence de carte avec un avoir, le mécanisme 13 est seul utilisable pour payer la communication téléphonique, le mécanisme 13 recevant l'ordre d'encaissement à travers la porte ouverte 140C. Un état «1» à la sortie 14P/C de la porte OU 142 indique ainsi soit la présence d'au moins une pièce dans les glissières de stockage du mécanisme 11, soit la présence d'une carte dans le mécanisme 13. Le retrait ou l'introduction de la carte l'usager ou l'épuisement de l'avoir de la carte n'interrompt pas la communication téléphonique, et le circuit de commutation 14 substitue automatiquement le mécanisme 11 au mécanisme 13, ou réciproquement. Vis-à-vis de l'équipement actif, la communication reste établie et elle doit le rester quel que soit le mécanisme 11 ou 13 en fonctionnement. En particulier, l'usager qui a épuisé l'avoir de sa carte de crédit peut poursuivre la communication en cours sans interruption à l'aide de pièces de monnaie. La commutation entre les mécanismes 11 et 13 peut s'effectuer à tout moment sans apporter la moindre perturbation ni à la communication, ni à la taxation.

Le même bouton poussoir 115 est utilisé simultanément dans les mécanismes d'encaissement à pièces et à carte pour mettre fin à une communication et provoquer un remboursement de pièces en stockage, et/ou une éjection de carte.

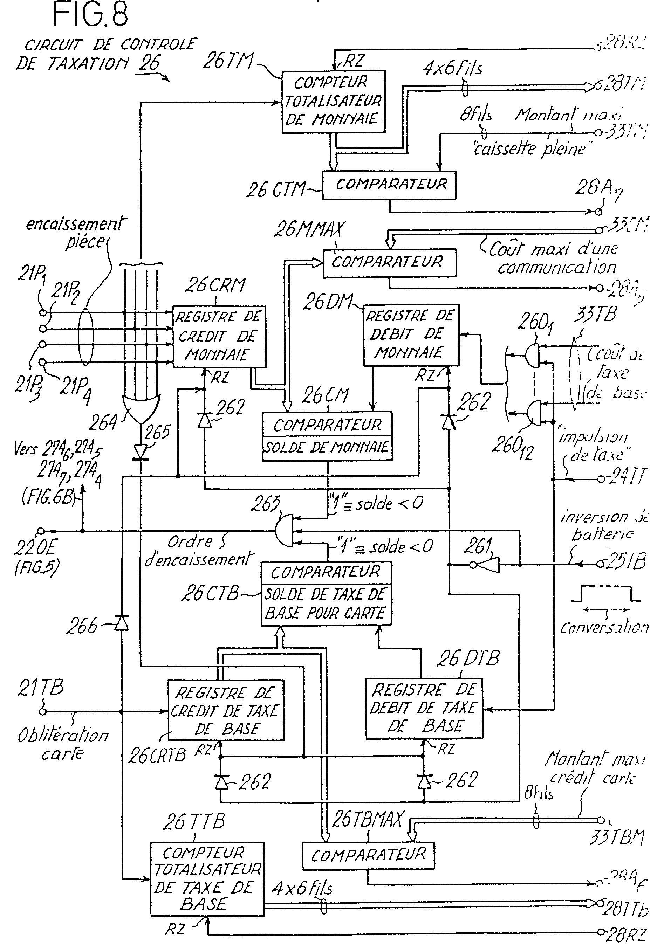

Les séquences de fonctionnement entre équipements actif et passif sont ainsi analogues lors de l'utilisation d'une carte et de l'utilisation de pièces. Seule l'interprétation de l'ordre d'encaissement à la borne 160 diffère dans le mécanisme 11 et 13. Dans le mécanisme d'encaissement à carte 13, un ordre d'encaissement reçu à l'entrée 13E provoque une oblitération d'une taxe de base téléphonique dans la carte. Cette oblitération est signalée par un état «1» à la sortie 13TB, jusqu'à ce que le signal d'ordre d'encaissement soit interrompu par l'équipement actif lorsqu'un registre de crédit de taxe de base dans l'équipement actif est crédité de la valeur de la taxe de base oblitérée et provoque ainsi un solde positif pour la communication en cours, comme on le verra en référence à la Fig. 8.

Afin de ne pas fausser l'évaluation du montant des pièces contenues dans la caissette au moment de son relevage, les montants des sommes débitées sur des cartes sont sommés dans un compteur totalisateur de taxe de base distinct d'un compteur totalisateur de monnaie sommant les valeurs des pièces encaissées. En outre, un état «1» à la sortie 13TB indique à l'équipement actif que le mode de paiement par carte est utilisé.

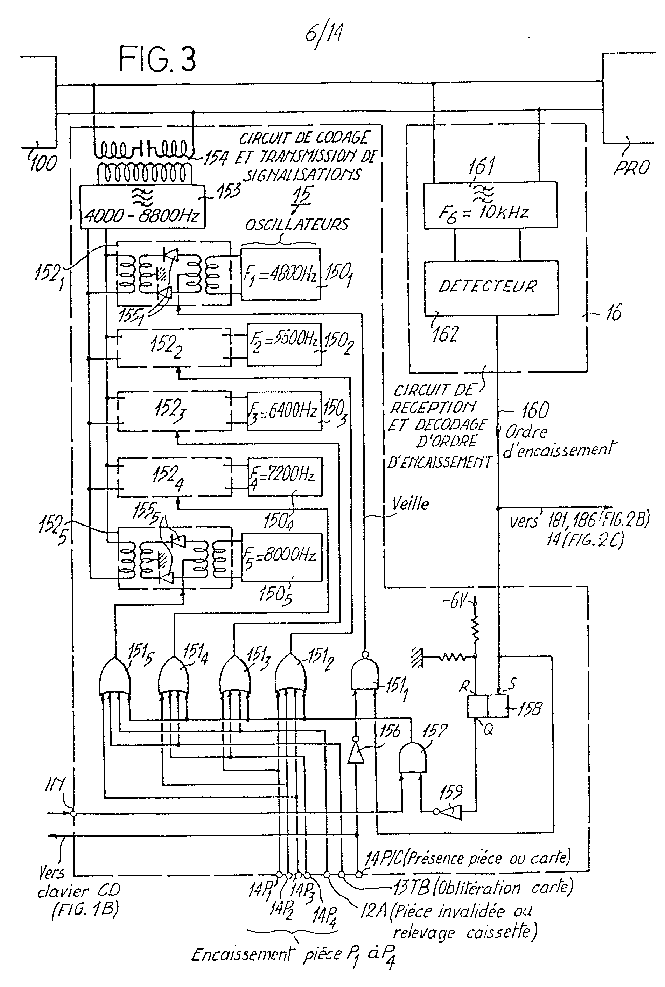

Les différentes signalisations délivrées par les sorties 14P/C, $14P_1$ à $14P_4$, 12A et 13TB sont codées et transmises par le circuit de codage et transmission 15 montré à la Fig. 3. Le codage consiste à moduler des combinaisons de deux fréquences choisies parmi cinq fréquences porteuses de signalisation prédéterminées $F_1$ à $F_5$, par les impulsions délivrées par les sorties précitées, respectivement. Le circuit 15 comporte cinq oscillateurs $150_1$ à $150_5$ produisant respectivement les cinq fréquences porteuses $F_1$ à $F_5$ ainsi qu'un circuit de portes sélectionnant les combinaisons de deux fréquences. Les fréquences $F_1$ à $F_5$ ont des valeurs supérieures à la bande de fréquence téléphonique de 300 à 3400 Hz et sont par exemple $F_1 = 4800$ Hz, $F_2 = 5600$ Hz, $F_3 = 6400$ Hz, $F_4 = 7200$ Hz et $F_5 = 8000$ Hz.

Des sorties d'une porte NON-ET $151_1$ à deux entrées et de quatre portes OU $151_2$ à $151_5$ à quatre entrées sont reliées respectivement au points milieux de premiers enroulements secondaires de doubles transformateurs inclus dans des modulateurs symétriques $152_1$ à $152_5$. Des premiers enroulements primaires des doubles transformateurs sont reliés aux sorties des oscialleturs $150_1$ à $150_5$. Des seconds enroulements secondaires formant des sorties des modulateurs $152_1$ à $152_5$ sont reliés en parallèle aux entrées d'un filtre passe-bande 153 ayant une bande passante de 4000 à 8800 Hz, le filtre 153 étant relié aux bornes A et B de la ligne téléphonique à travers un transformateur 154 et le circuit de protection PRO. Dans chaque modulateur $152_1$ à $152_5$ sont prévues deux diodes polarisées directement $155_1$ à $155_5$ entre le premier enroulement secondaire et un second enroulement primaire du double transformateur associé. Les transmissions des fréquences $F_1$ à $F_5$ par les oscillateurs $150_1$ à $150_5$ qui fonctionnent en permanence lorsqu'ils sont alimentés, sont respectivement commandées par des états «1» aux sorties des portes $151_1$ à $151_5$ qui débloquent les paires de diodes $155_1$ à $155_5$ respectivement.

La fréquence F1 n'est pas transmise dans la ligne lorsqu'un ordre d'encaissement traduit par l'état «1» à la sortie 160 du circuit de réception 16 est appliqué à une première entrée de la porte NON-ET $151_1$ et lorsqu'une absence de pièces dans les glissières de stockage et un absence de carte avec avoir non nul sont signalées par l'état «0» à la borne 14P/C qui est reliée à une seconde entrée de la porte $151_1$ par l'intermédiaire d'un inverseur 156. La sortie de la porte NON-ET $151_1$ est ainsi à l'état «0» et bloque les diodes $155_1$. Ainsi, après l'établissement d'une communication téléphonique, c'est-à-dire après un décrochage, une phase de numérotation, une inversion de batterie inversant la polarité des fils de ligne du côté du central de rattachemen et une détection d'une première impulsion de taxe par l'équipement actif, la fréquence $F_1$ dite fréquence de veille est interrompue dès qu'il n'y a plus de pièce dans les glissières de mécanisme 11 et de carte ayant un avoir non nul dans le mécanisme 13, et qu'un ordre d'encaissement est transmis par l'équipement actif en réponse à un solde négatif de la communication en cours. Par contre, la fréquence de veille $F_1$ est transmise si au moins une pièce est présente dans les glissières de stockage au moment où l'ordre d'encaissement est reçu. Après cet encaissement, la transmission de la fréquence $F_1$ reste maintenue, malgré l'absence de pièces en stockage, jusqu'à la réception de l'ordre d'encaissement suivant et pour autant que d'autres pièces n'ont pas été versées dans l'intervalle.

Les sorties $14P_1$ à $14P_4$ du circuit de commutation 14 sont respectivement reliées à des entrées des portes $151_2$ et $151_3$, des entrées des portes $151_2$ et $151_4$, des entrées des portes $151_2$ et $151_5$ et des entrées des portes $151_3$ et $151_4$. Par suite, des encaissements effectifs des pièces $P_1$, $P_2$, $P_3$ et $P_4$ sont signalés respectivement par des combinaisons de fréquences porteuses $F_2+F_3$, $F_2+F_4$, $F_2+F_5$ et $F_3+F_4$. L'encaissement d'une taxe de base en présence de carte, c'est-à-dire l'oblitération ou le débit d'une taxe de base dans une carte, se traduit par l'application d'un «1» à des entrées des portes $151_4$ et $151_5$ par la sortie 13TB du mécanisme 13, et donc par une transmission des fréquences $F_4+F_5$.

Par ailleurs, deux autres combinaisons de fréquences peuvent être transmises par le circuit 15.

Lorsque la phase de numérotation fait appel au clavier décimal CD, le clavier CD est activé en réponse à un décrochage simulé par une présence de pièce dans les glissières de stockage ou d'une carte dans le mécanisme 13, traduite par un «1» à la sortie 14P/C du circuit de commutation. Des impulsions de numérotation sont délivrées par une sortie IN du clavier CD à des quatrièmes entrées de portes OU $151_2$ à $152_5$ par l'intermédiaire d'une porte ET 157 à deux entrées. Comme montré à la Fig. 1B, la sortie IN reproduit les impulsions de numérotation du clavier décimal CD pour autant qu'un transistor TR dans le clavier soit débloqué par un état «1» à la borne 14P/C traduisant la présence de pièces et/ou de carte. L'autre entrée de la porte ET 157 est reliée à une sortie Q d'une bascule de type RS 158 à travers un inverseur 159. Une entrée S de la bascule 158 est reliée à la borne 160 du circuit de réception, et une entrée R de la bascule 158 est à l'état «0» par application d'une tension de polarisation de −6 volts.

Pendant la phase d'établissement d'une communication jusqu'à la première inversion de batterie, la borne 160 est à «0», ce qui maintient ouverte la porte 157. Chaque impulsion de numérotation module ainsi une combinaison des fréquences porteuses $F_2+F_3+F_4+F_5$. Puis dès qu'un ordre d'encaissement est reçu par le circuit 16, la bascule 158 mémorise l'état «1» et, à travers l'inverseur 159, ferme la porte 157, ce qui inhibe toute transmission d'impulsion de numérotation par la borne IN du clavier CD. A la fin d'une communication téléphonique traduite par une interruption brève de la tension de 48 volts dans la ligne par l'équipement actif, l'entrée R de la bascule 158 passe à «1», ce qui ouvre à nouveau la porte 157.

Lorsqu'une pièce n'est pas validée à l'encaissement, la sortie 12A du circuit de validation 18 applique un «1» à des entrées des portes $151_3$ et $151_5$, et une combinaison des fréquences $F_3+F_5$ est transmise pour signaler une anomalie.

La combinaison de fréquences $F_3+F_5$ est également utilisée pour signaler une ouverture du compartiment de caissette 110 et un retrait de la caissette du compartiment 110. Comme montré aux Figs. 2 et 3, ces deux opérations ouvrent respectivement deux contacts 117 et 118 reliés en série entre une borne à +6 volts et l'entrée commune 12A des portes OU $151_3$ et $151_5$. Comme montré plus précisément à la Fig. 2A, la borne 12A est reliée à une borne 11R du mécanisme 11 à laquelle sont connectés en série les contacts $114_4$ à $114_1$, et à une borne 13R du mécanisme 13. L'ouverture de l'un des contacts 117 et 118 coupe ainsi l'alimentation de 6 volts des mécanismes 11 et 13, et par suite, les bornes 14P/C, $14P_1$ à $14P_4$ et 13TB sont maintenues à zéro, ce qui rend impossible l'établissement d'une communication téléphonique.

Comme on le verra dans la suite, l'équipement actif 2 comptabilise les valeurs des pièces encaissées dans la caissette au fur et à mesure du déroulement des communications, ce qui permet de connaître le montant total des encaissements depuis le dernier relevage de caissette. Le montant des encaissements connu avec une grande précision par l'équipement actif du fait qu'il assure la gestion du crédit de chaque communication, permet en outre de contrôler la collecte des recettes par totalisation des valeurs de pièces encaissées indépendamment des relevés des compteurs téléphoniques associés à l'appareil téléphonique public. Sachant que le montant contenu dans la caissette est connu au moment précis du relevage indiqué par l'ouverture des contacts 117 et 118, la conception de la caissette est simple et aucun plombage souvent peu efficace et très contraignant n'est nécessaire. L'ouverture des contacts 117 et 118 produisant la transmission des fréquences $F_3+F_5$ vers l'équipement actif, provoque dans l'équipement actif une mémorisation du montant total très précis des pièces se trouvant dans la caissette et du nombre de taxes de base perçues sur des cartes prépayées depuis le relevage de caissette précédent. Cette mémorisation permet un contrôle efficace des fonds collectés par les releveurs. Pendant tout le temps de relevage de la caissette, aucune communication téléphonique ne peut être établie ou maintenue, car l'équipement actif simule une occupation de la ligne du côté du central de rattachement. Si à partir du début de la transmission des fréquences $F_3+F_5$ correspondant à l'ouverture du compartiment 110, celui-ci contient une caissette et est refermé après au plus une durée prédéterminée $t_1 = 130s$, le relevage de la caissette est considérée comme normal. Par contre, dans tous les autres cas correspondant à une absence de caissette et/ou à une ouverture du compartiment après la durée $t_1$, l'équipement actif 2 met l'appareil téléphonique public en mode hors service en coupant la tension d'alimentation de −48 volts aux bornes AB de l'équipement passif 1. En dehors des périodes de relevage de caissette pré-établies par un ordinateur de gestion, comme on le verra dans la suite, aucune temporisation de $t_1 = 130s$ secondes n'a lieu. En exploitation normale, l'ouverture du compartiment de caissette 110 par effraction est signalée par une transmission des fréquences $F_3+F_5$ à l'équipement actif qui génère une alarme. Ainsi, la présence et l'absence de temporisation de 130s permettent de distinguer des transmissions des fréquences $F_3+F_5$ signalant des incidents survenant après un relevage normal de caissette et signalant des effractions pendant l'exploitation normale.

Comme montré à la Fig. 3, le circuit de réception et décodage 16 comprend un filtre passebande 161 et un détecteur de fréquence 162. Le filtre 161 offre une bande de fréquence étroite centrée sur une fréquence porteuse $F_6 = 10\,000$ Hz modulé par des impulsions d'ordre d'encaissement. Le filtre 161 a des entrées reliées aux bornes de ligne AB, entre les circuits de protection PRO et le filtre 100. Il délivre les impulsions modulant la fréquence $F_6$ au détecteur 16 délivrant chaque ordre d'encaissement sous la forme d'une impulsion à la sortie 160. Une telle impulsion a une durée variable, en général au plus égale à $t_{21} = 6s$.

Dès que la communication de signaux de parole est établie après la première inversion de batterie, l'équipement actif transmet à travers la ligne un premier ordre d'encaissement à la fréquence $F_6$ mettant à «1» la sortie 160 du circuit de réception et décodage 16. Pour ce premier ordre d'encaissement, une temporisation $t_5 = 6s$ est destinée à pallier un incident portant sur un encaissement de pièces ou une oblitération de taxe de base sur une carte pour ne pas aboutir à une situation de blocage, comme on le verra dans la suite.

Si après une durée n'excédant pas $t_{21}$, l'équipement actif reçoit l'une des quatre combinaisons de fréquence $F_2+F_3$, $F_2+F_4$, $F_2+F_5$ et $F_3+F_4$ signalant qu'une pièce est encaissée normalement, ce qui est confirmé par l'absence de transmission des fréquences $F_3+F_5$, et donc que le mécanisme d'encaissement de pièces 11 est utilisé, l'équipement actif 2 stoppe la transmission de la fréquence $F_6$ et inscrit dans un registre de crédit de monnaie pour communication la valeur de la pièce correspondant à la combinaison de fréquences transmise parmi cinq. De même, si après une durée n'excédant pas $t_{21}$, l'équipement actif reçoit la combinaison de fréquence $F_4+F_5$ signalant l'oblitération d'une taxe de base sur une carte et donc l'utilisation du mécanisme d'encaissement à carte prépayée 13, l'équipement actif stoppe la transmission de la fréquence $F_6$ et inscrit dans un registre de crédit de taxe de base pour communication la valeur de la taxe de base. Selon les deux cas, l'équipement actif compare en permanence le crédit mémorisé avec l'état du débit de la communication en cours traduit respectivement en coût de taxes de base et en nombre de taxes de base. Chaque fois que le solde crédit-débit devient négatif, l'équipement actif délivre un ordre d'encaissement correspondant à la fréquence $F_6$. L'encaissement d'une nouvelle pièce est effectué ou une taxe de base est oblitérée sur la carte, et le solde crédit-débit redevient positif.

Par contre, si pendant la durée égale à $t_{21} = 6s$ succédant à la transmission de chaque ordre d'encaissement à la fréquence $F_6$ suivant le premier ordre, aucune des cinq combinaisons de fréquences $F_2+F_3$, $F_2+F_4$, $F_2+F_5$, $F_3+F_4$ et $F_4+F_5$ n'est reçue par l'équipement actif, ce qui est également signalée par une interruption de la fréquence de veille $F_1$ indiquant une absence de pièces dans les glissières de stockage, une absence de carte, ou un avoir nul d'une carte présente, l'équipement actif transmet vers le circuit audio 10 une tonalité «crédit épuisé» à 1250 Hz qui est superposée avec les signaux de parole. Cette tonalité invite l'usager à réapprovisionner le mécanisme 11 avec au moins une pièce ou à introduire une carte ayant un avoir non nul dans le mécanisme 13. Dans l'attente d'un réapprovisionnement de crédit, l'équipement actif suspend la communication téléphonique entre l'appareil public et le central de rattachement et maintient la tonalité à 1250 Hz pendant une durée de 7 secondes succédant à la temporisation $t_{21} = 6s$. Cependant, la liaison téléphonique reste maintenue entre le central de rattachement et l'usager éloigné qui reçoit une tonalité, de préférence également à la fréquence de 1250 Hz, l'invitant à «rester en attente». Passé un délai de $t_{22} = 13s$ secondes succédant au début des transmissions de tonalité pendant lequel le solde de la communication est demeuré négatif, la communication est définitivement rompue par l'équipement actif par coupure brève de l'alimentation de l'équipement passif.

Equipement actif

L'équipement actif 2 analyse, surveille et gère les différentes phases d'une communication téléphonique. En particulier, l'équipement actif gère de manière détaillée le compte financier de chaque communication, comptabilise le total des encaissements en distinguant un compte de monnaie et un compte de taxe de base pour carte prépayée aussi bien pour chaque communication que globalement pour toutes communications à partir du dernier relevage de la caissette contenue dans l'appareil téléphonique public. Des informations recueillies par l'équipement actif sont traitées par un ordinateur de gestion éloigné OG qui édite la situation comptable et l'état de la qualité de fonctionnement de l'équipement passif. En pratique, plusieurs équipements actifs associés respectivement à des appareils téléphoniques publics desservis par un central de rattachement commun sont rassemblés dans un bâti extensible pouvant contenir 1024 équipements actifs. Comme montré à la Fig. 4, l'ensemble des équipements actifs utilise en commun un processeur de liaison 3 relié à l'ordinateur de gestion OG à travers un modem 30 et une ligne téléphonique commutée 31. Le modem 30 fonctionne à l'alternat, avec une rapidité de modulation typiquement de 200 bauds. Le processeur 3 est relié au modem à travers un multiplexeur-démultiplexeur convenable de canaux de signalisation 32, et est également relié à une mémoire centrale morte 33, telle une mémoire câblée ou une mémoire reprogrammable REPROM. La mémoire 33 contient des paramètres sujets à modifications, tels que la valeur de la taxe de base, un coût maximal de communication téléphonique au-delà duquel le coût d'une communication est jugé anormalement trop élevé, un nombre de taxes de base maximal pouvant être débité d'une carte prépayée, un montant maximal de caissette pleine, et un numéro d'appel téléphonique de l'ordinateur de gestion OG.

En référence à la Fig. 4, l'équipement actif 2 se présente sous la forme d'une carte de circuit imprimé enfichable dans le bâti précité. L'équipement actif 2 est situé de préférence à proximité du central de rattachement de l'appareil téléphonique public. Plus précisément, l'équipement actif comporte deux bornes $A_1$ et $B_1$ reliées aux bornes A et B de l'équipement passif 1 (Fig. 1B) à travers la ligne téléphonique proprement dite sous tension continue constante et deux bornes $A_0$ et $B_0$ reliées à des bornes correspondantes $A_2$ et $B_2$ d'un joncteur correspondant JO d'un commutateur téléphonique CT du central de rattachement à travers un répartiteur RE du central. Comme on le voit à la Fig. 4, l'équipement actif 2 se présente ainsi pour partie comme un quadripôle 20 inséré dans la ligne téléphonique, comprenant deux limiteurs de tension $200_1$ et $200_0$ entre lesquels divers circuits inclus dans l'équipement actif 2 sont connectés en parallèle. Le limiteur de tension $200_1$ entre les bornes $A_1$ et $B_1$ assure la protection des circuits contre des courants circulant dans la ligne entre les équipements actif et passif, tandis que le limiteur de tension $200_0$ entre les bornes $A_0$ et $B_0$ assure la protection des circuits contre des courants provenant du commutateur CT, tel qu'un courant d'appel sous 80 volts et à 50 ou 25 Hz.

Du côté de la ligne téléphonique entre les bornes $A_1$ et $B_1$ et un filtre 201 à bande passante téléphonique de 300 à 3400 Hz, l'équipement actif 2 comprend un circuit de réception et décodage 21 détectant les fréquences porteuses de signalisation $F_1$ à $F_5$ transmises par l'équipement passif 1 et un circuit de codage et transmission 22 transmettant la fréquence porteuse de signalisation $F_6$

vers l'équipement passif 1, ainsi qu'un double transformateur symétrique 202 constituant un circuit de blocage phonique. Du côté de l'équipement passif, un premier enroulement secondaire du transformateur 202 est relié aux bornes $A_1$ et $B_1$ auxquelles sont connectés en parallèle les circuits 21 et 22, et comprend en son milieu un condensateur 2030 ayant des bornes portées à 0 volt et à −48 volts à travers deux contacts de travail 2031 et 2032 commandés par un relais 2033. Les éléments 2030 à 2033 constituent un pont d'alimentation 203 pour appliquer une tension continue de −48 volts à la ligne téléphonique et donc pour téléalimentar l'équipement passif 1. Entre un second enroulement secondaire et un premier enroulement primaire du transformateur 202 sont prévus deux diodes de blocage 2020. Lorsqu'une tension nulle est appliquée à un point milieu 2021 du second enroulement secondaire, les diodes 2020 bloquent la transmission bidirectionnelle des signaux de parole à audiofréquences entre l'équipement passif 1 et le central et donc suspend une communication entre l'usager de l'appareil téléphonique public et un abonné éloigné. Le blocage des diodes 2020 est produit lorsque le solde de la communication en cours devient négatif depuis au moins $t_{21} = 6s$.

Le filtre 201 est relié à un second enroulement primaire du transformateur 202 du côté de l'équipement passif, ainsi qu'à un enroulement secondaire d'un autre transformateur 204 du côté du central téléphonique. Au milieu d'un enroulement primaire du transformateur 204 est interconnecté un condensateur 2050 relié en parallèle avec une résistance 2051 et un contact 2052 connectés en série. Le contact 2052 est commandé par un relais 2053. Les éléments 2051 à 2053 constituent un circuit d'appel et de coupure 205 pour simuler, du côté du commutateur CT, des ouvertures et des fermetures de la ligne téléphonique lors du décrochage de l'usager, de la numérotation par le clavier décimal CD et du raccrochage de l'usager pour une communication de départ. Entre l'enroulement primaire du transformateur 204 et le limiteur de tension $200_0$ sont connectés en parallèle aux bornes $A_0$ et $B_0$ un circuit de détection d'inversion et de coupure de tension 25 et un circuit de détection d'impulsion de taxe 24 relié à un circuit de contrôle de taxation 26.

Le circuit 25 détecte trois tensions appliquées par le commutateur entre les bornes $A_0$ et $B_0$. Une première tension correspond à l'état de repos, hors de la phase d'échange de signaux de parole d'une communication téléphonique, et porte à −48 volts et 0 volt les bornes $A_0$ et $B_0$. Une seconde tension porte les bornes $A_0$ et $B_0$ à 0 volt et −48 volts et correspond à la phase d'échange de signaux de parole succédant à une première inversion de la tension de batterie du central terminant la phase d'établissement d'une communication. Une troisième tension correspond à une coupure de l'alimentation de −48 volts provenant du commutateur CT, coupure pendant laquelle le commutateur CT transmet vers les bornes $A_0$ $B_0$ un courant de sonnerie d'appel sous une tension de 80 volts modulée à 50 ou 25 Hz pour appeler l'appareil téléphonique public et ainsi établir une communication d'arrivée.

Le circuit 24 détecte des impulsions de taxe à 12 kHz transmises par une chaîne de taxation dans le central assignée à l'appareil téléphonique public, après la première inversion de batterie et pendant la phase de parole. Comme il est connu, la période de taxation entre deux impulsions de taxe transmises successivement correspond à un coût de communication égal à la taxe de base et dépend de la zone de rattachement de l'abonné demandé indiqué par un préfixe du numéro d'appel. Le circuit de contrôle de taxation 26 établit en permanence le solde = crédit-débit pour chaque communication et détecte ainsi tout solde négatif en vue d'interrompre brièvement ou de rompre définitivement la communication. Le circuit 26 établit également des totaux en pièces monnaie et en taxes de base depuis le dernier relevage de la caissette contenue dans le compartiment 110 de l'appareil téléphonique public.

Le quadripôle 20 comprend également un transformateur 206 entre la borne $B_1$ et le premier enroulement secondaire du double transformateur 202 ainsi qu'un transformateur 207 entre l'enroulement primaire du transformateur 204 et la borne $B_0$. Les transformateurs 206 et 207 injectent dans la ligne téléphonique, respectivement vers l'appareil téléphonique public et le central, des tonalités «crédit épuisé» et «rester en attente» dès que le solde d'une communication en cours est négatif et aucune pièce ou carte à avoir non nul n'est présente dans l'équipement passif.

Comme on le voit à la Fig. 4, l'équipement actif comprend, outre les circuits 20 à 26 déjà cités, un moniteur de communication téléphonique 27, un circuit de mémorisation 28 et une base de temps 29. Le moniteur 27 constitue le «cerveau» de l'équipement actif 2 et est relié à tous les autres circuits pour centraliser et analyser toute information et prendre toute décision appropriée en cours d'une communication notamment. Le circuit de mémorisation 28 contient 32 blocs de mémoires dont dix-huit sont destinés à enregistrer des anomalies indiquées par le circuit de contrôle de taxation 26 et le moniteur 27 et dont douze sont destinés à enregistrer six chiffres du montant de pièces de monnaie et six chiffres du nombre de taxes de base délivrés par le circuit de contrôle de taxe 26 et totalisés depuis le dernier relevage de caissette. En fait, parmi lesdits dix-huit blocs de mémoires, huit blocs de mémoire sont utilisés ici, les autres blocs restants étant disponibles à d'autres usages n'appartenant pas au cadre de l'invention.

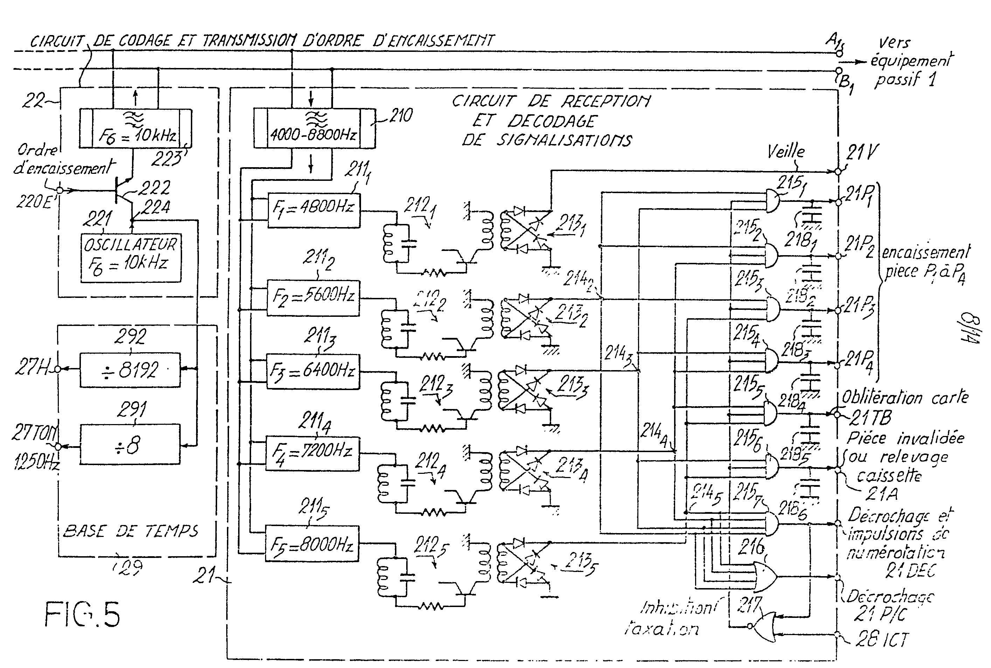

Comme montré à la Fig. 5, les fréquences $F_1$ à $F_5$ sont détectées dans le circuit de réception et décodage 21 au moyen de filtres passe-bande $211_1$ à $211_5$ reliés en parallèle à un filtre 210 à large bande de 4000 à 8800 Hz, et suivis d'amplificateurs accordés $212_1$ à $212_5$ et de redresseurs à double alternance $213_1$ à $213_5$ respectivement. Le filtre 210 a des entrées reliées aux bornes $A_1$ et $B_1$ de la ligne téléphonique du côté de l'équipement passif 1. Des sorties 21V et $214_2$ à $214_5$ des redresseurs $213_1$ à $213_5$ délivrent chacune une tension continue au niveau haut «1» lorsque la fréquence respective $F_1$ à $F_5$ est détectée. Un ensemble de six portes ET à trois entrées $215_1$ à $215_6$ et d'une porte ET à quatre entrées $215_7$ décode l'ensemble des fréquences $F_2$ à $F_5$ pour signaler respectivement des encaissements de pièces $P_1$ à $P_4$ à des sorties $21P_1$ à $21P_4$, un débit d'une taxe de base dans une carte prépayée à une sortie 21TB, une anomalie telle qu'un encaissement de pièce invalidé ou une ouverture du compartiment de caissette et/ou un retrait de caissette à une sortie 21A, et une demande de communication ou des impulsions de numérotation à une sortie 21DEC. Les signaux aux sorties $21P_1$ à $21P_4$, 21TB, 21A et 21DEC sont analogues à ceux appliqués aux bornes $14P_1$ à $14P_4$, 13TB, 12A et à la sortie de la porte 157 dans l'équipement passif (Fig. 3). Ainsi, la borne $214_2$ est reliée à des entrées des portes $215_1$, $215_2$ et $215_3$, la borne $214_3$ à des entrées des portes $215_1$, $215_4$ et $215_6$, la borne $214_4$ à des entrées des portes $215_2$, $215_4$ et $215_5$, et la borne $215_5$ à des entrées des portes $215_3$, $215_5$ et $215_6$. Les quatre entrées de la porte $215_7$ sont respectivement reliées aux bornes $214_2$ à $214_5$.

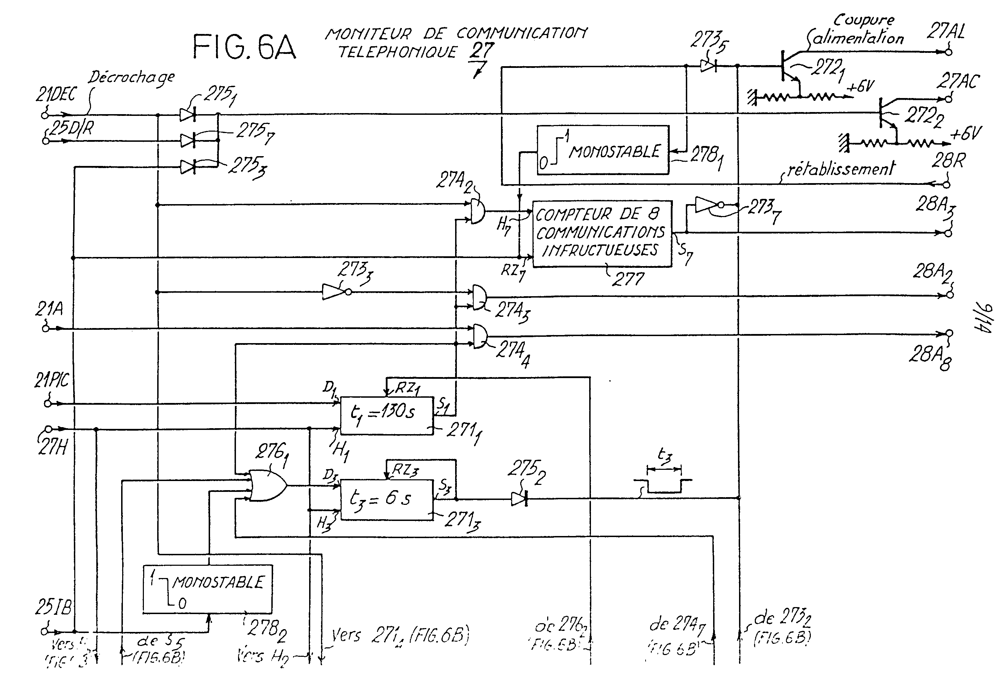

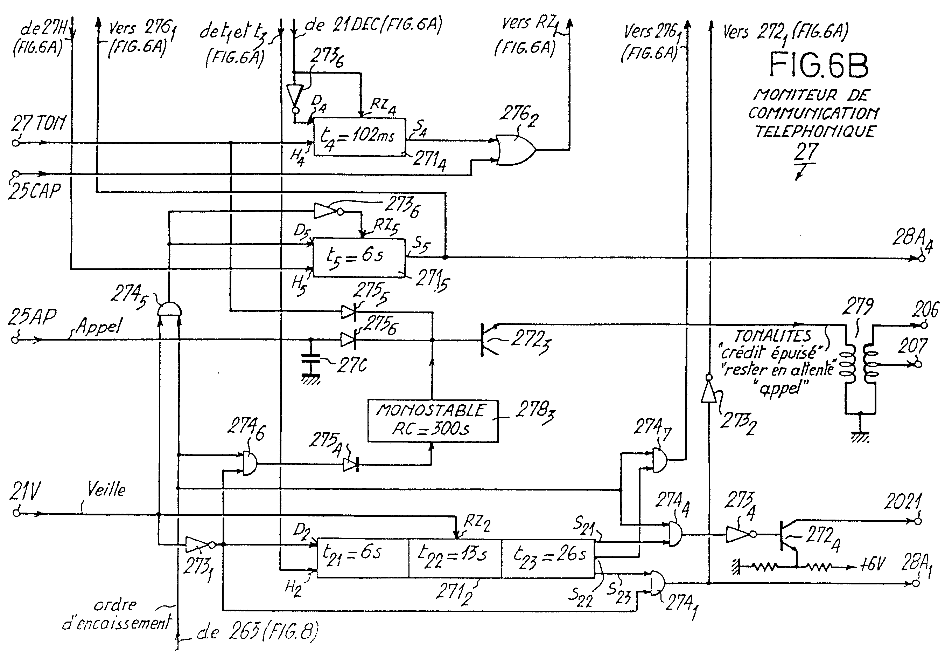

Le circuit 21 comprend en outre une porte OU 216 ayant quatre entrées reliées aux bornes $214_2$ à $214_5$, et une porte NON-OU 217 ayant deux entrées reliées à la borne 21DEC et à une borne de sortie 28ICT du circuit de mémorisation 28. Une sortie de la porte 217 est reliée à des troisièmes entrées des portes ET $215_1$ à $215_6$ afin de fermer ces portes pendant la réception de combinaison des fréquences $F_2$ à $F_5$ correspondant à la phase de numérotation au moyen du clavier décimal CD, ou pendant une transmission des chiffres des montants totaux de pièces de monnaie et de taxes de base du circuit de mémorisation 28 vers l'ordinateur de gestion OG en vue d'inhiber des fonctions de comptage dans le circuit de contrôle de taxation. Des condensateurs $218_1$ à $218_6$ placés respectivement en dérivation aux sorties des portes $215_1$ à $215_6$ retardent la polarisation des bornes de sortie respectives $21P_1$ à $21P_4$, 21TB et 21A de quelques nanosecondes afin de tenir compte du temps d'ouverture de la porte ET $215_7$. Une sortie 21P/C de la porte OU 216 est reliée à une entrée de déclenchement $D_1$ d'un temporisateur $271_1$ dans le moniteur 27 montré à la Fig. 6A. Comme on le verra dans la suite, le temporisateur $271_1$ établit une temporisation de $t_1 = 130s$ pour contrôler la durée d'établissement d'une communication en réponse à la détection de l'une des fréquences $F_2$ à $F_5$. Ainsi, dès le début de la communication est contrôlé le bon fonctionnement de l'ensemble des circuits surveillant les signalisation et taxation. En effet, comme on le verra dans la suite, si une ou plusieurs des fréquences $F_2$ à $F_5$ n'est pas reçue, la porte ET $215_7$ ne commande pas le relais d'appel et de coupure 2053 du côté commutateur de rattachement CT, tandis que la réception d'une seule des fréquences $F_2$ à $F_5$ ouvre la porte OU 216 et déclenche la temporisation $t_1 = 130s$ dans le temporisateur $271_1$, (Fig. 6A). A l'issue de la temporisation $t_1$, aucune communication n'ayant pu être établie, le moniteur 27 enregistre une communication inefficace et libère la chaîne de taxation. De même suivant l'autre sens de transmission, la mise en relation du demandeur et du demandé est subordonnée à la bonne réception d'une impulsion de taxe à 12 KHz venant du commutateur CT, à la bonne transmission et réception de la fréquence $F_6$ et, en retour, à la bonne réception d'un des signaux marquant un encaissement effectif.

Le circuit de codage et transmission 22 et la base de temps 29 sont également montrés à la Fig. 5.

Le circuit 22 comprend un oscillateur 221 oscillant à la fréquence $F_6$ = 10 000 Hz, un transistor 222 et un filtre passe-bande 223 ayant une bande étroite centrée sur la fréquence $F_6$. Une sortie 224 de l'oscillateur 221 est reliée à une entrée du filtre 223 à travers une jonction collecteur-émetteur du transistor 222, ainsi qu'à des entrées de deux diviseurs de fréquence 291 et 292 inclus dans la base de temps 29. Une base 220E du transistor 222 reçoit d'une sortie du circuit de contrôle de taxation 26 une impulsion d'ordre d'encaissement afin de débloquer le transistor 222 et transmettre la fréquence $F_6$ dans la ligne téléphonique à travers le filtre 223 relié aux bornes $A_1$ et $B_1$ du côté de l'équipement passif 1. Le transistor 222 assure en outre une amplification du signal $F_6$ et une adaptation de charge en sortie de l'oscillateur 221.

Les diviseurs de fréquence 291 et 292 sont des compteurs binaires et divisent la fréquence $F_6$ = 10 000 Hz respectivement par 8 et 8192 afin de fournir deux signaux d'horloge à deux entrées d'horloge 27TON et 27H du moniteur 27. Le premier signal d'horloge à la borne 27TON a une fréquence de 1 250 Hz pour être transmis en tant que signaux de tonalité de «crédit épuisé» et de «rester en attente» respectivement vers l'équipement passif demandeur 1 et vers l'abonné demandé à travers le commutateur téléphonique CT du central de rattachement. Le second signal d'horloge à la borne 27H est délivré à des bornes d'horloge $H_1$ à $H_3$ et $H_5$ de temporisateurs $271_1$ à $271_3$ et $271_5$ dans le moniteur 27 pour déterminer différents instants significatifs au cours d'une communication.

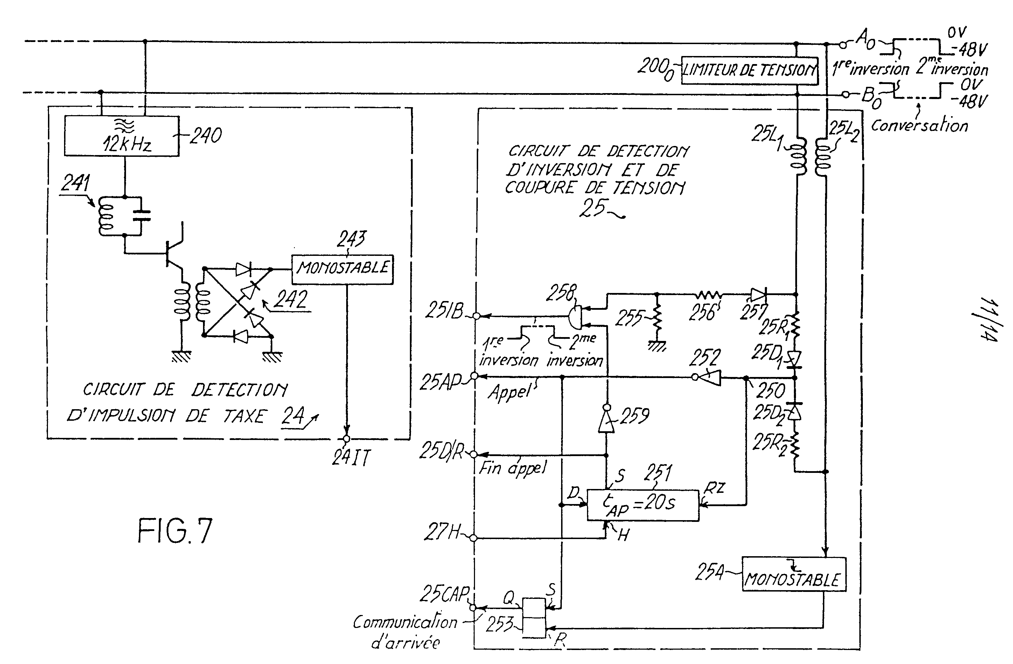

Avant de présenter le fonctionnement du moniteur 27 montré à la Fig. 6, on décrit brièvement les circuits 24 et 25 montrés à la Fig. 7.

Le circuit de détection d'impulsion de taxe 24 comprend un filtre passe-bande 240 centré sur la fréquence de modulation de 12 kHz des impulsions de taxe transmises par le chaîne de taxation du commutateur CT et reçues à travers les bornes $A_0$ et $B_0$. Un circuit accordé 241 et un redresseur à double alternance 242 en sortie du filtre 240 amplifient et démodulent les impulsions de taxe détectées qui sont ensuite calibrées par une bascule monostable non redéclenchable 243. Une sortie 24IT de la bascule 243 transmet des impulsions de taxe calibrées vers le circuit de contrôle de taxation 26.

Les impulsions calibrées ont une durée sensiblement supérieure à celles détectées afin d'annuler les effets qui pourraient conduire à des erreurs de taxation en raison de microcoupures affectant la réception de la fréquence à 12 kHz délivrée par le commutateur CT. Par ailleurs, il est à noter que, contrairement à la plupart des appareils téléphoniques publics connus, les impulsions de taxe ne sont pas transmises vers l'appareil téléphonique public, le filtre 201 (Fig. 4) ne permettant pas une telle transmission.

Le circuit de détection d'inversion et de coupure de tension 25 montré à la Fig. 7 comprend deux réseaux qui sont composés chacun d'une inductance $25L_1$, $25L_2$, d'une résistance $25R_1$, $25R_2$ et d'une diode polarisée directement $25D_1$, $25D_2$ connectées en série. Des bornes des inductances $25L_1$ et $25L_2$ sont reliées aux bornes de ligne $A_0$ et $B_0$, et des cathodes des diodes $25D_1$ et $25D_2$ sont reliées à une borne commune 250. La borne 250 est reliée à une entrée de remise à zéro RZ d'un temporisateur 251 ayant une entrée H recevant le signal d'horloge de la borne 27H de la base de temps 29 et établissant une durée de $t_{AP}$ = 20s pour appeler l'appareil téléphonique public. La borne 250 est également reliée à une borne de sortie 25AP du circuit 25 à travers un inverseur 252 pour signaler un appel d'un abonné éloigné au moniteur 27, et à une entrée de déclenchement D du temporisateur 251 et une entrée S d'une bascule 253 du type RS. Une entrée R de la bascule 253 est reliée à une borne commune à l'inductance $25L_2$ et la résistance $25R_2$ à travers une bascule monostable 254 déclenchable par front descendant.

Par ailleurs, le circuit 25 comprend deux résistance 255 et 256 et une diode polarisée directement 257 interconnectées entre une borne référée à la terre et une borne commune à l'inductance $25L_1$ et la résistance $25R_1$. Une borne commune aux résistances 255 et 256 est reliée à une première entrée d'une porte ET 258 ayant une seconde entrée reliée à une sortie S du temporisateur 251 à travers un inverseur 259. Une sortie 25IB de la porte 258 constitue une sortie du circuit 25 pour signaler une inversion de batterie et plus particulièrement une phase d'échange de signaux de parole au moniteur 27 et au circuit de contrôle de taxation 26.

Quel que soit le mode d'alimentation par la batterie du commutateur CT aux bornes de ligne $A_0$ et $B_0$, la borne 250 est toujours polarisée à −24 volts, ce qui signale une alimentation de la ligne du côté du commutateur au moniteur 27. Une coupure d'alimentation en réponse à un appel par un abonné éloigné comme on le verra dans la suite, met la borne 250 à l'état «0» et donc la borne de sortie 25AP à l'état «1».

Lorsque la ligne est à l'état de repos, hors phase de conversation, c'est-à-dire lorsque les bornes $A_0$ et $B_0$ sont à −48 volts et 0 volt, les diodes $25D_1$, $25D_2$ et 257 bloquent toute circulation de courant. Vue du commutateur, une extrémité de la ligne téléphonique relative au circuit 25 est «ouverte». A cet instant, les réseaux $25L_1$ à $25D_2$

n'ont donc aucun effet contraire sur une quelconque activation du relais d'appel et de coupure 2053. A l'état de repos, la première entrée de la porte ET 258 est polarisée à 0 volt, correspondant à l'état logique «0».

Après une première inversion de la tension de batterie indiquant un début d'une phase de conversation d'une communication téléphonique, les bornes $A_0$ et $B_0$ sont à 0 et $-48$ volts, la diode 257 est passante, et la première entrée de la porte 258 est polarisée à $-6$ volts, correspondant à l'état logique «1». Les résistances $25R_1$, 255 et 256 ont des valeurs ohmiques telles qu'en aucun cas par la suite, les réseaux $25L_1$ à $25D_2$ neutralisent l'activation du relais 2053 qui doit signaler la fin d'une communication au commutateur CT par ouverture de la ligne.

Moniteur

On décrit maintenant la structure et le fonctionnement du moniteur 27 en référence aux Figs. 6A et 6B, conjointement à la structure et au fonctionnement du circuit de contrôle de taxation 26 montré à la Fig. 8. Le moniteur 27 comprend notamment cinq temporisateurs $271_1$ à $271_5$ établissant des temporisations prédéterminées respectives $t_1 = 130s$; $t_{21} = 6s$, $t_{22} = 13s$ et $t_{23} = 26s$; $t_3 = 6s$; $t_4 = 102$ ms et $t_5 = 6s$, en vue de déterminer différents instants significatifs au cours d'une communication et ainsi contrôler des phases d'une communication et signaler des anomalies. A l'expiration des temporisations respectives précitées, des sorties $S_1$; $S_{21}$, $S_{22}$, $S_{23}$; $S_3$, $S_4$ et $S_5$ passe à l'état «1». Chacun des temporisateurs $271_1$, $271_2$, $271_3$ et $271_5$ est un compteur à bascules recevant à une entrée respective $H_1$, $H_2$, $H_3$ et $H_5$ un signal d'horloge fourni par la base de temps 29 (Fig. 5), via la borne 27H. Le temporisateur $271_4$ est également un compteur à bascules recevant sur une entrée $H_4$ un signal d'horloge à 1250 Hz de la base de temps 29, via la borne 27TON. Chaque temporisateur $271_1$ à $271_5$ est déclenché par un état «1» sur une entrée respective $D_1$ à $D_5$ et remis à zéro par un état «1» sur une entrée respective $RZ_1$ à $RZ_5$.

Différents autres éléments logiques contenus dans le moniteur 27 sont présentés au fur et à mesure de la description suivante de différentes phases d'une communication de départ, d'un relevage de caissette et d'une communication d'arrivée.

A) Phase de repos

A l'enfichage de la carte de circuit imprimé supportant l'équipement actif 2, un transistor $272_1$ est débloqué et active le relais d'alimentation 2033 à travers une sortie 27AL du moniteur. Les contacts 2031 et 2032 dans le pont d'alimentation 203 sont fermés pour alimenter sous 48 volts l'équipement passif 1 à travers les bornes $A_1$–$B_1$ et A–B de la ligne téléphonique. Simultanément, le défaut de réception de la fréquence $F_1$ pendant la mise en fonctionnement de l'équipement passif 1 maintient à l'état «0» la borne de sortie 21V du circuit de réception 21 qui déclenche le temporisateur $271_2$ à travers un inverseur $273_1$. On rappelle que le temporisateur $271_2$ établit trois temporisations $t_{21}$, $t_{22}$ et $t_{23}$ respectivement égales à 6, 13 et 26 secondes à l'expiration desquelles les sorties $S_{21}$, $S_{22}$ et $S_{23}$ sont respectivement à l'état «1». Puis très rapidement, l'alimentation générale 104 de l'équipement passif 1 alimente tous les circuits dans celui-ci, et la fréquence de veille $F_1$ est transmise normalement vers l'équipement actif bien avant la fin de la temporisation $t_{23} = 26s$. La borne 21V reliée à une borne de remise à zéro $RZ_2$ du temporisateur $271_2$ est alors à «1» et remet à zéro le temporisateur $271_2$. L'équipement passif est alors prêt à établir une communication et l'équipement actif est prêt à contrôler cette communication.

Un défaut de réception de la fréquence $F_1$ au-delà de $t_{23} = 26s$ succédant à l'alimentation de la ligne téléphonique met à «1» une entrée d'anomalie $28A_1$ du circuit de mémorisation 28 via une porte ET $274_1$ ayant deux entrées reliées à la sortie $S_{23}$ du temporisateur $271_2$, et à la sortie de l'inverseur $273_1$ et l'entrée $D_2$ du temporisateur $271_2$. La sortie de la porte $274_1$ est également reliée à une base du transistor $272_1$ à travers un inverseur $273_2$ et bloque le transistor $272_1$ qui arrête l'alimentation de l'équipement passif et le met en mode hors service. La sortie $28A_1$ indique ainsi un défaut d'alimentation de l'équipement passif dû par exemple à une défaillance des moyens de transmission et de réception de la fréquence $F_1$ incluant notamment les circuits $150_1$, $152_1$, $211_1$, $212_1$ et $213_1$ (Figs. 3 et 5) ou un affaiblissement anormal, ou à une coupure de ligne entre les bornes A, B et $A_1$, $B_1$. Cette anomalie est signalée à l'ordinateur de gestion OG. La mise en service de l'équipement passif après réparation de celui-ci est effectuée automatiquement par l'équipement actif dès la réception de la fréquence $F_1$.

B) Phase de décrochage

Dans l'équipement passif 1, l'introduction d'une carte prépayée ayant un avoir dans le mécanisme 13 ou l'introduction d'au moins une pièce de monnaie dans le mécanisme 11 met à «1» la sortie 14P/C du circuit de commutation 14 (Fig. 2C), ce qui simule le décrochage de l'usager demandeur par ouverture de la porte ET 157 (Fig. 3) déclenchant la transmission des fréquences $F_2$ à $F_5$ vers l'équipement actif. La sortie 21DEC du circuit de réception 21 passe à l'état «1» et débloque un transistor $272_2$ à travers une diode $275_1$. Le collecteur du transistor $272_2$ active, via une borne de sortie 27AC, le relais d'appel et de coupure 2053 qui ferme le contact 2052. La ligne téléphonique du côté du commutateur est bouclée, ce qui simule le décrochage comme dans un poste téléphonique classique ayant des crochets commutateurs. Si l'une des fréquences $F_2$ à $F_5$ n'est pas reçue dans le circuit 21, aucune opération de décrochage n'est détectée par le commutateur CT, la porte $215_7$ demeurant fermée. Cependant, la réception de l'une des quatre fréquences $F_2$ à $F_5$ suffit à mettre à «1» la sortie 21P/C de la porte OU 216 dans le circuit 21 pour déclencher le temporisateur $271_1$.

Dans tous les cas évoqués précédemment, le temporisateur $271_1$ établit une temporisation de $t_1$ = 130s qui est allouée à des opérations de numérotation, d'appel, de réponse du demandé et de réception d'un premier ordre d'encaissement à la fréquence $F_6$ par l'équipement passif 1 qui succède à la première impulsion de taxe délivrée par le commutateur CT vers l'équipement actif 2. A la fin de la temporisation $t_1$ = 130s, une sortie $S_1$ du temporisateur $271_1$ passe de «0» à «1», ce qui déclenche le temporisateur $271_3$ à travers une porte OU $276_1$ à quatre entrées. La sortie $S_3$ du temporisateur $271_3$ reliée à la sortie $RZ_3$ de celui-ci bloque alors le transistor $272_1$ à travers une diode $275_2$ pendant $t_3$ = 6s. L'alimentation de l'équipement passif 1 est alors coupée pendant $t_3$ grâce à la désactivation du relais 2033. Une telle coupure d'alimentation provoque le remboursement de pièces présentes encore dans les glissières de stockage du mécanisme 11 et/ou l'expulsion de la carte du mécanisme 13, en fin d'une communication téléphonique.

D'autre part, à la fin de la temporisation $t_1$ = 130s, la sortie $S_1$ du temporisateur $271_1$ met à «1» des entrées de trois portes ET $274_2$ à $274_4$ à deux entrées chacune. Des autres entrées des portes ET $274_2$ et $274_3$ sont respectivement reliées à la sortie 21DEC du circuit de réception 21 directement et à travers un inverseur $273_3$. Ainsi, si au moins l'une des fréquences $F_2$ à $F_5$ n'est pas reçues après $t_1$ = 130s succédant à la phase de décrochage traduite par la transmission d'au moins l'une des fréquences $F_2$ à $F_5$, une entrée d'anomalie $28A_2$ du circuit de mémorisation 28 reliée à la sortie de la porte ET $274_3$ passe à l'état «1». Ceci indique une anomalie dans le fonctionnement de l'équipement passif ou l'équipement actif, telle qu'une défaillance de l'un des moyens de transmission ou de réception de l'une ou de plusieurs fréquences $F_2$ à $F_5$, ou un affaiblissement anormal de la ligne entre les bornes AB et $A_1B_1$.

Dans le cas normal où toutes les fréquences $F_2$ à $F_5$ sont reçues à la fin de la temporisation $t_1$ = 130s, la fin de la communication est marquée, comme déjà dit, par une coupure brève d'alimentation du passif pendant $t_3$ = 6s et la borne $28A_2$ demeure à «0». Dans ce cas, une entrée d'horloge $H_7$ d'un compteur 277 reliée à une sortie de la porte ET $274_2$ passe à «1» et incrémente d'une unité le compteur 277. Une entrée de remise à zéro $RZ_7$ du compteur 277 est reliée à la sortie d'inversion de batterie 251B du circuit 25 et remet à zéro le compteur 277 en réponse à chaque inversion de batterie émanant du commutateur CT correspondant au décrochage de l'abonné demandé. Le compteur 277 est composé de trois étages binaires et a une sortie $S_7$ constituant une troisième entrée d'anomalie $28A_3$ du circuit de mémorisation 28, reliée à la base du transistor $272_1$ à travers un inverseur $273_7$. Ainsi, lorsqu'au moins huit demandes consécutives de communication sont inopérantes et dues notamment à un incident de numérotation au clavier CD ou autre incident pendant l'établissement de la communication, tel qu'absence d'impulsion de taxe ou défaillance du commutateur CT, le compte du compteur 277 demeure bloqué à huit et l'équipement passif est mis en mode hors service par blocage du transistor $272_1$ et désactivation du relais d'alimentation 2033.

Dans ce dernier cas, le rétablissement de l'alimentation de l'équipement passif 1 et la remise à zéro du compteur 277 sont commandés manuellement par un opérateur au moyen de l'ordinateur de gestion OG, celui-ci ayant reçu la signalisation d'anomalie via la borne $28A_3$, comme on le verra dans la suite. L'opérateur frappe sur un clavier de l'ordinateur OG l'adresse de l'équipement actif 2 et un code «rétablissement» qui est transmis au circuit de mémorisation 28 et traduit par un «1» à une sortie 28R du circuit 28. La sortie 28R est reliée à la base du transistor $272_1$ à travers un inverseur $273_5$ et à l'entrée $RZ_7$ du compteur 277 à travers une bascule monostable $278_1$. Dans ce cas, le déclenchement de la bascule monostable $278_1$ par un front montant remet à zéro le compteur 277 dont la sortie $S_7$ débloque le transistor $272_1$ pour alimenter de nouveau l'équipement passif 1.

C) Numérotation et sélection

La détection des quatre fréquences $F_2$ à $F_5$ traduite par un «1» à la borne 21DEC, suite à l'introduction d'une pièce ou d'une carte, ferme le contact d'appel et de coupure 2052, comme déjà dit. En réponse à cette opération de «décrochage», le commutateur CT transmet la tonalité d'invitation à numéroter à l'équipement passif 1.

Lorsque le clavier à multifréquence CMF est utilisé, les signaux de numérotation à multifréquence transitent directement à travers le quadripôle 20 sans intervention des autres circuits de l'équipement actif.

Lorsque le clavier décimal CD est utilisé, des impulsions de numérotation de 77ms modulent la combinaison des fréquences $F_2$ à $F_5$. Les impulsions et les coupures entre ces impulsions débloquent et bloquent alternativement le transistor $272_2$ et sont reproduites vers le commutateur téléphonique CT par des fermetures et ouvertures du contact d'appel et de coupure 2052 et donc des bouclages et des débouclages de la ligne. Des déclenchements saccadés du temporisateur $271_1$ ne cesseront que lorsque la transmission des fréquences $F_2$ à $F_5$ sera normalement arrêtée par l'équipement passif en réponse à la première impulsion d'ordre d'encaissement modulant la fréquence $F_6$, arrêt effectué par la bascule 158 (Fig. 3). Des coupures de 33ms entre les impulsions de numérotation ne permettent pas d'arrêter le déroulement de la temporisation $t_1$ = 130 secondes. Le temporisateur $271_1$ ne sera arrêté que par une interruption supérieure à 102ms du train de numérotation $F_2$ à $F_5$ afin de neutraliser lors du décompte des 130 secondes les coupures de 33ms de la numérotation. Ce résultat est obtenu grâce au temporisateur $271_4$ à temporisation $t_4$=102ms qui est déclenché par des coupures des fréquen-

ces $F_2$ à $F_5$ via la borne 21DEC, un inverseur $273_6$ et son entrée $D_4$, qui est remis à zéro par rétablissement des fréquences $F_2$ à $F_5$ via la borne 21DEC et son entrée $RZ_4$ et enfin qui commande à l'issue des 102ms, via sa sortie S4, une porte OU $276_2$ à deux entrées et son entrée $RZ_1$, l'arrêt et la remise à zéro du temporisateur $271_1$. On rappelle que les 130 secondes correspondent à une durée maximum s'écoulant entre l'instant de «décrochage» par l'usager et l'instant de mise en relation de l'usager avec son correspondant. Il convient de préciser que le temporisateur $271_1$ n'est pas ré-enclenchable par des coupures de numérotation reçues à l'entrée $D_1$.

Si l'usager demandeur n'actionne pas le bouton de remboursement 115 (Fig. 2A), un incident de numérotation, une occupation de la ligne téléphonique de l'abonné demandé, un défaut de décrochage de l'abonné demandé ou une défaillance de taxation dans le commutateur CT conduit à la situation déjà décrite, savoir l'expiration de la temporisation $t_1$ = 130s, la libération de la ligne téléphonique, le remboursement de monnaie ou l'éjection de carte par coupure de l'alimentation pendant $t_3$ = 6s et l'incrémentation d'une unité dans le compteur 277.

## D) Repose du demandé

Le décrochage de l'abonné demandé provoque une première inversion de batterie et la mise à 0 et −48 volts des bornes de ligne $A_0$ et $B_0$ du côté du commutateur CT. La première inversion de batterie se traduit par un «1» à la sortie 251B du circuit de détection d'inversion et de coupure de tension 25 (Fig. 7). La borne 251B est reliée à la base du transistor $272_2$ à travers une diode $275_3$ et confirme donc le déblocage du transistor $275_2$. L'activation du relais 2053 est donc assurée lorsque la transmission des fréquences $F_2$ à $F_5$ cesse et la borne 21DEC revient à «0», après la réception d'un premier ordre d'encaissement par le passif et jusqu'à la fin de la communication. Ainsi, la première inversion de batterie intervient avant la coupure des fréquences $F_2$ à $F_5$.

La première inversion de batterie commande, comme déjà dit, la remise à zéro du compteur 277. Elle est sans effet sur le temporisateur $271_3$ destiné à une coupure d'alimentation du passif, grâce à une bascule monostable $278_2$ déclenchable sur des fronts descendants et donc en réponse à une seconde inversion de batterie signalant la fin de la communication. La bascule $278_2$ a une entrée reliée à la borne 251B et une sortie reliée à l'entrée $D_3$ du temporisateur $271_3$ à travers la porte OU $276_1$. En outre, la première inversion de batterie est accompagnée d'une première impulsion de taxe à 12 kHz transmise par le commutateur CT et détectée par le circuit de détection 24 dont la sortie 24IT transmet une impulsion de taxe calibrée.

En référence au circuit de contrôle de taxation 26 montré à la Fig. 8, la borne 24IT est reliée à des entrées de commande de 12 portes ET $260_1$ à $260_{12}$, et à une entrée d'horloge d'un registre de débit de taxe de base de carte 26DTB. Les autres entrées de portes ET $260_1$ à $260_{12}$ sont reliées par un bus à douze fils 33TB à la mémoire centrale 33 qui délivre le coût d'une taxe de base à trois chiffres et en centimes, chaque chiffre étant codé par un mot à 4 bits. Des sorties des portes $260_1$ à $260_{12}$ sont reliées à douze entrées du registre de débit de monnaie 26DM. Ainsi, en réponse à une impulsion de taxe calibrée à la borne 24IT, le registre 26DM est incrémenté du coût d'une taxe de base et le registre 26DTB est incrémenté d'une unité. Les comptes dans les registres 26DM et 26DTB sont en permanence comparés avec des comptes d'un registre de crédit de monnaie 26CRM et d'un registre de crédit de taxe de base de carte 26CRTB au moyen d'un comparateur de monnaie 26CM et d'un comparateur de taxe de base 26CTB, respectivement. Le registre 26CRM a des entrées reliées aux sorties $21P_1$ à $21P_4$ du circuit de réception 21, et additionne dans un compte de crédit de monnaie la valeur d'une pièce encaissée chaque fois que la borne correspondante $21P_1$ à $21P_4$ passe à «1». De même, le registre 26CRTB est relié à la sortie 21TB du circuit de réception 21 et est incrémenté d'une unité en réponse à un «1» à la sortie 21TB correspondant à l'oblitération d'une taxe de base dans une carte prépayée. Une sortie du comparateur 26CM passe à «1» chaque fois que le solde de monnaie égal à la différence des comptes dans les registres 26CRM et 26DM est négatif. Une sortie du comparateur 26CTB passe à «1» chaque fois que le solde de taxe de base égal à la différence des comptes dans les registres 26CRTB et 26DTB est négatif.

Les quatre registres 26DM, 26DTB, 26CRM et 26CRTB sont destinés à la gestion d'une seule communication téléphonique et sont mis à zéro en réponse à des fronts montant et descendant à la borne 251B correspondant aux première et seconde inversions de batterie délimitant la phase de conversation de la communication. Cette remise à zéro est effectuée au moyen d'un inverseur 261 interconnecté à la borne 251B et des entrées de remise à zéro RZ des registres 26DM, 26DTB, 26CRM et 26CRTB à travers des diodes 262 respectivement.

En réponse à la première impulsion de taxe succédant à la première inversion de batterie, les soldes de monnaie et de taxe de base indiqués par les comparateurs 26CM et 26CTB deviennent négatifs, ce qui commande une transmission d'un ordre d'encaissement à la fréquence $F_6$. A cet effet, des sorties des comparateurs 26CM et 26CTB sont reliées aux deux entrées d'une porte ET 263 ayant une autre entrée reliée à la borne 251B et ayant une sortie reliée à l'entrée 220E du circuit de transmission 22. Grâce à la porte 263, aucune transmission d'ordre d'encaissement n'est effectuée avant le décrochage de l'abonné demandé signalé par la première inversion de batterie.

## E) Crédit épuisé

E1) Lorsqu'au moins une pièce est présente dans les glissières de stockage du mécanisme 11, la pièce ayant la plus petite valeur est encaissée en réponse au premier ordre d'encaissement, ce qui incrémente le registre de crédit de monnaie 26CRM de la valeur de la pièce encaissée. Pour un coût de taxe de base par exemple de 0,75 FF actuellement en France, et selon la valeur de la dernière pièce introduite ou encaissée avant la fin de la communication, outre la durée $t_{21}$ = 6s accordée pour le versement d'une pièce avec risque de réception de tonalité «crédit épuisé», l'usager bénéficie d'une durée de communication gratuite correspondant à un coût de $(2 \times 0,75)$ $-1$ = 0,50 FF pour une pièce de $P_1$=1 FF, de $(3 \times 0,75)$ $-2$ = 0,25 FF pour une pièce $P_2$=2 FF, de $(7 \times 0,75)$ $-5$ = 0,25 FF pour une pièce $P_4$=5 FF, et de $(14 \times 0,75)$ $-10$ = 0,50 FF pour une pièce $P_4$=10 FF. Cependant, une telle perte pour l'administration importe peu car elle est compensée par ailleurs par une perception minimale de 1 FF en début de communication et par des crédits disponibles restant en fin de communication. Cette particularité, qui correspond à une taxation marquée à la fin de la période due, a un effet inverse et joue alors à l'avantage de l'exploitant si la taxation précède la période due. Cette situation n'est pas le propre de ce système et existe actuellement dans les systèmes en service. Elle résulte du hasard d'avoir une taxe de base qui soit un diviseur commun des valeurs des différentes pièces de monnaie en usage. Seule la carte prépayée permet un décompte mieux ajusté.

En réponse à la première pièce validée et encaissée, le registre 26CRM est incrémenté de la valeur de cette pièce, le solde de monnaie devient positif et la sortie du comparateur 26CM passe à l'état «0» pour fermer la porte ET 263, ce qui arrête la transmission de la fréquence $F_6$. De même, si une carte prépayée est présente dans le mécanisme 13, la réception de la fréquence $F_6$ dans l'équipement passif entraîne la transmission d'une impulsion signifiant une oblitération d'une taxe de base dans la carte et la mise à «1» de la borne 21TB, ce qui crédite d'une unité le registre 26CRTB et arrête la transmission de la fréquence $F_6$. Ainsi, dès que l'un des comparateurs 26CM et 26CTB détecte un solde positif, la transmission de la fréquence $F_6$ est arrêtée, et celle-ci sera à nouveau déclenchée dès que les deux sorties des comparateurs 26CM et 26CTB sont à «1», c'est-à-dire en réponse au passage positif ou nul à négatif des deux soldes de monnaie et de taxe de base.

On rappelle que lorsque des pièces sont présentes dans les glissières de stockage du mécanisme 11 ou qu'une carte prépayée disposant d'un avoir est engagée dans le mécanisme 13, l'ordre d'encaissement signalé par la fréquence $F_6$ est transmis à l'équipement passif dès que les comparateurs 26CM et 26CTB détectent un solde négatif. L'ordre d'encaissement reçu déclenche normalement à travers le circuit de commutation 14 (Fig. 2) l'activation de l'un des relais $113_1$ à $113_4$ pour encaisser une pièce ou la mise à l'état «1» de l'entrée 13E pour l'oblitération d'une taxe de base sur la carte. Cette opération est indiquée par la mise à «1» de l'une des bornes $14P_1$ à $14P_4$ ou de la borne 13TB.

Si pour une raison quelconque, l'encaissement d'une pièce n'est pas effectuée, dû par exemple au relais correspondant défectueux $113_1$ à $113_4$, ou l'oblitération d'une taxe de base sur la carte n'est pas effectuée, le solde demeure négatif, les fréquences $F_1$ et $F_6$ sont transmises et le temporisateur $271_2$ n'est pas déclenché. Dans ce cas, toutes les bornes $21P_1$ à $21P_4$ et 21TB demeurent à «0», et la communication peut être poursuivie gratuitement. Pour remédier à cet inconvénient, le moniteur 27 comprend une porte ET $274_5$ ayant deux entrées reliées à la borne 21V et à la sortie de la porte 263 et ayant une sortie reliée à travers un inverseur $273_6$ à la borne de remise à zéro $RZ_5$ et directement à la borne de déclenchement $D_5$ du temporisateur $271_5$ respectivement. La sortie $S_5$ du temporisateur $271_5$ est reliée à l'entrée $D_3$ du temporisateur $271_3$ à travers la porte OU $276_1$ et à une entrée d'anomalie $28A_4$ du circuit de mémorisation 28.

Dès que l'ordre d'encaissement est transmis par la porte 263 vers l'équipement passif, la porte $274_5$ déclenche le temporisateur $271_5$, la fréquence $F_1$ étant normalement transmise lorsqu'il y a encore une pièce ou une carte avec un avoir dans l'équipement passif. Si avant la fin de la temporisation $t_5$ = 6s établie par le temporisateur $271_5$, l'une des bornes $21P_1$ à $21P_4$ et 21TB est passée à «1», l'un des deux soldes est de nouveau positif et la transmission de la fréquence $F_6$ est arrêtée, le temporisateur $271_5$ revenant à «0» jusqu'au prochain ordre d'encaissement. La communication est poursuivie jusqu'à épuisement des pièces ou de l'avoir dans la carte ou jusqu'au raccrochage de l'usager demandeur ou de l'abonné demandé. Pendant la communication, un comparateur 26MMAX inclus dans le circuit 26 montré à la Fig. 8, compare en permanence le crédit en monnaie sortant du registre 26CRM avec le coût maximal d'une communication délivré par un bus de sortie 33CM de la mémoire centrale 33 (Fig. 4). Lorsqu'une communication est anormalement longue, une sortie du comparateur 26MMAX met à «1» une entrée d'anomalie $28A_5$ du circuit de mémorisation 28. De même, pendant la communication, un comparateur 26TBMAX inclus dans le circuit 26 compare en permanence le crédit en taxe de base sortant du registre 26CRTB avec le nombre de taxes de base maximal dans une carte prépayée, délivré par un bus de sortie 33TBM de la mémoire 33. Une sortie du comparateur 26TBMAX met à «1» une entrée d'anomalie $28A_6$ du circuit de mémorisation 28 lorsque la communication avec une carte est anormalement trop longue. Dans ces deux cas, l'anomalie «communication trop longue» est transmise pour information à l'ordinateur de gestion OG.

Par contre, si le solde est encore négatif et l'ordre d'encaissement est encore transmis après la temporisation de $t_5$ = 6s, la sortie $S_5$ du temporisateur $271_5$ passe à «1» et commande le déclenchement du temporisateur $271_3$ et donc la coupure d'alimentation de l'équipement passif et la fin de la communication, avec remboursement de la pièce ou éjection de la carte. En outre, la borne

$28A_4$ est à «1», ce qui signale une anomalie écrite dans le circuit de mémorisation 28. Cette anomalie est transmise à l'ordinateur de gestion OG via le processeur 3 qui, en retour, reçoit un signal d'accusé de réception. Il est à noter qu'il n'est pas prévu volontairement une mise en mode hors service de l'équipement passif pour ce type d'anomalie. En effet, cette anomalie résulte,

ou bien d'une défaillance technique qui vient juste de se produire, et dans ce cas, la ou les communications suivantes donneront lieu à des anomalies caractérisées et signalées par des autres entrées d'anomalies $28A_1$ à $28A_3$ et $28A_8$ par exemple,

ou bien d'un blocage de glissière de stockage au niveau du dispositif d'aiguillage du mécanisme 11, la fin de la communication et le remboursement étant susceptibles de retrouver un état de fonctionnement normal,

ou bien d'une manœuvre frauduleuse, la mise en échec de cette tentative par rupture de la communication paraissant suffisante et ne justifiant pas une mise en mode hors service de l'équipement passif.

Plusieurs anomalies indiquées par la borne $28A_4$ à l'ordinateur de gestion, conduisant en principe à une série d'établissements de communication inopérants, analogues aux anomalies signalées à la borne $28A_3$, invitent à vérifier le bon fonctionnement du mécanisme d'encaissement à pièces 11 relativement aux glissières et aux détecteurs de niveau $117_1$ à $117_3$ et le bon fonctionnement du mécanisme d'encaissement à carte 13 au niveau du circuit d'oblitération et de contrôle de carte prépayée.

Par ailleurs, comme déjà dit, une impulsion de taxe délivrée par le commutateur CT incrémente simultanément le registre de débit de monnaie 26DM avec un coût en centimes d'une taxe de base et le registre de débit de taxe de base 26DTB avec une unité de taxation. L'état négatif des deux soldes en monnaie et en taxe de base pour une phase de conversation établie après la première inversion de batterie provoquent la transmission d'un ordre d'encaissement vers l'équipement passif, via la porte ET 263.

Si l'encaissement est effectué en monnaie, l'une des bornes $21P_1$ à $21P_4$ crédite le compte du registre 26CRM pour un montant égal à la valeur de la pièce encaissée. De plus, l'une des bornes, $21P_1$ à $21P_4$, via une porte OU 264 et une diode 265, remet à zéro les registres de débit et crédit de taxe de base 26DTB et 26CRTB. Le solde en «monnaie» est alors positif et le solde en taxe de base est nul, ce qui arrête la transmission de l'ordre d'encaissement. Par contre, au moment où l'ordre d'encaissement est envoyé, le solde en taxe de base est négatif d'une unité et le solde en monnaie est négatif pour un montant inférieur au coût d'une taxe de base.

L'usager, au lieu de poursuivre le paiement en monnaie, change de mode de paiement et utilise une carte prépayée. Des tests de vérification sont effectués par le mécanisme d'encaissement à carte 13. Les mécanismes 11 et 13 sont commutés dans le circuit de commutation 14 de l'équipement passif, et une taxe de base est oblitérée sur la carte, ce qui est signalé par un «1» sur la borne 21TB du circuit de réception de l'équipement actif. Le registre de crédit de taxe de base 21CRTB est alors incrémenté d'une unité et le solde en taxe de base devient nul. La borne 21TB remet à zéro les registres de crédit de monnaie et de débit de monnaie 26CRM et 26DM via une diode 266. Le solde en monnaie devient alors nul. La transmission de l'ordre d'encaissement est arrêtée.

La communication est poursuivie en utilisant le solde de la taxe de base. Si l'usager change à nouveau de mode de paiement, soit en retirant la carte, soit en raison de l'épuisement de l'avoir de la carte, impliquant automatiquement le mode de paiement en monnaie selon le fonctionnement déjà décrit du circuit de commutation 14, l'usager utilise de la monnaie. Tant que le solde antérieur de taxe de base n'est pas négatif, la communication est poursuivie sans qu'un ordre d'encaissement ne soit transmis.

Ainsi, au moment où l'usager décide de changer de mode de paiement, le crédit qui lui reste n'est pas perdu. Dès l'instant où ce crédit est épuisé, l'encaissement est effectué avec l'autre mode de paiement, le crédit correspondant aux pièces nouvellement introduites est inscrit dans le registre 26CRM, tandis que les registres de débit et de crédit de taxe de base 26DTB et 26CRTB sont mis à zéro après encaissement. Ces opérations n'agissent pas sur un registre totalisateur de taxe de base de carte 26TTB et un registre totalisateur de monnaie 26TM dans le circuit 26 ayant des entrées reliées respectivement à la borne 21TB et aux bornes $21P_1$ à $21P_4$. Les registres totalisateurs additionnent jusqu'au prochain relevage de la caissette remettant à zéro les registres totalisateurs, les chiffres inscrits dans les registres de crédit 26CRTB et 26CRM, au fur et à mesure des communications et des différents modes de paiement.

Ainsi, le changement du mode de paiement en cours de communication peut être fait autant de fois qu'on le veut et dans n'importe quel sens. Il peut être fait à tout moment sans que, d'une part, le crédit restant disponible ne soit perdu pour l'usager et sans que, d'autre part, la dette inscrite dans l'ancien compte ne soit perdue à l'occasion de cette mutation de compte. La dette se retrouve avec exactitude dans le compte du nouveau mode de paiement. Ce n'est qu'après exécution d'un ordre d'encaissement que les registres crédit et débit relatifs au mode antérieur de paiement sont mis à zéro.

Le registre de débit pour le mode de paiement non utilisé est incrémenté d'une unité à la réception de chaque impulsion de taxation et les registres de débit et de crédit pour le mode de paiement non utilisé sont mis à zéro lors de chaque encaissement effectué selon le mode de paiement utilisé. De cette façon, ils sont toujours prêts pour un changement de mode de paiement.

Les registres de crédit et de débit en monnaie, 26CRB et 26DM, et les registres de crédit et de débit de taxe de base 26CRTB et 26DTB tiennent et cumulent pour le mode de paiement qui les concerne respectivement, le compte de la seule communication en cours et pour un intervalle de temps correspondant à un mode de paiement sans changement.

E2) Dans le cas où l'équipement passif 1 reçoit un ordre d'encaissement lorsque les glissières de stockage ne contiennent plus de pièces ou lorsque la carte prépayée introduite n'a plus d'avoir de taxe de base, la sortie 14P/C du circuit de commutation 14 est à «0» et la sortie 160 du circuit de réception 16 est à «1», en référence à la Fig. 3. La sortie de la porte $151_1$ commande l'arrêt de la transmission de la fréquence de veille $F_1$, ce qui est indiqué dans l'équipement actif 2, par un «0» à la sortie 21V du circuit de réception 21.

Comme montré à la Fig. 6B, la borne 21V est reliée à l'entrée de déclenchement $D_2$ du temporisateur $271_2$ à travers l'inverseur $273_1$ et à l'entrée de remise à zéro $RZ_2$ du temporisateur $271_2$, mais également à travers l'inverseur $273_1$ à des entrées de la porte ET $274_1$ et d'une porte ET $274_6$ à deux entrées. Une autre entrée de la porte $274_6$ ainsi qu'une entrée d'une porte ET $274_7$ à deux entrées et une entrée d'une porte ET $274_4$ à deux entrées sont reliées à la sortie 220E de la porte ET 263 dans le circuit de contrôle de taxation 26. D'autres entrées des portes $274_7$ et $274_4$ sont respectivement reliées aux sorties $S_{22}$ et $S_{21}$ du temporisateur $271_2$.

Lorsque la borne 21V passe de «1» à «0», en réponse à un ordre d'encaissement sans présence de pièce ou de carte, ou en présence d'une carte avec un avoir nul, le temporisateur $271_2$ est déclenché. Simultanément, une sortie de la porte $274_6$ passe à «1», lune des entrées de cette porte reliée à la sortie de la porte ET 263 étant à «1» du fait d'un solde négatif. La sortie de la porte $274_6$ et la borne 27TON sont reliées à une base d'un transistor $272_3$ respectivement à travers une diode $275_4$ et une bascule monostable $278_3$ autodéclenchable par période de 300 ms et à travers une diode $275_5$. Les impulsions de 300 ms délivrées par la bascule $278_3$ ainsi déclenchée modulent la fréquence d'horloge de 1250 Hz et sont appliquées aux transformateurs 206 et 207 à travers un transformateur de découplage 279 pour transmettre la tonalité «crédit épuisé» à l'équipement passif 1 et la tonalité «rester en attente» à l'abonné demandé via le commutateur CT.

A la fin de la temporisation $t_{21}$ = 6s succédant au déclenchement du temporisateur $271_2$, la sortie $S_{21}$ ouvre la porte $274_4$ dont une sortie bloque, via un inverseur $273_4$, un transistor $272_4$ ayant un collecteur relié à la borne 2021 du circuit de blocage phonique 202. Les diodes 2020 interrompent alors momentanément des signaux de parole échangés entre l'usager et l'abonné demandé.

Puis, après une durée de 7s, c'est-à-dire à l'issue d'une temporisation de $t_{22}$ = 13s succédant au déclenchement du temporisateur $271_2$, la sortie $S_{22}$ du temporisateur $271_2$ passe à «1» si le solde demeure toujours négatif et donc si aucune pièce ou carte ayant un avoir n'est introduite dans l'équipement passif. Une sortie de la porte ET $274_7$ étant reliée à l'entrée de déclenchement $D_3$ du temporisateur $271_3$ à travers la porte OU $276_1$, la sortie $S_3$ du temporisateur $271_3$ passe à «0» pendant $t_3$ = 6s, ce qui désactive le relais d'alimentation 2033 et par suite, l'alimentation de l'équipement passif est coupée, ce qui termine la communication téléphonique.

Normalement, la coupure d'alimentation de l'équipement passif est réalisée entre $t_{22}$ = 13s et $t_{22}+t_3$ = 19s succédant au déclenchement du temporisateur $271_2$ qui ne revient à zéro qu'à l'issue de la temporisation $t_{22}+t_3$ et donc du rétablissement de l'alimentation de l'équipement passif; la fréquence de veille $F_1$ est de nouveau transmise, le temporisateur $271_2$ revient à zéro, et les équipements sont en phase de repos.

Par contre, si la fréquence $F_1$ n'est pas transmise après la temporisation $t_{22}+t_3$ = 19s à la suite d'un incident survenu pendant cette temporisation, tel que coupure en ligne ou défaillance des moyens $150_1$ pour transmettre la fréquence $F_1$, le temporisateur $271_2$ poursuit la temporisation, et au terme de $t_{23}$ = 26s, bloque le transistor $272_1$, ce qui coupe définitivement l'alimentation de l'équipement passif qui est alors en mode hors service. La sortie $28A_1$ signale alors une anomalie. Un rétablissement de l'alimentation sera alors effectué à partir de l'ordinateur de gestion OG, et application d'une impulsion brève à l'entrée 28R, comme déjà dit.

Cependant, en réponse à la tonalité «crédit épuisé» pendant la temporisation $t_{22}-t_{21}$ = 7s, si l'usager introduit une ou des pièces ou une carte ayant un avoir non nul, et la borne 21V revient à «1», ce qui remet à zéro le temporisateur $271_2$, le transistor $272_4$ débloque pour rétablir un échange de signaux de parole. La validation de la pièce encaissée ou le débit d'une taxe de base de la carte incrémente le registre de crédit 26CRM ou 26CRTB et le solde devient de nouveau positif, ce qui ferme la porte 263 et arrête la transmission de la fréquence $F_6$ vers l'équipement passif.

F) Raccrochage de l'abonné demandé

Le raccrochage de l'abonné demandé provoque une seconde inversion de batterie détectée par le circuit de détection d'inversion et de coupure de tension 25, une réception de tonalité d'occupation par l'usager demandeur et une déconnexion de liaisons correspondantes notamment dans le commutateur CT. En réponse à la seconde inversion de batterie, la borne de sortie 25IB du circuit 25 passe de l'état «1» à l'état «0».

La bascule monostable $278_2$ dans le moniteur 27 détecte un front descendant d'impulsion appliquée par la borne 25IB et déclenche le temporisateur $271_3$ à travers la porte OU $276_1$. La sortie $S_3$ du temporisateur $271_3$ bloque le transistor $272_1$ qui établit une coupure d'alimentation de l'équipement passif pendant $t_3$ = 6s. Des pièces éventuellement présentes dans des glissières de stockage du mécanisme 11 sont remboursées et/ou une carte éventuellement présente dans le mécanisme 13 est éjectée vers l'extérieur. A l'issue

de la temporisation $t_3$, les équipements passif et actif sont en phase de repos.

## G) «Raccrochage» de l'usager demandeur

Comme déjà dit, la fin d'une communication est établie normalement, soit par l'absence de pièces dans le mécanisme 11 et l'absence d'une carte prépayée dans le mécanisme 13, ou la présence d'une carte ayant un avoir nul dans le mécanisme 13, soit par le raccrochage de l'usager demandeur.

Le raccrochage de l'usager demandeur dans l'équipement passif est normalement commandé en appuyant sur le bouton 115 (Fig. 2A). Ceci provoque le remboursement de pièces et/ou l'éjection de la carte, résultant de la situation «Crédit épuisé» et ordre d'encaissement reçu. La phase précédemment décrite E2 est alors accomplie pour aboutir soit à la phase de repos A, soit à la mise hors service de l'équipement actif. La phase E2 est écourtée si l'abonné demandé effectue un raccrochage avant l'expiration de la temporisation $t_{22}$ = 13s du temporisateur $271_2$ déclenché par l'arrêt de la transmission de la fréquence $F_1$. Dans ce dernier cas, la phase précédente F est établie.

## H) Occupation de l'abonné demandé ou incident de sélection

Une telle situation a été décrite en référence à la fin de la phase de numérotation et sélection C.

## I) Absence de réponse de l'abonné demandé; pièces ou carte introduites avec absence de numérotation

En cas d'absence de décrochage de l'abonné demandé, si l'usager demandeur appuie sur le bouton 115 (Fig. 2A), avant la fin de la temporisation $t_1$ = 130s du temporisateur $271_1$ déclenchée par l'introduction d'une pièce ou d'une carte avec un avoir non nul, la phase G est accomplie. Par contre, si la temporisation $t_1$ = 130s expire après l'introduction d'une pièce ou d'une carte avec un avoir, précédant ou non une phase de numérotation inférieure à $t_1$ sans décrochage de l'abonné demandé, le compteur 277 est incrémenté d'une unité grâce aux sorties $S_1$ du temporisateur $271_1$ et 21DEC de la porte $215_7$ à l'état «1». Le compteur 277 signalera une mise hors service du poste téléphonique public après huit telles sélections inopérantes consécutives, via la borne $28A_3$. Relevage de caissette; Effraction de caissette

Dans l'équipement passif 1, une ouverture du compartiment de caissette 110 ouvrant le contact 117 ou un retrait de la caissette du compartiment 111 ouvrant le contact 118 commande une transmission des fréquences $F_3$ et $F_5$ par l'équipement passif (Figs. 2 et 3), en toute circonstance normale ou anormale.

Dans l'équipement actif, la détection d'au moins l'une des deux fréquences $F_3$ et $F_5$ par la porte OU 216 (Fig. 5) provoque le déclenchement du temporisateur $271_1$ dans le moniteur 27. Les deux fréquences $F_3$ et $F_5$ sont également détectées par la porte ET $215_6$ (Fig. 5) ayant une sortie reliée à une autre entrée de la porte ET $274_4$ dans le moniteur. L'ouverture de la porte $215_6$

commande également un transfert d'informations contenues dans les registres du circuit de mémorisation 28 vers l'ordinateur de gestion, comme on le verra dans la suite.

En outre, dans l'équipement passif, l'ouverture de l'un des contacts 117 et 118 interrompt l'alimentation à 6 volts des mécanismes d'encaissement 11 et 13, comme montré à la Fig. 2A. Cette interruption d'alimentation ne permet pas d'établir une communication téléphonique par le releveur de caissette ou autre, lorsque le compartiment de caissette 110 est ouvert. En outre, les contenus des registres dans le circuit de contrôle de taxation 26 demeurent figés pendant une phase de transfert de leur contenu vers l'ordinateur de gestion.

L'ordinateur de gestion OG reçoit et enregistre une information «relevage de caissette» sous la forme de montants de monnaie et de taxe de base cumulés dans les registres totalisateurs 26TM et 26TTB depuis le dernier relevage et enregistrés dans le circuit de mémorisation 28 via des bornes 28TM et 28TTB (Fig. 8). Un programme établi dans une mémoire programmable annexée à l'ordinateur OG est consulté par l'ordinateur afin de lire une liste d'intervalles de temps de relevage pour des appareils publics qui peuvent être aussi étroits qu'on le veut. En détectant dans la liste l'adresse de l'appareil téléphonique qui a transmis une information «relevage de caissette» via la borne 21A et en comparant l'instant de relevage réel avec l'intervalle de temps de relevage associé dans la liste, l'ordinateur OG détermine si l'ouverture du compartiment de caissette via la borne 21A est normale ou frauduleuse.

En cas d'ouverture frauduleuse, l'ordinateur établit une procédure d'alerte pré-programmée afin de diffuser des alarmes. Simultanément, l'ordinateur OG, via le circuit de mémorisation 28 et la borne 28R, procède à la mise hors service de l'appareil téléphonique. Ces procédures sont précisées dans la suite.

Si le relevage de la caissette est considéré comme normal, l'inscription des montants de monnaie et de taxe de base à partir des registres 26TM et 26TTB est opérée dans le circuit de mémorisation 28 ainsi que la remise à zéro de ces registres via une borne de sortie 28RZ du circuit 28.

En situation normale, l'ouverture du compartiment 110 et le retrait de la caissette doit être effectuée en moins de $t_1$ = 130s et ne doit donner lieu à aucune anomalie à transmettre à l'ordinateur OG. Cependant, une anomalie peut être transmise à l'ordinateur OG lorsque la caissette est pleine. A cet effet, le circuit de contrôle de taxation 26 (Fig. 8) comprend un comparateur 26CTM comparant en permanence le montant total de pièces de monnaie encaissées depuis le dernier relevage, délivré par le bus de sortie du compteur 26TM et le montant maximal de caissette pleine délivré par un bus de sortie 33TM de la mémoire centrale 33 (Fig. 4). Une entrée d'anomalie $28A_7$ du circuit de mémorisation 28 est mise à «1» par une sortie du comparateur 26CTM lorsque la caissette dans l'appareil est pleine. Dans ce cas, l'ordinateur de gestion OG met en mode hors service l'appareil puis rétablit le fonctionnement, lors de la remise à zéro des registres 26TM et 26TTB, via la borne 28R.

Par contre, si à la suite du déclenchement du temporisateur $271_1$, la sortie $S_1$ de celui-ci passe à «1» à l'expiration de la temporisation $t_1$, et la sortie $28A_8$ de la porte ET $274_4$ passe à «1» et signale une anomalie de relevage. Dans ce cas, la mise hors service de l'équipement passif 1 est commandée automatiquement par l'ordinateur de gestion OG. On rappelle que dans les cas de mise hors service par l'ordinateur OG, la remise en service de l'appareil téléphonique public est néanmoins manuelle et doit être commandée depuis l'ordinateur OG par un opérateur selon un processus qui sera précisé plus loin, en référence à la mémoire 28, afin d'éviter un rétablissement automatique par manipulation des contacts 117 et 118.

Par ailleurs, il est à noter que toute transmission de l'une des fréquences $F_2$, $F_3$, $F_4$ et $F_5$ déclenche le temporisateur $271_1$ via la porte OU 216. Cette disposition assure un contrôle de temps systématique dans le traitement de toutes signalisations transmises par l'équipement passif 1. Ainsi, en cas d'anomalie technique, le déclenchement du temporisateur $271_1$ débouche sur un message de type «sélection inopérante» traduite par une incrémentation d'une unité du compteur 277. Huit incidents consécutifs de ce type conduisent à une signalisation effective par la borne $28A_3$ et à une mise en mode hors service de l'appareil téléphonique public.

Appareil téléphonique appelé par un autre appareil téléphonique public ou privé

Lorsque l'appareil téléphonique public est appelé pour établir une communication d'arrivée, l'équipement actif 2 reçoit un courant de sonnerie d'appel à 50 ou 25 Hz sous 80 volts à travers les bornes de ligne $A_0B_0$ du côté du commutateur CT. Pendant la durée de l'appel, le limiteur de tension $200_0$ arrête la transmission du courant d'appel, et une coupure de la tension de l'alimentation de batterie est détectée par le circuit de détection d'inversion et de coupure de tension 25 montrée à la Fig. 7. Comme déjà dit, une coupure de l'alimentation du côté du commutateur CT implique un passage de −24 volts à 0 volt à la borne 250 et donc un «1» à la borne de sortie 25AP du circuit 25.

Dans le moniteur 27 montré à la Fig. 6B, la borne 25AP est reliée à la base du transistor $272_3$ à travers un condensateur de dérivation 27C et une diode $275_6$. L'état «1» à la borne 25AP se traduit par un déblocage du transistor $272_3$ et donc une transmission d'une tonalité d'appel à 1250 Hz fournie par la borne 27TON, d'une part vers l'équipement passif 1 à travers les tranformateurs 279 et 206, et d'autre part vers l'abonné demandeur éloigné à travers les transformateurs 279 et 207. La tonalité d'appel est diffusée par le haut-parleur HP (Fig. 1A). Elle est également transmise à l'abonné demandeur et l'informe clairement qu'il appelle un appareil téléphonique public.

Par ailleurs, le temporisateur 251 dans le circuit 25 montré à la Fig. 7 a été remis à zéro par l'alimentation de batterie précédant la sonnerie d'appel. Le temporisateur 251 est déclenché par le passage de «1» à «0» de sa borne de remise à zéro RZ et le passage de «0» à «1» de son entrée de déclenchement D dès la coupure d'alimentation en réponse à l'appel. La temporisation établit par le temporisateur 251 limite à $t_{AP}$ = 20s la durée d'appel de l'appareil téléphonique public demandé. Deux alternatives AP1 et AP2 se présentent alors:

AP1) Un usager se trouvant près de l'appareil téléphonique public introduit une pièce de monnaie avant l'expiration de la temporisation $t_{AP}$. La pièce lui sera rendue en fin de communication. La réception de la pièce dans l'une des glissières de stockage de l'équipement passif 1 met à «1» la borne 14P/C (Figs. 2C et 3) et provoque l'ouverture de la porte 157 et la transmission des fréquences $F_2$ à $F_5$ toujours conjointement à la fréquence de veille $F_1$ vers l'équipement actif 2. Les fréquences $F_2$ à $F_5$ sont transmises pendant toute la durée de la communication, le déclenchement du temporisateur $271_1$ limitant normalement la phase de numérotation pour une communication demandée, étant ici neutralisé, comme expliqué ci-dessous. La borne 21DEC passe à «1» et active le relais d'appel et de coupure 2053 (Fig. 4) afin de fermer le contact 2052, comme dans le cas d'une communication de départ, ce qui boucle la ligne du côté du commutateur CT et signale à celui-ci un décrochage de l'usager demandé. Le commutateur CT arrête la transmission du signal de sonnerie d'appel à 50 ou 25 Hz en réponse au bouclage de la ligne et procède à une première inversion de batterie initialisant la phase de conversation de la communication d'arrivée. Dans le circuit 25 (Fig. 7), la borne 250 passe à 24 volts, le temporisateur 251 est remis à zéro et stoppé, la tonalité d'appel est arrêtée par un «0» à la borne 25AP, et une sortie Q de la bascule bistable 253 passe à «1» qui, à travers une sortie 25CAP du circuit 25 et la porte OU $276_2$ du moniteur (Fig. 6), remet à zéro et arrête et donc neutralise le temporisateur $271_1$ pendant toute la communication d'arrivée. En outre, dans le circuit de réception et de décodage 21 montré à la Fig. 5, la sortie 21DEC à «1» de la porte ET $215_7$ maintient les autres portes ET $215_1$ à $215_6$ à l'état fermé à travers la porte NON-OU 217, ce qui inhibe le circuit de contrôle de taxation 28.

Cependant, si pendant la phase de conversation de cette communication d'arrivée, une effraction de la caissette ou un relevage anormal de la caissette a lieu, l'alimentation à 6 volts est coupée par l'ouverture des contacts 117 et 118 dans l'équipement passif 1 (Fig. 2) du compartiment 110. Comme déjà dit, les fréquences $F_3$ et $F_5$ sont transmises de l'équipement passif vers l'équipement actif 2 et signalent par la borne $28A_8$ du moniteur une anomalie. La borne 21DEC passe à «0» puisque les autres fréquences $F_2$ et $F_4$ ne sont pas transmises. Le transistor $272_2$ dans le moniteur est bloqué, le relais 2053 est désactivé, le contact 2052 ouvre la ligne du côté du commutateur CT et donc interrompt la communication d'arrivée.

La fin de la communication est déclenchée soit par le raccrochage de l'abonné demandeur, soit par l'enfoncement du bouton de remboursement 115, comme déjà décrit dans les phases F et G. Notamment, la seconde inversion de batterie déclenche la bascule monostable 254 dans le circuit 25 (Fig. 7) et, par suite, la remise à zéro de la sortie Q de la bascule 253 et de la borne 25CAP qui met en attente de temporisation le temporisateur $271_1$ pour une prochaine communication de départ ou d'arrivée.

AP2) Si aucun usager n'introduit de pièce à l'expiration de la temporisation $t_{AP}$ = 20s en réponse à la tonalité d'appel, la sortie S du temporisateur 251 passe à «1». Cette sortie S est reliée à une borne de sortie 25D/R du circuit 25 et également à une entrée de la porte 258 à travers l'inverseur 259.

L'état «1» de la borne 25D/R débloque à travers une diode $275_7$ le transistor $272_2$ dans le moniteur 27 (Fig. 6A), ce qui simule un décrochage d'usager par fermeture du contact d'appel et de coupure 2052 et déclenche donc une première inversion de batterie par le commutateur CT. En outre, l'état «1» de la borne 25D/R maintient fermée la porte 258 et inhibe ainsi une impulsion d'inversion de batterie délivrée par la borne 251B au moniteur 27 et au circuit de contrôle de taxation 26 lors d'une communication normale.

Cependant, la première inversion de batterie met à −24 volts la borne 250 dans le circuit 25, ce qui remet à zéro le temporisateur 251 et donc à l'état «0» la borne 25D/R qui bloque alors le transistor $272_2$ et ouvre le contact 2052. La boucle de ligne du côté du commutateur CT est de nouveau ouverte, ce qui simule un raccrochage d'usager.

Ainsi, après l'expiration de la temporisation $t_{AP}$ = 20s, un décrocahge et un raccrochage sont rapidement opérés automatiquement. La rapidité de ces opérations dépend de l'inertie du relais d'appel et de coupure 2053 (Fig. 4), et n'entraîne aucune taxation pour l'abonné demandeur.

Appel par l'appareil téléphonique public d'un abonné ne donnant par lieu à la taxation

Comme pour un appel normal, l'usager doit introduire une pièce ou une carte dans l'équipement passif 1 afin que l'équipement actif 2 procède au décrochage au moyen d'une activation du relais 2053 (Fig. 4). La numérotation du numéro ne donnant pas lieu à la taxation est analogue à la phase C, à la différence près que la temporisation $t_1$ = 130s du temporisateur $271_1$ déclenchée par la transmission des fréquences $F_2$ à $F_5$ par l'équipement passif 1 n'est pas arrêtée par la réception de la fréquence $F_6$ après le décrochage du demandé donnant lieu à une première inversion de batterie. En effet, aucune impulsion de taxation n'est signalée au circuit de contrôle de taxation 26. Par suite, les contenus des registres de débit 26DM et 26DC demeurent à zéro et les soldes sont nuls, ce qui maintient fermée la porte ET 263 (Fig. 8).

Une communication est ainsi établie pendant la durée restant disponible jusqu'à l'expiration de la temporisation $t_1$ = 130s. En pratique, l'usager dispose d'une phase de conversation ayant une durée d'environ 100s pour un appel local, 80s pour un appel national ou 60s pour un appel international. Cette durée est suffisante pour transmettre un message bref par l'usager et pour que l'usager demande à être rappelé.

Comme pour une communication normale, la fin de la communication non taxable est marquée par une seconde inversion de batterie, une coupure de l'alimentation de 48 volts et le remboursement de la pièce ou l'éjection de la carte initialement introduite pour autant que l'usager n'ait déjà appuyé sur le bouton de remboursement et d'éjection 115.

Circuit de mémorisation

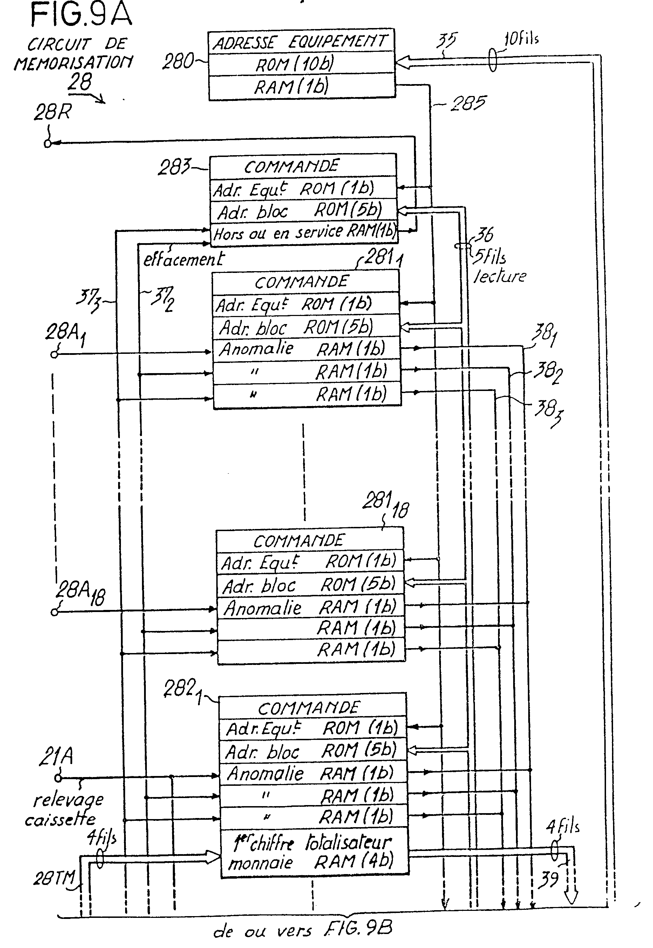

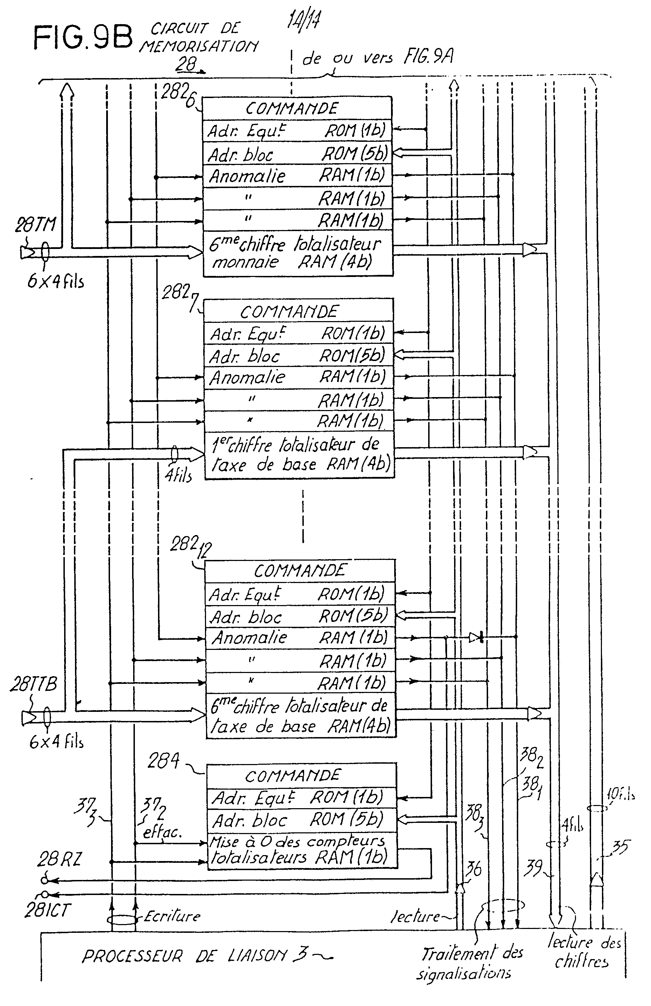

En référence aux Figs. 9A et 9B, le circuit de mémorisation 28 comprend, outre le bloc de mémoires 280, dix-huit blocs de mémoires d'anomalie ou analogues $281_1$ à $281_{18}$, douze blocs de mémoires $282_1$ à $282_{12}$ relatifs aux chiffres des comptes totalisateurs de monnaie et de taxe de base, un bloc de mémoires de mode en service ou hors service 283 et un bloc de mémoires 284 pour une remise à zéro des compteurs totalisateurs 26TM et 26TTB.

Toutes les informations échangées entre le circuit de mémorisation 28, le processeur de liaison 3 et l'ordinateur de gestion OG sont sous la forme de mots binaires ayant quatre bits. Un tel mot permet de coder chaque chiffre décimal 0 à 9 d'un compte de compteur totalisateur, les cinq mots restants étant utilisés pour des mots dits de service A, B, C, D et E qui seront précisés par la suite. Le «0000» n'est pas utilisé pour raison de sécurité.

Le bloc de mémoires 280 comprend une mémoire morte ROM contenant le mot d'adresse à 10 bits de l'équipement actif choisi parmi 1024 mots d'adresse d'équipements actifs gérés par le processeur de liaison 3. Comme déjà dit, 1024 blocs de mémoires 280 sont fixés sur un bâti contenant 1024 cartes supportant les circuits relatifs aux équipements actifs. Chaque bloc de mémoires 280 est ainsi lié à un emplacement d'une carte dans le bâti et permet ainsi de remplacer la carte lorsque celle-ci est défectueuse sans dispositions particulières. Diverses connexions entre les blocs de mémoires 280, la mémoire centrale 33 et le processeur de liaison 3, et les autres circuits des équipements actifs sont réalisés par des connecteurs séparables repérés par CON dans la Fig. 4. Le bloc de mémoires 280 contient également une mémoire vive RAM à un bit. Cette mémoire RAM signale, via un fil d'autorisation de lecture 285, aux autres blocs de mémoires $281_1$ à $281_{18}$, $282_1$ à $282_{12}$, 283 et 284, que l'équipement actif 2 est appelé par le processeur 3 en réponse à l'adresse de l'équipement actif 2 délivrée à la mémoire ROM 280 par le processeur 3, via un bus à 10 fils 35.

Chaque bloc de mémoires d'anomalie $281_a$, où l'entier a varie de 1 à 18, contient une mémoire ROM à 1 bit reliée au fil 285, et une mémoire ROM à 5 bits reliées à un bus d'adresse de bloc à cinq fils 36 sortant du processeur 3. La mémoire ROM à 5 bits contient l'adresse du bloc de mémoires $281_a$ afin de détecter celle-ci sur le bus 36 conjointement à un «1» sur le fil 285 et ainsi autoriser une lecture par le processeur 3 dans trois autres mémoires RAM à 1 bit contenues dans le bloc $281_a$. La première mémoire RAM est reliée au moniteur 27 ou au circuit de contrôle de taxation 26 par une borne d'entrée d'anomalie respective $28A_a$, qui, à l'état «1», appelle le processeur 3. En fait, huit telles entrées $28A_1$ à $28A_8$ sont utilisées dans la réalisation illustrée. Les deux autres mémoires RAM à 1 bit dans le bloc $281_a$ sont destinées à des échanges de signalisation avec l'ordinateur de gestion via le processeur de liaison, en vue de lire notamment le contenu dans la première mémoire RAM, comme on le verra dans la suite. A cette fin, les deux dernières mémoires RAM du bloc $281_a$ sont reliées à deux fils d'écriture $37_2$ et $37_3$ sortant du processeur 3, et les trois mémoires RAM du bloc $281_a$ sont reliées à trois fils de lecture $38_1$, $38_2$ et $38_3$ entrant dans le processeur 3.

Les blocs de mémoires $282_1$ à $282_{12}$ comprennent également chacun, une mémoire ROM à 1 bit reliée au fil 285, une mémoire RAM d'adresse à 5 bits reliée au bus d'adresse de bloc 36 et trois mémoires RAM à 1 bit ayant des sorties reliées aux fils de lecture $38_1$ à $38_3$. Les entrées des trois mémoires RAM dans les blocs $282_1$ à $282_{12}$ sont reliées à la borne de sortie 21A du circuit de réception 21 (Fig. 5) et aux fils d'écriture $37_2$ et $37_3$ respectivement. Lorsque la borne 21A est à l'état «1», suite à un relevage normal de caissette, un mot à 4 bits représentant un chiffre de compte de compteur totalisateur est écrit dans une mémoire RAM à quatre cellules, également incluse dans le bloc de mémoires $282_1$ à $282_{12}$. Ainsi, six mémoires RAM à 4 bits incluses dans les blocs $282_1$ à $282_6$ mémorisent les six chiffres en code binaire délivrés par le compteur totalisateur de monnaie 26TM via le bus 28TM à $6 \times 4 = 24$ fils, et six mémoires RAM à 4 bits incluses dans les blocs $282_7$ à $282_{12}$ mémorisent les six chiffres en code binaire délivrés par le compteur totalisateur de taxe de base 26TTB via le bus 28TTB à $6 \times 4 = 24$ fils.

Les mémoires RAM à 4 bits dans les blocs $282_1$ à $282_{12}$ délivrent chacune le chiffre correspondant en code binaire au processeur 3 via un bus de lecture entrant 39 à 4 fils, en réponse à l'adresse correspondante sur le bus 36.

Les blocs de mémoires de commande 283 et 284 contiennent chacun également une mémoire ROM à 1 bit et une mémoire à 5 bits reliées au fil 285 et au bus d'adresse de bloc 36, respectivement. En outre, chaque bloc 283 et 284 contient une mémoire RAM à 1 bit ayant une entrée d'écriture reliée au fil $37_3$ et une entrée d'effacement reliée au fil $37_2$. Une sortie de lecture de la mémoire RAM 283 est reliée à la borne de rétablissement 28R du moniteur, et une sortie de lecture de la mémoire RAM 284 est reliée aux bornes de remise à zéro 28RZ des compteurs totalisateurs 26TM et 26TTB.

Les 32 blocs de mémoires $281_1$ à $281_{18}$, $282_1$ à $282_{12}$, 283 et 284 dans les 1024 équipements actifs sont explorés cycliquement par un compteur à $10+5 = 15$ étages contenus dans le processeur de liaison 3. Un équipement actif est adressé par les 10 bits délivrés dans le bus 35, ce qui adresse les 32 blocs de mémoires précités de cet équipement, et chacun de ces blocs est adressé successivement via le bus 36. Une base de temps d'environ 60 kHz incluse dans le processeur 3 établit une durée du cycle d'exploration égale à 500 ms environ, et donc une durée d'interrogation d'un bloc de mémoires égale à 15 µs environ.

Dans chaque bloc de mémoires $281_1$ à $281_{18}$ et $282_1$ à $282_{12}$, chacune des trois mémoires RAM à 1 bit mémorise l'état de son entrée respective, soit un bit «1» signalant une anomalie, un relevage de caissette ou une phase de traitement par le processeur, soit un bit «0» indiquant un effacement de l'information précédente. Les entrées de ces trois mémoires RAM sont des entrées d'information et d'autorisation d'écriture. Par contre, dans chacun des blocs de mémoires de commande 283 et 284, le fil $37_2$ est relié une entrée d'effacement de la mémoire RAM à 1 bit pour effacer le bit «1» écrit par l'entrée d'information de cette mémoire RAM à 1 bit reliée au fil $37_3$. Chaque fois que le fil 285 est à «1» et qu'une adresse est présente dans le bus 36, le processeur autorise à lire les informations dans les mémoires RAM du bloc de mémoires adressé.

Le tableau I suivant présente des signalisations relatives au traitement d'une anomalie mémorisée dans un bloc $281_1$ à $281_{18}$ par le processeur de liaison 3, en référence aux états des fils $38_1$, $38_2$ et $38_3$.

Tableau I

| $38_1$ | $38_2$ | $38_3$ | Phase du processeur de liaison 3 |
|---|---|---|---|
| 0 | 0 | 0 | Pas d'anomalie à transmettre |
| 1 | 0 | 0 | Anomalie à transmettre |
| 1 | 1 | 0 | Anomalie en cours de traitement |
| 1 | 1 | 1 | Anomalie transmise et reçue par l'ordinateur de gestion OG avec accusé de réception |
| 0 | 1 | 1 | Cause de l'anomalie disparue Appel de l'ordinateur OG par le processeur |
| 0 | 0 | 1 | Rétablissement de l'équipement actif 2 correspondant à la fin de l'anomalie transmise à l'ordinateur OG et reçue par celui-ci |
| 0 | 0 | 0 | Retour au repos Pas d'anomalie à transmettre |

Pour les signalisations ci-dessus, l'information transmise par le processeur 3 à l'ordinateur OG est faite sous la forme d'un train de 10 demi-octets comprenant:

– l'adresse du processeur à 3 chiffres en code binaire par exemple;

– l'adresse de l'équipement à 4 chiffres en code binaire, comprise entre 0001 et 1024.

– l'adresse de bloc de mémoires d'anomalie à 2 chiffres en code binaire comprise entre 01 et 18; et

– un mot de «service A» à 4 bits pour anomalie à inscrire et début de message; ou

– un mot de «service B» à 4 bits pour rétablissement de l'équipement actif et début de message; ou

– un mot de «service C» à 4 bits pour accusé de réception, suivant les deux sens de transmission; ou

– un mot de «service D» à 4 bits pour demande de répétition de message suivant les deux sens de transmission; ou

– un mot de «service E» à 4 bits pour fin de message, suivant les deux sens de transmission.

L'ordinateur traduit le mot de la signalisation reçue et effectue selon le programme établi le traitement prévu pour cette signalisation. Il distingue notamment s'il s'agit d'une signalisation à inscrire (code A) ou d'un rétablissement et fin de signalisation (code B).

Le fonctionnement des blocs $282_1$ à $282_{12}$ est identique à celui des blocs $281_1$ à $281_{18}$ en ce qui concerne l'adressage et la gestion de l'appel du processeur par un bloc. Il s'y ajoute pour chacun de ces 12 blocs $282_1$ à $282_{12}$, l'écriture ou la lecture du demi-octet en mémoire RAM correspondant à un chiffre décimal à transmettre. L'ordre d'appel du processeur 3 est donné pour tous ces 12 blocs par l'état «1» à la borne 21A enregistré dans les premières mémoires RAM à 1 bit associées. La procédure et les phases rencontrées dans le cas d'une anomalie se retrouvent ici. Seul le contenu du message de chaque signalisation est complété par les 4 bits du chiffre à transmettre.

Par ailleurs, et pour ce type de signalisation seulement, lorsque les 12 chiffres ont été transmis et reçus par l'ordinateur OG sous le contrôle du processeur 3, le processeur marque à «1» la mémoire RAM du bloc 284 via le fil $37_3$. La sortie 28RZ de cette mémoire RAM commande la remise à zéro des compteurs totalisateurs de monnaie et de taxe de base 26TM et 26TTB dans le circuit de contrôle de la taxation 26 de l'équipement actif 2 concerné (Fig. 8). La remise simultanée à zéro des 12 chiffres, contrôlée en retour par le processeur 3 via le bus 39 lui permet de vérifier l'exécution de la remise à zéro des compteurs totalisateurs. Cette vérification faite, le processeur 3 efface, via le fil $37_2$, l'ordre de remise à zéro inscrit dans la mémoire RAM du bloc 284. L'état de la mémoire RAM 284 et de la sortie 28RZ reviennent à «0».

Le tableau II suivant présente des signalisations relatives au traitement d'un chiffre de compteur totalisateur par le processeur de liaison 3, en référence aux fils de sortie de lecture $38_1$, $38_2$ et $38_3$. Les états des borne et fils d'entrée d'écriture 21A, $37_2$, $37_3$ ainsi que de la borne de remise à zéro 28RZ des comptes totalisateurs 26TM et 26TTB sont également indiqués.

Tableau II

| $38_1$ | $38_2$ | $38_3$ | Phase du processeur de liaison 3 | 21A | $37_2$ | $37_3$ | 28RZ |
|---|---|---|---|---|---|---|---|
| 0 | 0 | 0 | Pas de chiffre à transmettre | 0 | 0 | 0 | 0 |
| 1 | 0 | 0 | Relevage ou incident caissette. Chiffre à transmettre | 1 | 0 | 0 | 0 |
| 1 | 1 | 0 | Chiffre en cours de traitement. Procédure de liaison engagée par le processeur | 1 ou 0 | 0 | 0 | 0 |
| 1 | 1 | 1 | Chiffre transmis et reçu par l'ordinateur OG avec accusé de réception | 1 ou 0 | 0 | 0 | 0 |
| 1 | 1 | 1 | Ordre de remise à zéro des compteurs totalisateurs 26TM et 26TTB | 1 ou 0 | 0 | 1 | 1 |
| 1 | 1 | 1 | Contrôle par le processeur de la remise à zéro des mémoires RAM à 4 bits. Si bus 39 à «0», marquage d'un «1» sur fil $37_2$; remise à zéro faite et vérifiée; fin du traitement | 1 ou 0 | 1 | 1 | 1 |
| 1 | 1 | 1 | 1er cas: borne 21A à «1» et compartiment de caissette ouvert; traitement en arrêt dans le cadre d'une anomalie | 1 | 1 | 1 | 1 |
| 0 | 0 | 0 | 2ème cas: borne 21A à «0» et compartimentent de caissette en ordre de fonctionnement normal retour au repos | 0 | 0 | 0 | 0 |

On notera que contrairement au cas des signalisations relatives à une anomalie, une signalisation relative à un chiffre est marquée dans les premières mémoires RAM à 1 bit du bloc respectif $282_1$ à $282_{12}$ par une très brève impulsion via la borne 21A, l'état «1» ainsi écrit ne pouvant être effacé que par le processeur 3 à la fin du traitement de cette signalisation.

Dans le cas d'une anomalie, il s'agissait de repérer et noter la disparition de la signalisation. Dans le cas d'un chiffre, il s'agit de noter et d'enregistrer l'ouverture du compartiment de caissette, si courte que ce soit sa durée, afin d'éviter toute fraude par manipulation des contacts 117 et 118 du compartiment de caissette 110. Compte tenu de la durée du cycle de balayage, l'ordinateur OG enregistre cette signalisation pour une durée de celle-ci égale ou supérieure à 500 ms. Le contrôle d'ouverture et de fermeture du compartiment de caissette ainsi que la commande de mise en mode hors service décidée par l'ordinateur OG relèvent respectivement des signalisations déjà vues, via les bornes $28A_8$ et 28R.

L'inhibition du circuit de contrôle de taxation 26 de l'équipement actif est assurée pendant tout le temps de traitement des signalisations relatives aux chiffres par une sortie 28ICT de la première mémoire RAM à 1 bit de l'un des blocs $282_1$ à $282_{12}$, tel que le bloc $282_{12}$ comme montré à la Fig. 9, relié à une entrée de la porte NON-OU 217 qui bloque ou débloque les portes ET $215_1$ à $215_6$ (Fig. 5).

Cette inhibition a pour but d'éviter des perturbations du circuit de contrôle de la taxation 26 dans le cas possible où le traitement de la signalisation «chiffre» se terminerait bien après la fermeture du compartiment 110, suite à un relevage de caissette normal ou une effraction du compartiment. En effet, la remise en service de l'appareil téléphonique public pourrait être suivie d'une remise à zéro des compteurs totalisateurs impliquant une perte d'informations, car le délai de transmission des informations du processeur 3 à l'ordinateur OG dépend essentiellement du temps d'établissement d'une communication, de l'ordre de 10 à 40 secondes, tandis qu'une transmission de message dans le cas des 12 chiffres et donc de 184 bits se fait en moins d'une seconde (vitesse de transmission 200 Bauds).

La rapidité du cycle d'exploration du processeur 3 rendra pratiquement inutile l'adjonction d'une mémoire tampon au processeur. Une telle mémoire tampon est virtuellement constituée par les blocs de mémoires des circuits de mémorisation des équipements actifs. Le risque de la perte d'une information dans le cas de signalisations relatives à une anomalie est sans conséquence et conduit en fait à ne pas noter une signalisation très fugitive. En ce qui concerne les signalisations relatives aux chiffres, les dispositions prises font que tout le système équipement passif-équipement actif et notamment, le circuit de contrôle de taxation 26 sont bloqués pendant toute la durée du traitement de la signalisation relative aux chiffres. L'information propre aux chiffres ne peut être modifiée ni être effacée pendant toute cette durée et sera traitée quelle que soit cette durée, et voire même après plusieurs jours dans le cas d'un dérangement grave affectant la liaison 31 entre le processeur 3 et l'ordinateur de gestion OG. Comme déjà dit, le traitement de plusieurs signalisations au cours d'un même cycle est assuré à l'aide du multiplexeur à N voies 32 (Fig. 4).

Selon une autre variante, la plupart des circuits de l'équipement actif 2, tels que le moniteur 27 et le circuit de contrôle de taxation, sont sous la forme d'un microprocesseur. De même, certains circuits de l'équipement passif 1, tels que les circuits 12 et 14 décrits précédemment en référence à des composants discrets, peuvent être sous la forme d'un microprocesseur.

**Revendications**

1. Système de contrôle et de surveillance pour un appareil téléphonique à prépaiement raccordé à un central téléphonique (CT) à travers une ligne téléphonique comprenant un premier équipement (1) associé à l'appareil et connecté à une première extrémité (A, B) de la ligne téléphonique et un second équipement (2) associé au central téléphonique (CT) et connecté à une seconde extrémité $(A_1, B_1)$ de la ligne téléphonique, les premier et second équipements (1 et 2) se transmettant mutuellement à travers la ligne téléphonique des signaux codés en fréquences pour convoyer des informations relatives au contrôle de l'appareil, caractérisé en ce que le premier équipement (1) comprend des moyens (104) pour s'alimenter à partir d'une tension continue (−48 volts) présente dans la ligne téléphonique et des moyens (15) pour produire et transmettre des signaux codés en fréquences ($F_1$ à $F_5$) pour convoyer des informations relatives à la surveillance de l'appareil et indiquant des anomalies de fonctionnement de l'appareil dues à des pannes et à des manipulations frauduleuses, et en ce que le second équipement est installé dans un lieu non accessible au public et comprend des moyens (203) pour appliquer ladite tension continue (−48 volts) dans la ligne téléphonique et des moyens (21, 27) pour recevoir, décoder et interpréter lesdites informations relatives à la surveillance et contrôler le fonctionnement de l'appareil également en fonction de ces informations.

2. Système conforme à la revendication 1, caractérisé en ce que le premier équipement (1) comprend des moyens ($156, 151_1, 150_1, 152_1$), pour transmettre un premier signal ($F_1$) vers le second équipement (2) suite à l'alimentation du premier équipement (1) et en ce que le second équipement (2) comprend des moyens ($271_2$) commandant les moyens pour appliquer une tension continue (203) pour arrêter l'alimentation du premier équipement (1) suite à un défaut de transmission du premier signal ($F_1$) pendant une première durée prédéterminée ($t_{23}$).

3. Système conforme à la revendication 1, caractérisé en ce que le premier équipement (1) comprend des moyens (104) pour alimenter le premier équipement (1) et des moyens (156, 151,

$150_1$, $152_1$) pour transmettre un premier signal ($F_1$) vers le second équipement (2) lorsque le premier équipement (1) est alimenté, et en ce que le second équipement (2) comprend des moyens (203) pour appliquer une tension continue ($-48$ volts) aux moyens pour alimenter (104) à travers ladite ligne téléphonique ($A_1B_1$, AB), des moyens ($211_1$, $212_1$, $213_1$) pour recevoir ledit premier signal ($F_1$) et des moyens ($271_2$) pour détecter des défauts de transmission et de réception dudit premier signal par lesdits moyens pour transmettre et pour recevoir (156, 151, $150_1$, $152_1$; $211_1$, $212_1$, $213_1$) pendant une première durée prédéterminée ($t_{23}$) afin que lesdits moyens pour appliquer (104) n'appliquent plus ladite tension continue.

4. Système conforme à l'une quelconque des revendications 1 à 3, dans lequel ledit appareil comprend des moyens d'encaissement à pièces et/ou à carte prépayée (11, 13), caractérisé en ce que le premier équipement (1) comprend des moyens (170, 157, $150_2$ à $150_5$) pour transmettre un second signal ($F_2$ à $F_5$) vers le second équipement (2) dès qu'une pièce ($P_1$ à $P_4$) ou une carte est introduite dans les moyens d'encaissement (11, 13) et en ce que le second équipement (2) comprend des moyens ($215_7$, $272_2$, 205) pour boucler la ligne téléphonique ($A_0B_0$, $A_2B_2$) entre le second équipement (2) et le central (CT) en réponse audit second signal ($F_2$ à $F_5$), en vue de simuler un décrochage.

5. Système conforme à la revendication 4, caractérisé en ce que le second signal est composé de plusieurs fréquences porteuses ($F_2$ à $F_5$) et en ce que dans le second équipement (2), les moyens pour boucler ($215_7$, $272_2$, 205) bouclent la ligne téléphonique ($A_0B_0$, $A_2B_2$) en réponse à la réception de toutes les fréquences ($F_2$ à $F_5$) dudit second signal.

6. Système conforme à la revendication 4 ou 5, caractérisé en ce que le second équipement (2) comprend des moyens (216, $271_1$, $271_3$, $271_1$, 203) pour arrêter brièvement l'alimentation du premier équipement (1) dès qu'au moins une partie du second signal ($F_2$ à $F_5$) est transmise continûment pendant une seconde durée prédéterminée ($t_1$) succédant à l'introduction d'une pièce ou d'une carte dans les moyens d'encaissement (11, 13).

7. Système conforme à l'une quelconque des revendications 4 à 6, caractérisé en ce que le second équipement (2) comprend des moyens ($274_3$, 28R) pour arrêter définitivement l'alimentation du premier équipement (1) lorsque ledit second signal ($F_2$ à $F_5$) est transmis partiellement par le premier équipement (1) ou est reçu partiellement par le second équipement (2) pendant une seconde durée prédéterminée ($t_1$) succédant à l'introduction d'une pièce ou d'une carte dans les moyens d'encaissement (11, 13).

8. Système conforme à l'une quelconque des revendications 4 à 7, caractérisé en ce que le second équipement (2) comprend des moyens de comptage ($274_2$, 277) pour arrêter définitivement l'alimentation du premier équipement (1) lorsqu'une transmission partielle dudit second signal par le premier équipement (1) ou une réception partielle dudit second signal par le second équipement (2) pendant une seconde durée prédéterminée ($t_1$) est réitérée à la suite d'un nombre prédéterminé (par exemple 8) d'introductions successives de pièces et/ou de cartes dans les moyens d'encaissement (11, 13).

9. Système conforme à l'une quelconque des revendications 4 à 8, caractérisé en ce qu'un arrêt d'alimentation du premier équipement (1) provoque le remboursement de pièces introduites non encaissées ($P_1$ à $P_4$) et/ou l'éjection d'une carte prépayée introduite.

10. Système conforme à l'une quelconque des revendications 1 à 9, caractérisé en ce que le second équipement (2) comprend des moyens (201) pour convoyer bidirectionnellement uniquement des signaux compris dans une bande de fréquence téléphonique (300 à 3400 Hz), tels que des signaux de parole et des signaux de numérotation à multifréquence délivrés par un clavier (CMF) de l'appareil, entre l'appareil et le central (CT).

11. Système conforme à l'une quelconque des revendications 1 à 10, dans lequel ledit appareil comprend des moyens (CD) pour délivrer des impulsions de numérotation, caractérisé en ce que le premier équipement (1) comprend des moyens pour transmettre un troisième signal ($F_2$ à $F_5$) modulé par les impulsions de numérotation vers le second équipement (2) et en ce que le second équipement (2) comprend des moyens ($211_2$–$212_2$–$213_2$ à $211_5$–$212_5$–$213_5$, $215_7$) pour démoduler les impulsions de numérotation et des moyens (205) pour boucler et déboucler la ligne téléphonique ($A_0B_0$, $A_2B_2$) entre le second équipement (2) et le central téléphonique (CT) en réponse aux impulsions de numérotation démodulées.

12. Système conforme aux revendications 4 et 11, caractérisé en ce que les moyens pour délivrer des impulsions de numérotation (CD) ne sont activés en vue de délivrer des impulsions de numérotation que lorsque les moyens d'encaissement (11, 13) reçoivent une pièce ou une carte (14P/C) au début d'une communication téléphonique.

13. Système conforme à l'une quelconque des revendications 1 à 12, caractérisé en ce que le second équipement (2) comprend des moyens ($271_1$, $271_3$, 203, $272_2$, 205) pour arrêter brièvement l'alimentation du premier équipement (1) et provoquer un remboursement de pièce ou une éjection d'une carte prépayée dans ledit appareil, lorsque le second équipement (2) n'a reçu aucun signal de réponse (première inversion de batterie) d'un abonné demandé délivré par le central (CT), après une seconde durée prédéterminée ($t_1$) succédant à une introduction de pièce ou de carte dans ledit appareil.

14. Système conforme à l'une quelconque des revendications 1 à 13, caractérisé en ce que le second équipement (2) comprend des moyens (25, 25IB) pour détecter un signal de réponse d'un abonné demandé transmis par le central (CT), tel qu'une première inversion de batterie, et des moyens ($275_3$, $272_2$, 205) pour maintenir une boucle de ligne entre le second équipement (2) et le central (CT) suite au signal de réponse détecté.

15. Système conforme aux revendications 8 et 14, caractérisé en ce que les moyens pour détecter un signal de réponse (25, 25IB) remettent à zéro les moyens de comptage ($274_2$, 277) suite au signal de réponse détecté.

16. Système conforme à l'une quelconque des revendications 1 à 15, caractérisé en ce que le second équipement (2) comprend des moyens (24) pour détecter des impulsions de taxe transmises par le central (CT), les impulsions de taxe détectées étant de préférence calibrées, et des moyens de contrôle de taxation (26) pour évaluer en permanence un solde de communication en fonction d'un nombre d'impulsions de taxe et d'un avoir prépayé introduit dans l'appareil pendant toute une phase de conversation d'une communication et pour rompre la communication après que le solde soit demeuré négatif pendant une troisième durée prédéterminée ($t_{22}$).

17. Système conforme à la revendication 16, caractérisé en ce que le premier équipement (1) comprend des moyens (11, 12) pour encaisser au moins en partie ledit avoir prépayé sous la forme de pièces de monnaie de différentes valeurs ($P_1$ à $P_4$) et des moyens (15) pour transmettre un signal ($F_2+F_3$, $F_2+F_4$, $F_2+F_3$, $F_3+F_4$) représentatif de pièce encaissée vers le second équipement (2) en réponse à un signal d'ordre d'encaissement ($F_6$) transmis par le second équipement (2), et en ce que les moyens de contrôle de taxation (26) comprennent des premiers moyens (26DM) pour calculer un premier débit de la communication en cumulant la valeur d'une taxe de base en réponse à chaque impulsion de taxe détectée, des premiers moyens (26CRM) pour calculer un premier crédit de la communication en additionnant les valeurs de pièces encaissées au cours de la communication en réponse aux signaux représentatifs des pièces encaissées respectivement, des premiers moyens (26CM) pour établir en permanence un premier solde de la communication égal à la différence des premiers crédit et débit, et des moyens (263, 22) pour transmettre ledit signal d'ordre d'encaissement ($F_6$) vers le premier équipement (1) chaque fois que ledit premier solde est négatif.

18. Système conforme à la revendication 17, caractérisé en ce que les moyens pour encaisser (11, 12) encaissent les pièces ($P_1$ à $P_4$) en commençant par les pièces de plus petite valeur ($P_1$), en réponse aux signaux d'ordre d'encaissement successifs ($F_6$).

19. Système conforme à la revendication 17 ou 18, caractérisé en ce que les signaux représentatifs des pièces encaissées de différentes valeurs ($P_1$ à $P_2$) sont des combinaisons distinctes de fréquences porteuses ($F_2+F_3$, $F_2+F_4$, $F_2+F_5$, $F_3+F_5$) respectivement.

20. Système conforme à l'une quelconque des revendications 17 à 19, caractérisé en ce que les moyens pour encaisser (11, 12) comprennent des moyens ($117_1$, $117_2$, $117_3$, 18) pour détecter un cheminement anormal de chaque pièce encaissée ($P_1$ à $P_4$) entre une zone de stockage de pièces à encaisser ($112_1$ à $112_4$) et un réceptacle de pièces encaissées (110), et des moyens ($189_1$ à $189_4$, $151_3$, $151_5$) pour remplacer le signal représentatif d'une pièce encaissée par un signal d'anomalie ($F_3+F_5$) transmis au second équipement (2) lorsqu'un cheminement anormal de la pièce encaissée est détecté.

21. Système conforme à l'une quelconque des revendications 17 à 20, caractérisé en ce que le second équipement (2) comprend des moyens (26MMAX) reliés aux premiers moyens pour calculer un premier crédit (26CRM) pour signaler un premier crédit excédant une valeur prédéterminée.

22. Système conforme à l'une quelconque des revendications 16 à 21, caractérisé en ce que le premier équipement (1) comprend des moyens (13) pour encaisser au moins en partie ledit avoir prépayé sous la forme d'oblitération de taxes de base dans une carte prépayée et des moyens (15) pour transmettre un signal représentatif d'une taxe de base oblitérée ($F_4+F_5$) vers le second équipement (2) en réponse à un signal d'ordre d'encaissement ($F_6$) transmis par le second équipement (2), et en ce que les moyens de contrôle de taxation (26) comprennent des seconds moyens (26DTB) pour calculer un second débit de la communication en additionnant une unité en réponse à chaque impulsion de taxe de base détectée, des seconds moyens (26CRTB) pour calculer un second crédit de la communication en additionnant une unité en réponse à chaque signal représentatif de taxe oblitérée, des seconds moyens (26CTB) pour établir en permanence un second solde de la communication égal à la différence des seconds crédit et débit, et des moyens (263, 22) pour transmettre ledit signal d'ordre d'encaissement ($F_6$) chaque fois que ledit second solde est négatif.

23. Système conforme à la revendication 22, caractérisé en ce que le signal représentatif d'une taxe de base oblitérée est une combinaison de fréquences porteuses ($F_4+F_5$).

24. Système conforme à la revendication 22 ou 23, caractérisé en ce que le second équipement (2) comprend des moyens (26TBMAX) reliés aux seconds moyens pour calculer un second crédit (26CRTB) pour signaler un second crédit excédant une valeur prédéterminée.

25. Système conforme à la revendication 16 et à l'une quelconque des revendications 22 à 24, caractérisé en ce que le second équipement (2) comprend des moyens (264) pour remettre à zéro les seconds moyens pour calculer (26DTB, 26CRTB) en réponse à chaque signal représentatif d'une pièce encaissée ($F_2+F_3$, $F_3+F_4$, $F_2+F_5$, $F_3+F_5$) et des moyens (266) pour remettre à zéro les premiers moyens pour calculer (26DM, 26CRM) en réponse à chaque signal représentatif d'une taxe de base oblitérée ($F_4+F_5$).

26. Système conforme à l'une quelconque des revendications 17 à 25, caractérisé en ce que le second équipement (2) comprend des moyens

($274_5$, $271_5$, $271_3$) pour couper brièvement l'alimentation du premier équipement (1) à l'expiration d'une quatrième durée prédéterminée ($t_5$) pendant laquelle le signal d'ordre d'encaissement ($F_6$) est transmis sans que le second équipement (2) ne reçoive l'un des signaux représentatifs.

27. Système conforme à l'une quelconque des revendications 17 à 26, caractérisé en ce que le premier équipement (1) comprend des moyens ($156$, $151_1$) pour signaler une absence (absence de $F_1$) d'un avoir prépayé (pièce ou carte) dans les moyens pour encaisser (11, 12, 13) du second équipement (2) en réponse à chaque signal d'ordre d'encaissement ($F_6$) et en ce que le second équipement (2) comprend des moyens ($274_6$, $278_3$, $272_3$, 206, 207) pour transmettre une tonalité (crédit épuisé) au premier équipement (1), et de préférence une tonalité (rester en attente) vers un abonné demandé à travers le central (CT), pendant au plus une troisième durée prédéterminée ($t_{22}$) et tant qu'un solde de la communication demeure négatif, et des moyens ($271_2$, $274_7$, $271_3$, 203) pour couper brièvement l'alimentation du premier équipement (1) lorsque ledit solde demeure négatif après ladite troisième durée prédéterminée ($t_{22}$).

28. Système conforme à la revendication 27, caractérisé en ce que le second équipement (2) comprend des moyens ($271_2$, $274_4$, $272_4$, 2020) pour interrompre des signaux de parole convoyés par la ligne (AB, $A_2B_2$) pendant au plus une cinquième durée prédéterminée ($t_{22}-t_{21}$) précédant la fin de la troisième durée prédéterminée ($t_{22}$) lorsque le solde demeure négatif.

29. Système conforme à l'une quelconque des revendications 1 à 28, caractérisé en ce que le second équipement (2) comprend des moyens (25, 251B, $278_2$, $271_3$, 203) pour couper brièvement l'alimentation du premier équipement (1) en réponse à un signal de raccrochage d'abonné demandé (seconde inversion de batterie) transmis par le central (CT).

30. Système conforme à l'une quelconque des revendications 1 à 29, caractérisé en ce que le premier équipement (1) comprend des moyens (115, 116) actionnés manuellement pour couper brièvement l'alimentation du premier équipement (1) afin de simuler un raccrochage d'usager demandeur.

31. Système conforme à l'une quelconque des revendications 1 à 30, caractérisé en ce que le premier équipement (1) comprend des moyens (11, 12) pour encaisser des pièces de monnaie de différentes valeurs ($P_1$ à $P_4$) dans un réceptacle amovible d'un compartiment fermant (110), des moyens (117, 118) pour détecter une ouverture du compartiment (110) et/ou un retrait du réceptacle du compartiment, et des moyens ($151_3$, $151_5$) pour transmettre un signal ($F_3+F_5$) d'ouverture de compartiment et/ou de retrait du réceptacle vers le second équipement (2) et en ce que le second équipement (2) comprend des moyens ($215_6$) pour détecter ledit signal d'ouverture et/ou de retrait en vue de signaler une ouverture du compartiment et/ou un retrait du réceptacle.

32. Système conforme à la revendication 31 et à la revendication 17 ou 22, caractérisé en ce que les moyens pour détecter une ouverture et/ou un retrait (117, 118) coupent l'alimentation des moyens pour encaisser (11, 12; 13) dès qu'une ouverture et/ou un retrait sont détectés, en vue d'interdire l'établissement d'une communication.

33. Système conforme à la revendication 17 ou 22 et à la revendication 31 ou 32, caractérisé en ce que les moyens de contrôle de taxation (26) comprennent des moyens (26TM, 26TTB) pour totaliser les premiers et/ou seconds crédits de communications entre deux ouvertures et/ou retraits successifs et des moyens (21A, $282_1$ à $282_{12}$) pour lire des montants totalisateurs dans les moyens pour totaliser en réponse au signal d'ouverture et/ou de retrait ($F_3+F_5$).

34. Système conforme à la revendication 33, caractérisé en ce que le second équipement (2) comprend des moyens (28, 3, 30, 32) pour transmettre lesdits montants totalisateurs vers des moyens de gestion éloignés (OG) à travers un réseau téléphonique (31), dès que le signal d'ouverture de compartiment ($F_3+F_5$) est détecté dans le second équipement (2).

35. Système conforme à l'une quelconque des revendications 31 à 34, caractérisé en ce que le second équipement (2) comprend des moyens ($271_1$, $274_4$, $281_8$) pour mettre en mode hors service le premier équipement (1) en coupant l'alimentation de celui-ci lorsque le signal d'ouverture et/ou de retrait est reçu par le second équipement (2) pendant plus qu'une sixième durée prédéterminée ($t_1$).

36. Système conforme à la revendication 17 et à l'une des revendications 31 à 35, caractérisé en ce que les moyens de contrôle de taxation (26) comprennent des moyens (26TM) pour totaliser les premiers crédits de communication entre deux ouvertures et/ou retraits successifs et des moyens (26CTM) pour comparer le total des premiers crédits totalisés avec un montant prédéterminé en vue de signaler que le réceptacle est plein de pièces de monnaie.

37. Système conforme à l'une quelconque des revendications 1 à 36, caractérisé en ce que le second équipement (2) comprend des moyens ($200_0$, 25, 25AP) pour détecter un signal d'appel d'un abonné demandeur transmis par le central (CT) en vue d'établir une communication d'arrivée et des moyens ($272_3$, 206, 207) pour transmettre une tonalité d'appel vers le premier équipement (1) et diffusé par un haut-parleur (HP) de l'appareil téléphonique public et, de préférence, une tonalité d'appel vers le central (CT) pour indiquer un appel d'appareil téléphonique public à l'abonné demandeur.

38. Système conforme à la revendication 37, caractérisé en ce que ladite tonalité d'appel est transmise pendant au plus une septième durée prédéterminée ($t_{AP}$).

39. Système conforme à la revendication 30 et à la revendication 17 ou 22, caractérisé en ce que le premier équipement (1) comprend des moyens (170, 157) pour transmettre un second signal ($F_2$

à F$_5$) au second équipement (2) lorsqu'un avoir prépayé est introduit dans les moyens pour encaisser (11, 12; 13) avant l'expiration de ladite septième durée prédéterminée (t$_{AP}$) et en ce que le second équipement (2) comprend des moyens (21DEC, 272$_2$, 205) pour boucler la ligne téléphonique (A$_0$B$_0$, A$_2$B$_2$) du côté du central (CT) en réponse audit second signal (F$_2$ à F$_5$) en vue de simuler un décrochage d'usager et arrêter le signal d'appel.

40. Système conforme aux revendications 16 et 39, caractérisé en ce que le second équipement (2) comprend des moyens (217) pour inhiber les moyens de contrôle de taxation (26) en réponse audit second signal (F$_2$ à F$_5$).

41. Système conforme à la revendication 32 et à la revendication 39 ou 40, caractérisé en ce que le second équipement (2) comprend des moyens (215$_7$, 272$_2$, 205) pour interrompre la communication d'arrivée en réponse audit signal d'ouverture et/ou de retrait (F$_3$+F$_5$).

42. Système conforme à l'une quelconque des revendications 39 à 42, caractérisé en ce que le second équipement (2) comprend des moyens (251, 25D/R, 272$_2$, 205), pour déboucler et boucler la ligne téléphonique (A$_0$B$_0$, A$_2$B$_2$) du côté du central (CT) lorsque ledit second signal (F$_2$ à F$_5$) n'est pas détecté pendant ladite septième durée prédéterminée (t$_{AP}$).

43. Système conforme à l'une quelconque des revendications 1 à 42, dans lequel ledit appareil téléphonique public comprend un combiné (C) ayant un écouteur (e) et un microphone (m), un haut-parleur fixe (HP) et un microphone fixe (M), caractérisé en ce que l'appareil comprend des moyens (P, 103) actionnés manuellement lors de la prise du combiné (C) pour commander des moyens de commutation (101R$_1$, 101R$_2$, 101T$_1$, 101T$_2$) reliant sélectivement l'écouteur (e) et le microphone (m) du combiné et les haut-parleur (HP) et microphone (M) fixes à la ligne téléphonique (AB, A$_2$B$_2$).

44. Système conforme à l'une quelconque des revendications 1 à 43, caractérisé en ce que le second équipement (2) comprend des moyens (28, 3, 30, 32) pour transmettre vers des moyens de gestion éloignés (OG) à travers un réseau téléphonique (31), des signaux indiquant notamment des anomalies de fonctionnement (28A$_1$ à 28A$_4$, 28A$_8$) du premier équipement (1) et/ou des excès de coût de communication (28A$_5$ à 28A$_7$).

45. Système conforme à la revendication 44, caractérisé en ce qu'une anomalie de fonctionnement consiste en

– un défaut de transmission du premier équipement (1) ou de réception du second équipement (2) relatif à un premier signal (F$_1$) transmis sensiblement en permanence par le premier équipement (1) ou un affaiblissement anormal ou une coupure de la ligne téléphonique (AB–A$_2$B$_2$) entre les équipements (28A$_1$), ou

– un défaut de transmission du premier équipement (1) ou de réception du second équipement (2) relatif à une partie ou la totalité d'un second signal (F$_2$ à F$_5$) transmis par le premier équipement (1) suite à une phase de décrochage simulée par l'introduction d'un avoir prépayé dans des moyens d'encaissement (11, 12, 13) du premier équipement (28A$_2$), ou

– un nombre prédéterminé d'établissements consécutifs et infructueux de communication sans échange de signaux de parole à partir du premier équipement (28A$_3$), chacun des établissements excédant une première durée prédéterminée (t$_1$), ou

– un défaut d'encaissement d'une partie d'avoir prépayé introduit dans le premier équipement (1) à la suite d'une transmission d'un signal d'ordre d'encaissement (F$_6$) par le second équipement (2) vers le premier équipement pendant au moins une quatrième durée prédéterminée (t$_5$) (28A$_4$), ou

– une ouverture d'un compartiment (110) contenant un réceptacle de pièces de monnaie dans l'appareil téléphonique ou un retrait du réceptacle du compartiment pendant au moins une première durée prédéterminée (t$_1$) (28A$_8$).

46. Système conforme à la revendication 44 ou 45, caractérisé en ce qu'un excès de coût de communication consiste en

·– un coût de communication prépayée au moyen de pièces encaissées dans le premier équipement (1) et excédant un montant prédéterminé maximal de coût de communication (28A$_5$), ou

– un coût de communication prépayé au moyen d'une carte prépayée introduite dans le premier équipement (1) et excédant un avoir prédéterminé maximal disponible avec une carte (28A$_6$), ou

– un montant de pièces encaissées dans un réceptacle du premier équipement (1) excédant un montant prédéterminé maximal de pièces que peut contenir le réceptacle (28A$_7$).

## Patentansprüche

1. Steuer- und Überwachungssystem für einen Münzfernsprechapparat, der über eine Telefonleitung an eine Telefonzentrale (CT) angeschlossen ist, mit einer ersten, dem Telefonapparat zugeordneten Einrichtung (1), welche mit einem ersten Ende (A, B) der Telefonleitung verbunden ist, sowie mit einer zweiten der Telefonzentrale (CT) zugeordneten Einrichtung (2), welche mit einem zweiten Ende (A$_1$, B$_1$) der Telefonleitung verbunden ist, wobei die erste und die zweite Einrichtung (1 und 2) sich gegenseitig frequenzkodierte Signale zur Übertragung von der Steuerung des Telefonapparates betreffenden Informationen zuleiten dadurch gekennzeichnet, dass die erste Einrichtung (1) Mittel (104) zur Versorgung aus einer auf der Telefonleitung vorhandenen Gleichspannung (−48 Volt) sowie Mittel (15) zum Erzeugen und Übertragen frequenzkodierter Signale (F$_1$ bis F$_5$) für die Weitergabe von Informationen enthält, welche die Überwachung des Telefonapparates betreffen und Ausfällen und betrügerischen Manipulationen zuzuschreibende Funktions-Anomalien anzeigen, und dass die zweite Einrichtung an einem öffentlich nicht zugänglichen Platz installiert ist und Mittel (203), welche die Gleichspannung (−48 Volt) auf die Telefonleitung geben, sowie Mittel (21, 27) zum Empfangen, Decodieren und Interpretieren der sich auf die Überwachung beziehenden Informationen sowie zum Steuern des Betriebs entsprechend der Funktion der Informationen aufweist.

2. System nach Anspruch 1, dadurch gekennzeichnet, dass die erste Einrichtung (1) Mittel $(156, 151_1, 150_1, 152_1)$ zum Übertragen eines ersten Signals $(F_1)$ an die zweite Einrichtung (2) nach der Versorgung der ersten Einrichtung (1) aufweist und dass die zweite Einrichtung (2) Mittel $(271_2)$ aufweist, welche die Mittel zum Anlegen einer Gleichspannung (203) zum Sperren der Versorgung der ersten Einrichtung (1) nach einem Ausbleiben der Übertragung des ersten Signals $(F_1)$ während einer ersten vorgegebenen Zeitspanne $(t_{23})$ veranlassen.

3. System nach Anspruch 1, dadurch gekennzeichnet, dass die erste Einrichtung (1) Mittel (104) zur Versorgung der ersten Einrichtung (1) sowie Mittel $(156, 151, 150_1, 152_1)$ zur Übertragung eines ersten Signals $(F_1)$ zur zweiten Einrichtung (2), wenn die erste Einrichtung (1) versorgt ist, aufweist und dass die zweite Einrichtung (2) Mittel (203) zum Anlegen einer Gleichspannung (−48 Volt) an die Mittel zur Versorgung (104) über die Telefonleitung $(A_1B_1, AB)$, sowie Mittel $(211_1, 212_1, 213_1)$ zum Empfang des ersten Signals $(F_1)$ und Mittel $(271_2)$ zur Feststellung des Ausbleibens der Übertragung und des Empfangs des ersten Signals durch die Mittel zum Übertragen und zum Empfangen $(156, 151, 150_1, 152_1; 211_1, 212_1, 213_1)$ während einer ersten vorbestimmten Zeitspanne $(t_{23})$ aufweist, damit die Mittel zum Anlegen (104) die Gleichspannung nicht weiter anlegen.

4. System nach einem der Ansprüche 1 bis 3 wobei der Telefonapparat Mittel zur Annahme von Münzen oder einer Wertkarte (11, 13) aufweist, dadurch gekennzeichnet, dass die erste Einrichtung (1) Mittel $(170, 157, 150_2$ bis $150_5)$ zur Übertragung eines zweiten Signals $(F_2$ bis $F_5)$ zur zweiten Einrichtung (2) aufweist, wenn eine Münze $(P_1$ bis $P_4)$ oder eine Wertkarte in die Mittel zur Annahme (11, 13) eingeführt ist, und dass die zweite Einrichtung (2) Mittel $(215_7, 272_2, 205)$ zum Durchschleifen der Telefonleitung $(A_0B_0, A_2B_2)$ zwischen der zweiten Einrichtung (2) und der Telefonzentrale (CT) in Abhängigkeit von dem zweiten Signal $(F_2$ bis $F_5)$ zur Simulierung eines Abhängens aufweist.

5. System nach Anspruch 4, dadurch gekennzeichnet, dass das zweite Signal aus mehreren Trägerfrequenzen $(F_2$ bis $F_5)$ zusammengesetzt ist, und dass in der zweiten Einrichtung (2) die Mittel zum Durchschleifen $(215_7, 272_2, 205)$ die Telefonleitung $(A_0B_0, A_2B_2)$ in Abhängigkeit vom Empfang aller Frequenzen $(F_2$ bis $F_5)$ des zweiten Signals durchschleift.

6. System nach Anspruch 4 oder 5, dadurch gekennzeichnet, dass die zweite Einrichtung (2) Mittel $(216, 271_1, 271_3, 271_1, 203)$ zum kurzen Sperren der Versorgung der ersten Einrichtung (1) aufweist, sobald wenigstens ein Teil des zweiten Signals $(F_2$ bis $F_5)$ kontinuierlich während einer zweiten vorbestimmten Zeitspanne $(t_1)$ nach Einführung einer Münze oder einer Karte in die Annahmemittel (11, 13) übertragen wird.

7. System nach einem der Ansprüche 4 bis 6, dadurch gekennzeichnet, dass die zweite Einrichtung (2) Mittel $(274_3, 28R)$ zum entgültigen Sperren der Versorgung der ersten Einrichtung (1) aufweist, wenn das zweite Signal ($F_2$ bis $F_5$) teilweise durch die erste Einrichtung (1) übertragen oder teilweise von der zweiten Einrichtung (2) während einer vorbestimmten zweiten Zeitspanne $(t_1)$ nach Einführung einer Münze oder einer Karte in die Annahmemittel (11, 13) empfangen wird.

8. System nach einem der Ansprüche 4 bis 7, dadurch gekennzeichnet, dass die zweite Einrichtung (2) Zählmittel $(274_2, 277)$ zum entgültigen Sperren der Versorgung der ersten Einrichtung (1) aufweist, wenn eine partielle Übertragung des zweiten Signals durch die erste Einrichtung (1) oder ein partieller Empfang des zweiten Signals durch die zweite Einrichtung (2) während einer zweiten vorbestimmten Zeitspanne $(t_1)$ nach einer vorbestimmten Anzahl (zum Beispiel 8) von aufeinander folgenden Eingaben von Münzen und/oder Karten in die Annahmemittel (11, 13) wiederholt wird.

9. System nach einem der Ansprüche 4 bis 8, dadurch gekennzeichnet, dass ein Sperren der Versorgung der ersten Einrichtung (1) eine Herausgabe der eingegebenen und nicht kassierten Münzen $(P_1$ bis $P_4)$ und/oder eine Zurückweisung einer eingeführten Wertkarte hervorruft.

10. System nach einem der Ansprüche 1 bis 9, dadurch gekennzeichnet, dass die zweite Einrichtung (2) Mittel (201) zur bidirektionalen Übermittlung nur von Signalen aus einem Telefon-Frequenzband (300 bis 3400 Hz), wie etwa Sprachsignale und von Tastatur (CMF) gelieferte multifrequente Wählsignale des Apparates, zwischen dem Apparat und der Zentrale (CT) aufweist.

11. System nach einem der Ansprüche 1 bis 10, in welchem der Apparat Mittel (DC) zur Abgabe von Wählimpulsen aufweist, dadurch gekennzeichnet, dass die erste Einrichtung (1) Mittel zur Übertragung eines dritten, von den Wählimpulsen modulierten Signals $(F_2$ bis $F_5)$ an die zweite Einrichtung (2) aufweist, und dass die zweite Einrichtung (2) Mittel $(211_2-212_2-213_2$ bis $211_5-212_5-213_5, 215_7)$ zum Demodulieren der Wählimpulse sowie Mittel (205) zum Durchschleifen und Entschleifen der Telefonleitung $(A_0B_0, A_2B_2)$ zwischen der zweiten Einrichtung (2) und der Telefonzentrale (CT) in Abhängigkeit von den demodulierten Wählimpulsen aufweist.

12. System nach einem der Ansprüche 4 bis 11, dadurch gekennzeichnet, dass die Mittel zur Abgabe von Wählimpulsen (CT) bezüglich der Abgabe von Wählimpulsen nicht aktiviert sind, wenn die Annahmemittel (11, 13) eine Münze oder eine Karte (14P/C) zu Beginn einer Telefonverbindung empfangen.

13. System nach einem der Ansprüche 1 bis 12, dadurch gekennzeichnet, dass die zweite Einrichtung (2) Mittel ($271_1$, $271_3$, 203, $272_2$, 205) zum kurzen Stoppen der Versorgung der ersten Einrichtung (1) und zum Hervorrufen einer Herausgabe der Münze oder Zurückweisung einer Wertkarte in dem Apparat aufweist, wenn die zweite Einrichtung (2) nach einer zweiten vorbestimmten Zeitspanne ($t_1$) nach Einfügung der Münze oder der Karte in den Apparat kein von der Zentrale (CT) ausgegebenes Antwortsignal (erste Inversion der Batterie) eines gewünschten Teilnehmers empfängt.

14. System nach einem der Ansprüche 1 bis 13, dadurch gekennzeichnet, dass die zweite Einrichtung (2) Mittel (25, 251B) zur Feststellung eines durch die Zentrale (CT) übertragenen Antwortsignals eines gewünschten Teilnehmers, wie beispielsweise eine erste Inversion der Batterie, sowie Mittel ($275_3$, $272_2$, 205) zur Aufrechterhaltung einer Leitungsschleife zwischen der zweiten Einrichtung (2) und der Zentrale (CT) nach einem festgestellten Antwortsignal aufweist.

15. System nach einem der Ansprüche 8 bis 14, dadurch gekennzeichnet, dass die Mittel zur Feststellung eines Antwortsignals (25, 251B) die Zählmittel ($274_2$, 277) nach einem festgestellten Antwortsignal auf Null zurückführen.

16. System nach einem der Ansprüche 1 bis 15, dadurch gekennzeichnet, dass die zweite Einrichtung (2) Mittel (24) zur Feststellung der von der Zentrale (CT) übertragenen Gebührenimpulse, welche vorzugsweise kalibriert sind, sowie Mittel zur Steuerung der Gebührenberechnung (26) zur permanenten Berechnung des Saldos für die Verbindung in Funktion einer Anzahl von Gebührenimpulsen und einer in den Apparat eingegebenen Vorauszahlung während einer ganzen Konversationsphase einer Verbindung und zum Unterbrechen der Verbindung, wenn das Saldo während einer dritten vorbestimmten Zeitspanne ($t_{22}$) negativ bleibt.

17. System nach Anspruch 10, dadurch gekennzeichnet, dass die erste Einrichtung (1) Mittel (11, 12) zum Kassieren wenigstens eines Teiles der Vorauszahlung in Form von Münzen unterschiedlicher Werte ($P_1$ bis $P_4$) sowie Mittel (15) zur Übertragung eines repräsentierenden Signals ($F_2+F_3$, $F_2+F_4$, $F_2+F_3$, $F_3+F_4$) die kassierte Münze an die zweite Einrichtung (2) in Abhängigkeit von einem Kassierungsreihenfolgesignal ($F_6$), welches von der zweiten Einrichtung (2) übertragen wurde, aufweist, und dass die Mittel zur Steuerung der Gebührenberechnung (26) erste Mittel (26DM) zur Berechnung einer ersten Schuld für die Verbindung durch Kummulieren eines Grundgebührenwertes in Abhängigkeit von jedem festgestellten Gebührenimpuls, sowie erste Mittel (26CRM) zur Berechnung eines ersten Kredites für die Verbindung durch Addieren der Werte der während der Verbindung kassierten Münzen in Abhängigkeit von die jeweils kassierten Münzen repräsentierenden Signalen, sowie erste Mittel (26CM) zur fortwährenden Erstellung eines ersten Saldos der Verbindung aus dem Unterschied des ersten Kredits und der Schuld sowie Mittel (263, 22) zum Übertragen des Kassierungsreihenfolgesignals ($F_6$) zur ersten Einrichtung (1) jedesmal dann, wenn das erste Saldo negativ ist, aufweisen.

18. System nach Anspruch 17, dadurch gekennzeichnet, dass die Annahmemittel (11, 12) beim Kassieren der Münzen ($P_1$ bis $P_4$) mit den Münzen des kleinsten Wertes ($P_1$) in Abhängigkeit von aufeinander folgenden Signalen der Kassierungsreihenfolgesignalen ($F_6$) beginnen.

19. System nach Anspruch 17 oder 18, dadurch gekennzeichnet, dass die kassierten Münzen unterschiedlicher Werte ($P_1$ bis $P_2$) repräsentierenden Signale verschiedene Kombinationen von Trägerfrequenzen ($F_2+F_3$, $F_2+F_4$, $F_2+F_5$, $F_3+F_5$) sind.

20. System nach einem der Ansprüche 17 bis 19, dadurch gekennzeichnet, dass die Annahmemittel (11, 12) Mittel ($117_1$, $117_2$, $117_3$, 18) zur Feststellung eines anormalen Weges jeder einkassierten Münze ($P_1$ bis $P_4$) zwischen einer Speicherzone für einzukassierende Münzen ($112_1$ bis $112_4$) und einem Münzbehälter (110) sowie Mittel (tel ($189_1$ bis $189_4$, $151_3$, $151_5$) zum Ersetzen des für eine einkassierte Münze repräsentativen Signals durch ein zur zweiten Einrichtung (2) übertragenes Anomalie-Signal ($F_3+F_5$) aufweisen, wenn ein anormaler Weg der einkassierten Münze festgestellt ist.

21. System nach einem der Ansprüche 17 bis 20, dadurch gekennzeichnet, dass die zweite Einrichtung (2) mit den ersten Mitteln zur Berechnung eines ersten Kredits (26CRM) verbundene Einrichtungen (26MMAX) zum Signalisieren eines einen vorbestimmten Wert überschreitenden Kredits aufweist.

22. System nach einem der Ansprüche 16 bis 21, dadurch gekennzeichnet, dass die erste Einrichtung (1) Mittel (13) zum Einkassieren wenigstens eines Teiles der Vorauszahlung in Form einer Grundgebührenentwertung in einer Wertkarte sowie Mittel (15) zum Übertragen eines für eine entwertete Grundgebühr repräsentativen Signals ($F_4+F_5$) an die zweite Einrichtung (2) in Abhängigkeit von einem zur zweiten Einrichtung (2) übertragenen Kassierungsreihenfolgesignal ($F_6$) aufweist, und dass die Mittel zur Steuerung der Gebührenberechnung (26) zweite Mittel (26DTB) zur Berechnung einer zweiten Schuld für die Verbindung durch Hinzufügung einer Einheit in Abhängigkeit von jedem festgestellten Grundgebührenimpuls sowie zweite Mittel (26CRTB) zur Berechnung eines zweiten Kredits für die Verbindung durch Addition einer Einheit in Abhängigkeit von jedem eine entwertete Gebühr repräsentierenden Signals, sowie zweite Mittel (26CTB) zum dauernden Erstellen eines zweiten Saldos für die Verbindung aus dem Unterschied des zweiten Kredits und der Schuld sowie Mittel (263, 22) zur Übertragung des Kassierungsreihenfolgesignals ($F_6$) immer dann, wenn das zweite Saldo negativ ist, aufweisen.

23. System nach Anspruch 22, dadurch gekennzeichnet, dass das eine entwertete Grundgebühr repräsentierende Signal eine Kombination der Trägerfrequenzen ($F_4 + F_5$) ist.

24. System nach Anspruch 22 oder 23, dadurch gekennzeichnet, dass die zweite Einrichtung (2) Mittel (26TBMAX) aufweist, die mit den zweiten Mitteln zur Berechnung eines zweiten Kredits (26CRTB) verbunden sind, um einen zweiten, einen vorbestimmten Wert überschreitenden Kredit zu signalisieren.

25. System nach Anspruch 16 und nach einem der Ansprüche 22 bis 24, dadurch gekennzeichnet, dass die zweite Einrichtung (2) Mittel (264) zum Auf-Null-Zurückstellen der zweiten Mittel zur Berechnung (26DTB, 26CRTB) in Abhängigkeit von jedem eine einkassierte Münze repräsentierenden Signal ($F_2 + F_3$, $F_3 + F_4$, $F_2 + F_5$, $F_3 + F_5$), sowie Mittel (266) zur Auf-Null-Zurückführung der ersten Mittel zur Berechnung (26DM, 26CRM) in Abhängigkeit von jedem eine entwertete Grundgebühr repräsentierenden Signal ($F_4 + F_5$) aufweist.

26. System nach einem der Ansprüche 17 bis 25, dadurch gekennzeichnet, dass die zweite Einrichtung (2) Mittel ($274_5$, $271_5$, $271_3$) zum kurzzeitigen Unterbrechen der Versorgung der ersten Einrichtung (1) am Ende einer vorbestimmten vierten Zeitspanne ($t_5$) aufweist, während welcher das Kassierungsreihenfolgesignal ($F_6$) übertragen wird, ohne dass die zweite Einrichtung (2) eines der repräsentativen Signale empfängt.

27. System nach einem der Ansprüche 17 bis 26, dadurch gekennzeichnet, dass die erste Einrichtung (1) Mittel (156, $151_1$) zum Signalisieren der Abwesenheit (Abwesenheit von $F_1$) einer Vorauszahlung (Münze oder Wertkarte) in den Annahmemitteln (11, 12, 13) der zweiten Einrichtung (2) in Abhängigkeit von jedem Kassierungsreihenfolgesignal ($F_6$) aufweist, und dass die zweite Einrichtung (2) Mittel ($274_6$, $278_3$, $272_3$, 206, 207) zum Übertragen eines Zeichens (erschöpfter Kredit) an die erste Einrichtung (1), vorzugsweise eines Zeichens (Warten) an einen gerufenen Teilnehmer über die Zentrale (CT) während höchstens einer vorbestimmten dritten Zeitspanne ($t_{22}$) und solange ein Saldo für die Verbindung negativ bleibt, sowie Mittel ($271_2$, $274_7$, $271_3$, 203) zum kurzen Unterbrechen der Versorgung der ersten Einrichtung 1 aufweist, wenn das Saldo nach der dritten vorbestimmten Zeitspanne ($t_{22}$) negativ bleibt.

28. System nach Anspruch 27, dadurch gekennzeichnet, dass die zweite Einrichtung (2) Mittel ($271_2$, $274_4$, $272_4$, 2020) zum Unterbrechen der über die Leitung (AB, $A_2$, $B_2$) übermittelten Wortsignale während höchstens einer fünften vorbestimmten Zeitspanne ($t_{22} - t_{21}$) vor dem Ende der vorbestimmenden dritten Zeitspanne ($t_{22}$) aufweist, wenn das Saldo negativ bleibt.

29. System nach einem der Ansprüche 1 bis 28, dadurch gekennzeichnet, dass die zweite Einrichtung (2) Mittel (25, 25TB, $278_2$, $271_3$, 203) zum kurzzeitigen Unterbrechen der Versorgung der ersten Einrichtung (1) in Abhängigkeit von einem Gewünschter- Teilnehmer- abgehängt- Signal (zweite Inversion der Batterie) aufweist, das durch die Zentrale (CT) übertragen wird.

30. System nach einem der Ansprüche 1 bis 29, dadurch gekennzeichnet, dass die erste Einrichtung (1) manuell betätigte Mittel (115, 116) zum kurzen Unterbrechen der Versorgung der ersten Einrichtung (1) aufweist, um ein Abhängen durch den Benutzer zu simulieren.

31. System nach einem der Ansprüche 1 bis 30, dadurch gekennzeichnet, dass die erste Einrichtung (1) Mittel (11, 12) zum Kassieren von Münzen unterschiedlicher Werte ($P_1$ bis $P_4$) in einen lösbaren Behälter eines abgeschlossenen Faches (110) sowie Mittel (117, 118) zum Feststellen einer Öffnung des Faches (110) und/oder einer Entnahme des Behälters aus dem Fach, sowie Mittel ($151_3$, $151_5$) zum Übertragen eines Fachöffnungssignals ($F_3 + F_5$) und/oder der Entnahme des Behälters an die zweite Einrichtung (2) aufweist und dass die zweite Einrichtung (2) Mittel ($215_6$) zum Feststellen des Fachöffnungssignals und/oder der Entnahme aufweist, um eine Öffnung des Faches und/oder Entnahme des Behälters zu signalisieren.

32. System nach Anspruch 31 und nach Anspruch 17 oder 22, dadurch gekennzeichnet, dass die Mittel zum Feststellen einer Offnung und/oder Entnahme (117, 118) die Versorgung der Annahmemittel (11, 12; 13) unterbrechen, wenn eine Öffnung und/oder Entnahme festgestellt sind, um den Aufbau einer Verbindung zu verhindern.

33. System nach Anspruch 17 oder 22 sowie nach Anspruch 33 oder 32, dadurch gekennzeichnet, dass die Mittel der Steuerung der Gebührenberechnung (26) Mittel (26TM, 26TTB) zum Aufsummieren der ersten und/oder zweiten Kredite für die Verbindung zwischen zwei aufeinander folgenden Öffnungen und/oder Entnahmen sowie Mittel (21A, $282_1$ bis $282_{12}$) zum Ablesen der aufsummierten Beträge in den Mitteln zum Aufsummieren in Abhängigkeit von einem Fachöffnungssignal und/oder von einem Entnahmesignal ($F_3 + F_5$).

34. System nach Anspruch 33, dadurch gekennzeichnet, dass die zweite Einrichtung (2) Mittel (28, 3, 30, 32) zum Übertragen der aufsummierten Beträge an die Mittel der Fernverwaltung (OG) über ein Telefonnetz (31) aufweist, wenn das Fachöffnungssignal ($F_3 + F_5$) in der zweiten Einrichtung (2) festgestellt ist.

35. System nach einem der Ansprüche 1 bis 34, dadurch gekennzeichnet, dass die zweite Einrichtung (2) Mittel ($271_1$, $274_4$, $281_8$) zum Ausserbetriebsetzen der ersten Einrichtung (1) durch Unterbrechen der Versorgung derselben, wenn das Fachöffnungssignal und/oder das Signal der Entnahme von der zweiten Einrichtung (2) während höchstens einer vorbestimmten sechsten Zeitspanne ($t_1$) empfangen wird, aufweist.

36. System nach Anspruch 17 und nach einem der Ansprüche 31 bis 35, dadurch gekennzeichnet, dass die Mittel zur Steuerung der Gebührenberechnung (26) Mittel (26TM) zum Aufsummieren der ersten Kredite für die Verbindung zwischen zwei aufeinander folgenden Öffnungen und/oder Entnahmen sowie Mittel (26CTM) zum Vergleichen der Gesamtsumme der aufsummierten ersten Kredite mit einem vorbestimmten Betrag aufweist, um zu signalisieren, dass der Behälter keine Münzen enthält.

37. System nach einem der Ansprüche 1 bis 36, dadurch gekennzeichnet, dass die zweite Einrichtung (2) Mittel ($200_0$, 25, 25AP) zum Feststellen eines von der Zentrale (ZT) übertragenen Rufsignals eines rufenden Teilnehmers aufweist, um eine R-Verbindung aufzubauen sowie Mittel ($272_3$, 206, 207) zum Übertragen eines Rufzeichens an die erste Einrichtung (1), welches von einem Lautsprecher (HP) des öffentlichen Telefonapparates abgegeben ist, vorzugsweise eines Rufzeichens an die Zentrale (CT), um einem anrufenden Teilnehmer einen öffentlichen Telefonapparat anzuzeigen.

38. System nach Anspruch 37, dadurch gekennzeichnet, dass das Rufzeichen während wenigstens einer vorbestimmten siebten Zeitspanne ($t_{AP}$) übertragen wird.

39. System nach Anspruch 30 sowie nach Anspruch 17 oder 22, dadurch gekennzeichnet, dass die erste Einrichtung (1) Mittel (170, 157) zum Übertragen eines zweiten Signals ($F_2$ bis $F_5$) zur zweiten Einrichtung (2) aufweist, wenn eine Vorauszahlung in die Annahmemittel (11, 12; 13) vor Ablauf der vorbestimmten siebten Zeitspanne ($t_{AP}$) eingegeben ist, und dass die zweite Einrichtung (2) Mittel (21DEC, $272_2$, 205) zum Durchschleifen der Telefonleitung ($A_0B_0$, $A_2B_2$) in der Zentrale (CT) in Abhängigkeit vom zweiten Signal ($F_2$ bis $F_5$) aufweist, um ein Abhängen durch den Benutzer zu simulieren und das Rufsignal zu beenden.

40. System nach Anspruch 16 und 39, dadurch gekennzeichnet, dass die zweite Einrichtung (2) Mittel (217) zum Sperren der Steuerung der Gebührenberechnung (26) in Abhängigkeit von dem zweiten Signal ($F_2$ bis $F_5$) aufweist.

41. System nach Anspruch 32 sowie nach Ansprüchen 39 oder 40, dadurch gekennzeichnet, dass die zweite Einrichtung (2) Mittel ($215_7$, $272_2$, 205) zum Unterbrechen der R-Verbindung in Abhängigkeit vom Fachöffnungssignal und/ oder dem Signal der Entnahme ($F_3 + F_5$) aufweist.

42. System nach einem der Ansprüche 39 bis 42, dadurch gekennzeichnet, dass die zweite Einrichtung (2) Mittel (251, 25D/R, $272_2$, 205) zum Durchschleifen und zum Entschleifen der Telefonleitung ($A_0B_0$, $A_2B_2$) an der Zentrale (CT) aufweist, wenn das zweite Signal ($F_2$ bis $F_5$) während der vorbestimmten siebten Zeitspanne ($t_{AP}$) nicht festgestellt worden ist.

43. System nach einem der Ansprüche 1 bis 42, bei welchem der öffentliche Telefonapparat einen Hörer (C) mit Telefonhörer (e) und Mikrofon (M), einen festen Lautsprecher (HP) sowie ein festes Mikrofon (M) aufweist, dadurch gekennzeichnet, dass der Apparat bei Ergreifen des Hörers (C) manuell betätigbare Mittel (P, 103) zum Steuern der Umschaltmittel ($101R_1$, $101R_2$,

$101T_1$, $101T_2$) aufweist, welche wahlweise den Telefonhörer (e) und das Mikrofon (M) des Hörers mit dem mit der Telefonleitung (AB, $A_2B_2$) festen Lautsprecher (HP) und Mikrofon (M) verbinden.

44. System nach einem der Ansprüche 1 bis 43, dadurch gekennzeichnet, dass die zweite Einrichtung (2) Mittel (28, 3, 30, 32) zum Übertragen von Signalen an die Mittel zur Fernverwaltung (OG) über das Telefonnetz (31) aufweist, welche insbesondere Funktionsanomalien ($28A_1$ bis $28A_4$, $28A_8$) der ersten Einrichtung (1) und/oder Kostenüberschreitung der Verbindung ($28A_5$ bis $28A_7$) anzeigen.

45. System nach Anspruch 44, dadurch gekennzeichnet, dass eine Funktionsanomalie besteht aus

– einem Übertragungsfehler der ersten Einrichtung (1) oder einem Empfangsfehler der zweiten Einrichtung (2) bezüglich eines ersten Signals ($F_1$), welches vorzugsweise dauernd von der ersten Einrichtung (1) übertragen wird, oder einer anormalen Schwächung oder einer Unterbrechung der Telefonleitung ($AB-A_2B_2$) zwischen den Einrichtungen ($28A_1$) oder

– einem Übertragungsfehler der ersten Einrichtung (1) oder einem Empfangsfehler der zweiten Einrichtung (2) bezüglich eines Teiles oder der Gesamtheit eines zweiten Signals ($F_2$ bis $F_5$), welches von der ersten Einrichtung (1) nach einer Abhängphase übertragen wird, die durch Einführen einer Vorauszahlung in die Annahmemittel (11, 12, 13) der ersten Einrichtung ($28A_2$) simuliert ist, oder

– einer vorbestimmten Anzahl aufeinander folgender und erfolgloser Aufbauversuche einer Verbindung ohne Austausch von Sprachsignalen von einer ersten Einrichtung ($28A_3$) ausgehend, wobei jeder Aufbauversuch eine vorbestimmte erste Zeitspanne ($t_1$) überschreitet oder

– einem Kassierfehler eines Teiles einer in die erste Einrichtung (1) eingeführten Vorauszahlung nach Übertragung eines Kassierreihenfolgesignals ($F_6$) durch die zweite Einrichtung (2) an die erste Einrichtung während wenigstens einer vorbestimmten vierten Zeitspanne ($t_5$) ($28A_4$) oder

– einer Öffnung eines Faches (110), welches einen Münzbehälter in dem Telefonapparat enthält oder einer Entnahme des Behälters aus dem Fach während wenigstens einer vorbestimmten ersten Zeitspanne ($t_1$) ($28A_8$).

46. System nach Anspruch 44 oder 45, dadurch gekennzeichnet, dass eine Kostenüberschreitung der Verbindung besteht aus

– Kosten der Verbindung, die durch die in der ersten Einrichtung (1) einkassierten Münzen entrichtet sind und die einen vorbestimmten Maximal-Kostenbetrag der Verbindung ($28A_5$) überschreiten oder

– Kosten der Verbindung, die durch eine in die erste Einrichtung (1) eingeführte Wertkarte entrichtet sind und die einen vorbestimmten, durch eine Karte ($28A_6$) verfügbaren Wert überschreiten oder

– einem Münzbetrag in dem Behälter der ersten Einrichtung (1), der einen vorbestimmten Maximal-Münzbetrag überschreitet, welcher in dem Behälter enthalten sein kann ($28A_7$).

## Claims

1. Control and monitoring system for a prepayment public telephone apparatus connected to a telephone central office (CT) though a telephone line, comprising a first equipment (1) associated to the apparatus and connected to a first end (A, B) of the telephone line and a second equipment (2) associated to the telephone central office (CT) and connected to a second end ($A_1$, $B_1$) of the telephone line, the first and second equipments (1 and 2) mutually transmitting frequency-coded signal though the telephone line to carry data relating to the control of the apparatus, characterized in that the first equipment (1) comprises power supplying means (104) from a dc voltage (−48 volts) available in the telephone line and means (15) for deriving and transmitting frequency-coded signals ($F_1$ to $F_5$) to carry data relating to the monitoring of the apparatus and indicating operating anomalies in the apparatus resulting from failures and fraudulent actions, and in that the second equipment is installed to a location inaccessible to the public and comprises means (203) for applying said dc voltage (−48 volts) in the telephone line and means (21, 27) for receiving, decoding and explaining said data relating to the monitoring and checking the operation of the apparatus also as a function of this data.

2. System according to claim 1, characterized in that the first equipment (1) comprises means ($156_1$, $151_1$, $150_1$, $152_1$) for transmitting a first signal ($F_1$) to the second equipment (2) responsive to powering of the first equipment (1) and in that the second equipment (2) comprises means ($271_2$) controlling the dc voltage applying means (203) for stopping the power supply to the first equipment (1) following a first signal ($F_1$) transmission failure during a predetermined period ($t_{23}$).

3. System according to claim 1, characterized in that the first equipment (1) comprises means (104) for power supplying the first equipment (1) and means (156, 151, $150_1$, $152_1$) for transmitting a first signal ($F_1$) to the second equipment (2) when the first equipment (1) is power supplied, and in that the second equipment (2) comprises means (203) for applying a dc voltage (−48 volts) to the power supplying means (104) through said telephone line ($A_1$ $B_1$, AB), means ($211_1$, $212_1$, $213_1$) for receiving said first signal ($F_1$) and means ($271_2$) for detecting transmission and reception faults in said first signal via said transmitting and receiving means (156, 151, $150_1$, $152_1$; $211_1$, $212_1$, $213_1$) during a first predetermined period ($t_{23}$) whereby said applying means (104) do not apply said dc voltage.

4. System according to any one of claims 1 to 3, in which said apparatus comprises coin and/or prepaid card collecting means (11, 13), characterized in that the first equipement (1) comprises means (170, 157, $150_2$ to $150_5$) for transmitting a second signal ($F_2$ to $F_5$) to the second equipment (2) as soon as a coin ($P_1$ to $P_4$) or a card is inserted into the collecting means (11, 13) and in that the second equipment (2) comprises means ($215_7$, $272_2$, 205) for looping the telephone line ($A_0$ $B_0$, $A_2$ $B_2$) between the second equipment (2) and the central office (CT) in response to said second signal ($F_2$ to $F_5$), thereby simulating a hook-off.

5. System according to claim 4, characterized in that the second signal is made up of several carrier frequencies ($F_2$ to $F_5$) and in that in the second equipment (2), the looping means ($215_7$, $272_2$, 205) loops the telephone line ($A_0$ $B_0$, $A_2$ $B_2$) upon reception of all the frequencies ($F_2$ to $F_5$) of said second signal.

6. System according to claim 4 or 5, characterized in that the second equipment (2) comprises means (216, $271_1$, $271_3$, $271_1$, 203) for briefly interrupting the power supply of the first equipment (1) as soon as at least a part of the second signal ($F_2$ to $F_5$) is transmitted continuously for a second predetermined period ($F_1$) following insertion of a coin or card in the collecting means (11, 13).

7. System according to any one of claims 4 to 6, characterized in that the second equipment (2) comprises means ($274_3$, 28R) for definitively stopping the power supply of the first equipment (1) when said second signal ($F_2$ to $F_5$) is partially transmitted by the first equipement (1) or partially received by the second equipment (2) for a second predetermined period ($t_1$) following insertion of a coin or a card into the collecting means (11, 13).

8. System according to any one of claims 4 to 7, characterized in that the second equipment (2) comprises counting means ($274_2$, 277) for definitively stopping the power supply of the first equipement (1) when a partial transmission of said second signal from the first equipement (1) or a partial reception of said second signal by the second equipement (2) for a second predetermined period ($t_1$) is repeated after a predetermined number (e.g. 8) of successive coin and/or card insertions into the collecting means (11, 13).

9. System according to any one of claims 4 to 8, characterized in that a cessation in the power supply of the first equipement (1) triggers refunding of not collected inserted coins ($P_1$ to $P_4$) and/or ejecting of a inserted prepaid card.

10. System according to any of claims 1 to 9, characterized in that the second equipment (2) comprises means (201) for bidirectional carrying only signals within a telephone frequency band (300 to 3400 Hz), such as voice signals and multifrequency dialling signals delivered by a keyboard (CMF) of the apparatus, between the apparatus and the central office (CT).

11. System according to any one fo claims 1 to 10, in which said apparatus comprises means (CD) for delivering dialling pulses, characterized in that the first equipment (1) comprises means for transmitting a third signal ($F_1$ to $F_5$) mod-

ulated by the dialling pulses to the second equipement (2) and in that the second equipment (2) comprises means ($211_2$-$212_2$-$213_2$ to $211_5$-$212_5$-$213_5$, $215_7$) for demodulating the dialling pulses and means (205) for looping and unlopping the telephone line ($A_0$ $B_0$, $A_2$ $B_2$) between the second equipment (2) and the telephone central office (CT) in response to the demodulated dialling pulses.

12. System according to claims 4 and 11, characterized in that the dialling pulses delivering means (CD) are activated thereby delivering dialling pulses only when the collecting means (11, 13) receives a coin or card (14P/C) at the beginning of a telephone communication.

13. System according to any one of claims 1 to 12, characterized in that the second equipement (2) comprises means ($271_1$, $271_3$, 203, $272_2$, 205) for briefly interrupting the power supply of the first equipement (1) and triggering refunding of coin or ejection of a prepaid card from said apparatus, when the second equipment (2) does not receive a response signal (first battery reversal) from a called subscriber delivered by the central office (CT), after a second predetermined period ($t_1$) following insertion of coin or card into said apparatus.

14. System according to any one of claims 1 to 13, characterized in that the second equipment (2) comprises means (25, 25IB) for detecting a response signal from a called party transmitted by the central office (CT), such as a first battery reversal, and means ($275_3$, $272_2$, 205) for holding a line loop between the second equipment (2) and the central office (CT) following the detected response signal.

15. System according to claims 8 and 14, characterized in that the response signal detecting means (25, 25IB) resets the counting means ($274_2$, 277) following the detected response signal.

16. System according to any one of claims 1 to 15, characterized in that the second equipment (2) comprises means (24) for detecting charge pulses transmitted by the central office (CT), the detected charge pulses preferably being calibrated, and charging checking means (26) for constant evaluating a communication balance as a function of a number of charge pulses and a prepaid credit inserted into the apparatus throughout a conversation phase of a communication and for breaking off the communication after the balance has been negative for a third predetermined period ($t_{22}$).

17. System according to claim 10, characterized in that the first equipment (1) comprises means (11, 12) for collecting, at least in part, said prepaid credit in the form of coins of various values ($P_1$ to $P_4$), and means (15) for transmitting a signal ($F_2 + F_3$, $F_2 + F_4$, $F_2 + F_3$, $F_3 + F_4$) representative of collected coin to the second equipment (2) in response to a collection order signal transmitted by the second equipment (2), and in that the charging checking means (26) comprises first means (26DM) for calculating a first communication debit by cumulating the value of a basic charge unity in response to each detected charge pulse, first means (26CRM) for calculating a first communication credit by adding the values of collected coins during the communication in response to the signals representative of the collected coins respectively, first means (26CM) for establishing a first communication balance equal to the difference between the first credit and debit, and means (263, 22) for transmitting said collection order signal ($F_6$) to the first equipment (1) whenever said balance is negative.

18. System according to claim 17, characterized in that the collecting means (11, 12) collects the coins ($P_1$ to $P_4$) starting with the coin of lowest value ($P_1$), in response to the successive collection order signals ($F_6$).

19. System according to claim 17 or 18, characterized in that the signals representative of the collected coins of various values ($P_1$ to $P_4$) are distinct combinations of carrier frequencies ($F_2 + F_3$, $F_2 + F_4$, $F_2 + F_5$, $F_3 + F_5$) respectively.

20. System according to any one of claims 17 to 19, characterized in that collecting means (11, 12) comprises means ($117_1$, $117_2$, $117_3$, 18) for detecting abnormal routing of each collected coin ($P_1$ to $P_4$) between a storage zone for coins to be collected ($112_1$ to $112_4$) and a collected coin receptacle (110), and means ($189_1$ to $189_4$, $151_3$, $151_5$) for replacing the collected coin representing signal by an anomaly signal ($F_3 + F_5$) transmitted to the second equipment (2) when an abnormal routing of the collected coin is detected.

21. System according to any one of claims 17 to 20, characterized in that the second equipment (2) comprises means (26MMAX) connected to the first credit calculating means (26CRM) for signalling a first credit exceeding a predetermined value.

22. System according to any one of claims 16 to 21, characterized in that the first equipment (1) comprises means (13) for collecting at least part of said prepaid credit in the form of cancellation of charge unities from a prepaid card, and means (15) for transmitting a signal representative of a cancelled charge unity ($F_4 + F_5$) to the second equipment (2) in response to a collection order signal ($F_6$) transmitted by the second equipment (2), and in that the charging checking means (26) comprises second means (26DIB) for calculating a second communication debit by adding one unity in response to each detected charge unity pulse, second means (26CRTB) for calculating a second credit communication by adding an unity in response to each cancelled charge unity representative signal, second means (26CTB) for constantly establishing a second balance of the communication equal to the difference between the second debit and credit, and means (263, 22) for transmitting said collection order signal ($F_6$) whenever said second balance is negative.

23. System according to claim 22, characterized in that the signal representative a cancelled charge unity is a combination of carrier frequencies ($F_4 + F_5$).

24. System according to claim 22 or 23, characterized in that the second equipement (2) comprises means (26TBMAX) connected to the second second-credit calculating means (26CRTB) for signalling a second credit exceeding a predetermined value.

25. System according to claim 16 and to any one of claims 22 to 24, characterized in that the second equipment (2) comprises means (264) for resetting the second calculating means (26DTB), 26CRTB) in response to each signal representing a collected coin ($F_2+F_3$, $F_3+F_4$, $F_2+F_5$, $F_3+F_5$) and means (266) for resetting the first calculating means (26DM, 26CRM) in response to each signal representing a cancelled charge unity ($F_4+F_5$).

26. System according to any one of claims 17 to 25, characterized in that the second equipment (2) comprises means ($274_5$, $271_5$, $271_3$) for briefly breaking the power supply of the first equipment (1) upon expiry of a fourth predetermined period ($t_5$) during which the collection order signal ($F_6$) is transmitted without the second equipment (2) receiving any one of the representing signals.

27. System according to any one of claims 17 to 26, characterized in that the first equipment (1) comprises means (156, $151_1$) for signalling an absence (absence of $F_1$) of a prepaid credit (coin or card) in the collecting means (11, 12, 13) in the second equipment (2) in response to each collection order signal ($F_6$) and in that the second equipment (2) comprises means ($274_6$, $278_3$, $272_3$, 206, 207) for transmitting a tone (no more credit) to the first equipment (1), and preferably a tone (please hold) to a called subscriber via the central office (CT), during no longer than a third perdetermined period ($t_{22}$) and as long as a balance of the communication remains negative, and means ($271_2$, $274_7$, $271_3$, 203) for briefly breaking the power supply of the first equipment (1) when said balance remains negative after said third predetermined period ($t_{22}$).

28. System according to claim 27, characterized in that the second equipment (2) comprises means ($271_2$, $274_4$, $272_4$, 2020) for interrupting voice signals carried by the line (AB, $A_2 B_2$) for at most a fifth predetermined period ($t_{22}-t_{21}$) preceding the end of the third predetermined period ($t_{22}$) when the balance remains negative.

29. System according to any one of claims 1 to 28, characterized in that the second equipment (2) comprises means (25, 25IB, $278_2$, $271_3$, 203) for briefly breaking the power supply of the first equipment (1) in response to a called subscriber hook-on signal (second battery reversal) transmitted by the central office (CT).

30. System according to any one of claims 1 to 29, characterized in that the first equipment (1) comprises means (115, 116) manually actuated for briefly breaking the power supply of the first equipment (1) thereby simulating a calling user hook-on.

31. System according to any one of claims 1 to 30, characterized in that the first equipment (1) comprises means (11, 12) for collecting coins of various values ($P_1$ to $P_4$) in a removable receptacle in a closing compartment (110), means (117, 118) for detecting an opening of the compartment (110) and/or a removal of the receptacle from the compartment, and means ($151_3$, $151_5$) for transmitting a signal ($F_3+F_5$) indicating opening of the compartment and/or removal of the receptacle to the second equipment (2) and in that the second equipment (2) comprises means ($215_6$) for detecting said opening and/or removal signal thereby signalling opening of the compartment and/or removal of the receptacle.

32. System according to claim 31 and to claim 17 or 22, characterized in that the opening and/or removal detecting means (117, 118) breaks the power supply of the collecting means (11, 12; 13) as soon as an opening and/or a removal is detected, so as to prevent establishment of a communication.

33. System according to claim 17 or 22 and to claim 31 or 32, characterized in that the charging checking means (26) comprises means (26TM, 26TTB) for totalizing the first and/or second communication credits between two successive openings and/or removals and means (21A, $282_1$ to $282_{12}$) for reading totalizer amounts in the totalizing means in response to the opening and/or removal signal ($F_3+F_5$).

34. System according to claim 33, characterized in that the second equipment (2) comprises means (28, 3, 30, 32) for transmitting said totalizer amounts to remote management means (OG) through a telephone network (31), as soon as the compartment opening signal ($F_3+F_5$) is detected in the second equipment (2).

35. System according to any one of claims 31 to 34, characterized in that the second equipment (2) comprises mean ($271_1$, $274_4$, $281_8$) for placing the first equipment (1) in out-of-service mode by cutting off the power supply thereof when the opening and/or removal signal is received by the second equipment (2) for longer than a sixth predetermined period ($t_1$).

36. System according to claim 17 and to any one of claims 31 to 35, characterized in that the charging checking means (26) comprises means (26TM) for totalizing the first communication credits between two successive openings and/or removals and means (26CTM) for comparing the total of the first totalized credits with a predetermined amount in order to signal that the receptacle is full with coins.

37. System according to any one of claims 1 to 36, characterized in that the second equipment (2) comprises means ($200_0$, 25, 25AP) for detecting a calling subscriber ringing signal transmitted by the central office (CT) in order to establish an incoming communication and means ($272_3$, 206, 207) for transmitting a ringing tone to the first equipment (1), and broadcast by a loudspeaker (HP) in the public telephone apparatus and, preferably, a ringing tone to the central office (CT) to indicate a public telephone apparatus call to the called subscriber.

38. System according to claim 37, characterized in that said ringing tone is transmitted for no longer than a seventh predetermined period ($t_{AP}$).

39. System according to claim 38 and to claim 17 or 22, characterized in that the first equipment (1) comprises means (170, 157) for transmitting a second signal ($F_2$ to $F_5$) to the second equipment when a prepaid credit is inserted into the collecting means (11, 12; 13) before expiry of said seventh predetermined period ($t_{AP}$) and in that the second equipment (2) comprises means (21DEC, $272_2$, 205) for looping the telephone line ($A_0 B_0$, $A_2 B_2$) on the central office side (CT) in response to said second signal ($F_2$ to $F_5$) thereby similating an user hook-off and stopping the ringing signal.

40. System according to claims 16 and 39, characterized in that the second equipment (2) comprises means (217) for inhibiting the charging checking means (26) in response to said second signal ($F_2$ to $F_5$).

41. System according to claim 31 and to claims 39 or 40, characterized in that the second equipment (2) comprises means ($215_7$, $272_2$, 205) for interrupting the incoming communication in response to said opening and/or removal signal ($F_3 + F_5$).

42. System according to any one of claims 39 to 42, characterized in that the second equipment (2) comprises means (251, 25D/R, $272_2$, 205) for looping and unlooping the telephone line ($A_0 B_0$, $A_2 B_2$) on the central office (CT) side when said second signal ($F_2$ to $F_5$) is not detected during said seventh predetermined period ($t_{AP}$).

43. System according to any one of claims 1 to 42, in which said public telephone apparatus comprises a handset (C) having an earpiece (e) and a microphone (m), a fixed loudspeaker (HP) and a fixed microphone (M), characterized in that the apparatus comprises means (P, 103) manually activated when the handset (C) is grasped, for controlling switching means ($101R_1$, $101R_2$, $101T_1$, $101T_2$) selectively connecting the earpiece (e) and the microphone (m) of the handset and the fixed loudspeaker (HP) and microphone (M) to the telephone line (AB, $A_2 B_2$).

44. System according to any one of claims 1 to 43, characterized in that the second equipment (2) comprises means (28, 3, 30, 32) for transmitting signals to remote management means (OG) via a telephone network (31), notably indicating operating anomalies ($28A_1$ to $28A_4$, $28A_8$) in the first equipment (1) and/or an excessive communication costs ($28A_5$ to $28A_7$).

45. System according to claim 44, characterized in that an operating anomaly consists of:

– a transmission fault in the first equipment (1) or reception fault in the second equipment (2) concerning a first signal ($F_1$) transmitted almost permanently by the first equipment (1), or an abnormal attenuation or a breakage of the telephone line (AB–$A_2 B_2$) between the equipments ($28A_1$), or

– a transmission fault in the first equipment (1) or reception fault in the second equipment (2) concerning all or part of a second signal ($F_2$ to $F_5$) transmitted by the first equipment (1) following a hook-off phase simulated by insertion of a prepaid credit into collecting means (11, 12, 13) in the first equipment ($28A_2$), or

– a predetermined number of consecutive fruitless call attempts, without exchange of voice signals from the first equipment ($28A_3$), each of the attempts exceeding a first predetermined period ($t_1$), or

– a collection fault concerning part of prepaid credit inserted into the first equipment (1) following transmission of a collection order signal ($F_6$) by the second equipment (2) to the first equipment for at least a fourth predetermined period ($t_5$) ($28A_4$), or

– opening of a compartment (110) containing a coin receptacle in the telephone apparatus or a withdrawal of the receptacle from the compartment during at least a first predetermined period ($t_1$) ($28A_8$).

46. System according to claim 44 or 45, characterized in that an excessive communication cost consists in

– a cost of a communication prepaid by coins collected in the first equipment (1) and exceeding a predetermined maximum amount of communication cost ($28A_5$), or

– a cost of a communication prepaid by means of a prepaid card inserted into the first equipment (1) and exceeding a predetermined maximum credit value available with a card ($28A_6$), or

– an amount of coins collected in the receptacle in the first equipment (1) exceeding a predetermined maximum amount of coins which the receptacle is capable of containing ($28A_7$).

FIG.1A
APPAREIL TELEPHONIQUE PUBLIC
EQUIPEMENT PASSIF 1

Vers FIG.1B

EP 0 188 139 B1

1/14

# FIG.1B

APPAREIL TELEPHONIQUE PUBLIC
EQUIPEMENT PASSIF 1

CIRCUIT DE PROTECTION

Vers FIG. 1A

A ( 0V)

PRO

B (-48V)

CLAVIER DECIMAL — IN

TR

CD

CIRCUIT DE CONTROLE DE PIECES (FIG.2B)

$112_1$ à $112_4$

CIRCUIT DE CODAGE ET TRANSMISSION DE SIGNALISATIONS (FIG.3)

15

12

CIRCUIT DE RECEPTION ET DECODAGE D'ORDRE D'ENCAISSEMENT (FIG.3)

16    160

$175_1$ à $175_4$

$14P_1$ à $14P_4$

CIRCUIT DE DETECTION DE PIECE

12E

14P/C

17    18

MECANISME D'ENCAISSEMENT A PIECES (FIG.2A)

11

$176_1$ à $176_3$

CIRCUIT DE VALIDATION DE PIECE

12PP

CIRCUIT DE COMMUTATION (FIG.2C)

11R

$118_1$ à $118_3$

12A

$12P_1$ à $12P_4$

14

110

COMPARTIMENT DE CAISSETTE

+6V

13R    13E

MECANISME D'ENCAISSEMENT A CARTE PREPAYEE

13

13PC

13TB

EP 0 188 139 B1

2/14

39

# FIG. 2A

4/14 FIG.2B

CIRCUIT DE DETECTION DE PIECE 17

CIRCUIT DE VALIDATION DE PIECE 18

de 113₁ à 113₄ (FIG.2A)

de FIG.2A

P₁ à P₄

de FIG.2A

de 118₁

de 118₂

de' 118₃

validation d'encaissement

Vers 13R, 110, 11R (FIG.2A)

(vers 13E (FIG 2A)

de 13TB (FIG.2A) — Oblitération d'une taxe de base

de 13PC (FIG.2A) — carte à avoir non nul

de 140C (FIG.2C)

de FIG.3

Vers FIG.3

Vers FIG.3

Vers 14 (FIG.2C)

5/14

# FIG.2C

CIRCUIT DE COMMUTATION 14

Vers 12E (FIG.2B)

de 12PP ((FIG.2B)

pièce ou carte ⟺ décrochage

$141_0$

$142$

$14P'C$

de FIG.2B

de $12P_1$

$141_1$   $14P_1$

de $12P_2$

$141_2$   $14P_2$

de $12P_3$

$141_3$   $14P_3$

de $12P_4$

$141_4$   $14P_4$

Vers 15 (FIG.3)

$140P$

$143$

Vers 13E (FIG.2A-2B) $140C$

vers 18 (FIG.2B)

$144$

de et vers FIG.3

de 13TB (FIG.2A et 2B)

de 13R (FIG.2A)

de 13PC (FIG.2A et 2B)

ordre d'encaissement 160

relevage caissette / anomalie encaissement

FIG. 3

EP 0 188 139 B1

6/14

FIG.4

FIG.5

CIRCUIT DE CODAGE ET TRANSMISSION D'ORDRE D'ENCAISSEMENT

CIRCUIT DE RECEPTION ET DECODAGE DE SIGNALISATIONS

FIG. 6A — MONITEUR DE COMMUNICATION TELEPHONIQUE $27$

FIG.6B

MONITEUR DE COMMUNICATION TELEPHONIQUE

27

de 27H (FIG.6A)

Vers 276₁ (FIG.6A)

de t₁ et t₃ (FIG.6A)

de 21DEC(FIG.6A)

vers RZ₁ (FIG.6A)

Vers 276₁ (FIG.6A)

Vers 272₁ (FIG.6A)

27 TON

25 CAP

25 AP    Appel

21 V    Veille

ordre d'encaissement

de 263 (FIG.8)

$t_4 = 102ms$

$t_5 = 6s$

MONOSTABLE RC = 300s

$t_{21} = 6s$    $t_{22} = 13s$    $t_{23} = 26s$

TONALITES "crédit épuisé" "rester en attente" "appel"

28A₄

206

207

2021

+6V   28A₁

EP 0 188 139 B1

10/14

FIG.7

CIRCUIT DE DETECTION D'IMPULSION DE TAXE 24

CIRCUIT DE DETECTION D'INVERSION ET DE COUPURE DE TENSION 25

$200_0$ LIMITEUR DE TENSION

$1^{re}$ inversion $2^{me}$ inversion

Conversation

EP 0 188 139 B1

12/14

# FIG.8

CIRCUIT DE CONTROLE
DE TAXATION 26

26TM — COMPTEUR TOTALISATEUR DE MONNAIE
RZ
4x6fils
28TM
8fils   Montant maxi   33TM
"caissette pleine"

26 CTM — COMPARATEUR
28A₇
33CM

26MMAX
COMPARATEUR
Coût maxi d'une communication
28A

encaissement pièce

26CRM
26DM
260₁   33TB

21P₁
21P₂
REGISTRE DE CREDIT DE MONNAIE
REGISTRE DE DEBIT DE MONNAIE
Coût de taxe de base
21P₃  21P₄
RZ
RZ'
262   26CM   262
264  265
COMPARATEUR SOLDE DE MONNAIE
260₁₂   "impulsion de taxe"   24IT

Vers 274₆, 274₅, 274₇, 274₄ (FIG.6B)

263   "1" ≡ solde < 0
inversion de batterie
220E (FIG.5)
Ordre d'encaissement   "1" ≡ solde < 0   261   251B

COMPARATEUR SOLDE DE TAXE DE BASE POUR CARTE
26CTB
conversation

266
26 DTB

21TB
REGISTRE DE CREDIT DE TAXE DE BASE
REGISTRE DE DEBIT DE TAXE DE BASE

Oblitération carte
26CRTB   RZ'
RZ
262   262
Montant maxi crédit carte
8fils
33TBM

26TTB
26TBMAX
COMPARATEUR
26TBMAX

COMPTEUR TOTALISATEUR DE TAXE DE BASE
4x6fils
28A₆
28TTb
RZ
28RZ

59

13/ri

# FIG.9A

CIRCUIT DE
MEMORISATION
28

28R

280 — ┌─────────────────────────┐
      │ ADRESSE  EQUIPEMENT      │
      │ ROM (10b)               │
      │ RAM (1b)                │
      └─────────────────────────┘

35    10fils

— 285

283 — ┌─────────────────────────┐
      │ COMMANDE                │
      │ Adr. Equt   ROM (1b)    │
      │ Adr. bloc   ROM (5b)    │
      │ Hors ou en service RAM(1b)│
      └─────────────────────────┘

effacement            281₁
                ┌─────────────────────────┐
                │ COMMANDE                │
                │ Adr. Equt   ROM (1b)    │
                │ Adr. bloc   ROM (5b)    │
                │ Anomalie    RAM (1b)    │
                │ "           RAM (1b)    │
                │ "           RAM (1b)    │
                └─────────────────────────┘

36
5fils
lecture

37₃  37₂

28A₁

38₁
38₂
38₃

                        281₁₈
                ┌─────────────────────────┐
                │ COMMANDE                │
                │ Adr. Equt   ROM (1b)    │
                │ Adr. bloc   ROM (5b)    │
                │ Anomalie    RAM (1b)    │
                │             RAM (1b)    │
                │             RAM (1b)    │
                └─────────────────────────┘

28A₁₈

282₁
                ┌─────────────────────────┐
                │ COMMANDE                │
                │ Adr.Equt   ROM (1b)     │
                │ Adr. bloc   ROM (5b)    │
                │ Anomalie   RAM (1b)     │
                │ "          RAM (1b)     │
                │ "          RAM (1b)     │
                │ 1er chiffre totalisateur│
                │ monnaie    RAM (4b)     │
                └─────────────────────────┘

21A

relevage
caissette

4fils

4fils

28TM

39

de ou vers FIG. 9B

61

FIG.9B *CIRCUIT DE MEMORISATION 28* *14/14*

*de ou vers FIG.9A*

63